# EUROPEAN PATENT SPECIFICATION

(11) **EP 4 502 064 B1**
(45) Date of publication and mention of the grant of the patent: **19.08.2026**
(21) Application number: 23780731.8
(22) Date of filing: 29.03.2023
(51) Int. Cl.: C08L 71/00, C08F 299/00, C08G 65/336, C08K 5/5415, C09J 151/08

(54) **CURABLE COMPOSITION**
HÄRTBARE ZUSAMMENSETZUNG
COMPOSITION DURCISSABLE

(30) Priority: 31.03.2022 JP 2022060057
(43) Date of publication of application: 05.02.2025
(73) Proprietor: DAIKIN INDUSTRIES, LTD., Osaka-shi, Osaka 530-0001 (JP)
(72) Inventor: HONDA, Yoshiaki, Osaka-Shi, Osaka 530-0001 (JP); SATO, Yuri, Osaka-Shi, Osaka 530-0001 (JP); KANEKO, Kazuki, Osaka-Shi, Osaka 530-0001 (JP); MITSUHASHI, Hisashi, Osaka-Shi, Osaka 530-0001 (JP)
(74) Representative: Hoffmann Eitle
(86) International application number: PCT/JP2023/012888
(87) International publication number: WO 2023/190723

(56) References cited:
- WO-A1-2021/229338
- WO-A1-2021/229348
- WO-A1-2021/231068
- CN-A- 111 910 435
- CN-A- 113 355 017
- JP-A- 2004 331 704
- JP-A- 2005 200 304
- JP-A- 2008 538 195
- JP-A- 2013 249 395
- JP-A- 2015 078 341
- JP-A- 2015 532 722
- JP-A- 2018 070 683
- JP-A- 2019 006 843
- JP-A- 2023 066 384
- JP-A- 2023 066 385
- US-A1- 2021 263 193

## Description

### Technical Field

The present disclosure relates to a curable composition containing a fluorine-containing compound.

### Background Art

Certain types of compositions containing fluorine-containing compounds are known to provide cured products having excellent water-repellency, oil-repellency, antifouling property, and the like (Patent Literatures 1 and 2) .

### Citation List

### Patent Literature

Patent Literature 1: JP 2019-6843 A
Patent Literature 2: WO 2019/088126 A

### Summary of Invention

### Technical Problem

The fluoropolyether group-containing acrylic compound described in Patent Literature 1 is cured by ultraviolet irradiation, but in locations where ultraviolet irradiation is difficult, it cannot be sufficiently cured and uncured portions may occur. Also, the resultant cured product has a low elastic modulus and poor elongation. The fluoropolyether group-containing silane compound described in the cited literature 2 can be cured by moisture (water), but the curing speed is slow, and wetting and spreading of the liquid and dripping may occur at the time of application.

JP2013249395A discloses a curable composition comprising an acrylic compound containing a (meth)acrylic group and a hydrolyzable silane group, a fluoropolyether group-containing silane compound containing a fluoropolyether group and a hydrolyzable silyl group; a cross-linking agent; a catalyst; and a radical polymerization initiator.

An object of the present disclosure is to provide a curable composition with excellent curability and applicability.

### Solution to Problem

The present disclosure includes the following embodiments.
[1] A curable composition comprising:
   a component (A): a fluoropolyether group-containing acrylic compound containing a (meth)acrylic group, a hydrolyzable silane group, and a fluoropolyether group;
   a component (B): a fluoropolyether group-containing silane compound containing a fluoropolyether group and a hydrolyzable silyl group;
   a component (C): a cross-linking agent;
   a component (D): a catalyst; and
   a component (E): a radical polymerization initiator.
[2] The curable composition according to [1], wherein a content of the component (A) is 10 to 80% by mass based on the total amount of the component (A) and the component (B).
[3] The curable composition according to [1] or [2], wherein a content of the component (A) is 30 to 70% by mass based on the total amount of the component (A) and the component (B).
[4] The curable composition according to any one of [1] to [3],
   wherein the fluoropolyether group-containing acrylic compound comprises a compound represented by the following formula (A1), (A2), or (A3):

      R^{F1}-X^{A}-X^{B}R^{Ac}ₘ (A1)

      R^{Ac}ₘX^{B}-X^{A}-R^{F2}-X^{A}-X^{B}R^{Ac}ₘ (A2)

      R^{Ac}ₘX^{B}-X^{A}-(R^{F2}-R^{g}-R^{a}(R^{Ac})ₘ₃-R^{g})ₓ-R^{F2}-X^{A}-X^{B}R^{Ac}ₘ (A3)
   wherein
   R^{F1} is Rf¹-R^{F}-O_{q}-,
   R^{F2} is each independently -Rf²ₚ-R^{F}-O_{q}-,
   Rf¹ is a C₁₋₁₆ alkyl group optionally substituted with one or more fluorine atoms,
   Rf² is a C₁₋₆ alkylene group optionally substituted with one or more fluorine atoms,
   R^{F} is each independently a divalent fluoropolyether group,
   p is 0 or 1,
   q is each independently 0 or 1,
   X^{A} is each independently a single bond or a divalent organic group,
   X^{B} is each independently an (m + 1)-valent group,
   provided that, in each formula, at least one X^{B} is an (m + 1)-valent group containing a hydrolyzable silyl group,
   R^{Ac} is each independently -X^{D}-X^{E}(-X^{F}-OCO-CR⁵=CH₂)_{m'},
   X^{D} is a single bond or a divalent group,
   X^{E} is a single bond or an (m' + 1)-valent group,
   X^{F} is each independently a single bond or a divalent group,
   R⁵ is a hydrogen atom, a halogen atom, or a monovalent organic group having 1 to 8 carbon atoms,
   m' is an integer of 1 to 10,
   m is each independently an integer of 0 to 10,
   R^{a} is each independently an (m3 + 2)-valent organic group,
   m3 is an integer of 0 to 4,
   provided that at least one of m and m3 is 1 or more,
   R^{g} is each independently -NR^{c}CO-R^{e}-, -NR^{c}COO-R^{e}-, or - NR^{c}CONR^{e}-R^{e}-, where these groups are bonded to R^{a} on their left side,
   R^{c} is each independently a hydrogen atom, a C₁₋₆ alkyl group, or a C₆₋₁₆ aryl group,
   R^{e} is each independently a single bond or a divalent organic group, and
   x is an integer of 1 or more.
[5] The curable composition according to [4],
   wherein R^{F} is each independently a group represented by the following formula:

      -(OC₆F₁₂)ₐ-(OC₅F₁₀)_{b}-(OC₄F₈)_{c}-(OC₃R^{Fa}₆)_{d}-(OC₂F₄)ₑ- (OCF₂)_{f}-
   wherein R^{Fa} is each independently a hydrogen atom, a fluorine atom, or a chlorine atom, and
   a, b, c, d, e, and f are each independently an integer of 0 to 200, the sum of a, b, c, d, e, and f is 1 or more, and the occurrence order of the respective repeating units enclosed in parentheses provided with a, b, c, d, e, or f is not limited in the formula, provided that when all R^{Fa} groups are hydrogen atoms or chlorine atoms, at least one of a, b, c, e, and f is 1 or more.
[6] The curable composition according to [4] or [5],
   wherein R^{F} is each independently a group represented by the following formula (f1), (f2), (f3), (f4), (f5), or (f6):

      -(OC₃F₆)_{d}-(OC₂F₄)e- (f1)
   wherein d is an integer of 1 to 200 and e is 0 or 1,

      -(OC₄F₈)_{c}-(OC₃F₆)_{d}-(OC₂F₄)ₑ-(OCF₂)_{f}- (f2)
   wherein c and d are each independently an integer of 0 to 30;
   e and f are each independently an integer of 1 to 200;
   the sum of c, d, e, and f is an integer of 10 to 200; and
   the occurrence order of the respective repeating units enclosed in parentheses provided with the subscript c, d, e, or f is not limited in the formula,

      - (R⁶-R⁷)_{g}- (f3)
   wherein R⁶ is OCF₂ or OC₂F₄;
   R⁷ is a group selected from OC₂F₄, OC₃F₆, OC₄F₈, OC₅F₁₀, and OC₆F₁₂, or is a combination of two or three groups selected from these groups; and
   g is an integer of 2 to 100,

      - (R⁶-R⁷)_{g}-R^{r}-(R^{7'}-R^{6'})_{g'}- (f4)
   wherein R⁶ is OCF₂ or OC₂F₄;
   R⁷ is a group selected from OC₂F₄, OC₃F₆, OC₄F₈, OC₅F₁₀, and OC₆F₁₂, or is a combination of two or three groups independently selected from these groups;
   R^{6'} is OCF₂ or OC₂F₄;
   R^{7'} is a group selected from OC₂F₄, OC₃F₆, OC₄F₈, OC₅F₁₀, and OC₆F₁₂, or is a combination of two or three groups independently selected from these groups;
   g is an integer of 2 to 100;
   g' is an integer of 2 to 100; and
   R^{r} is any of the following: 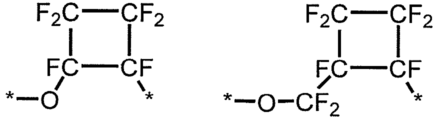 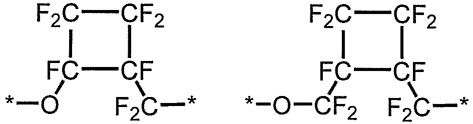 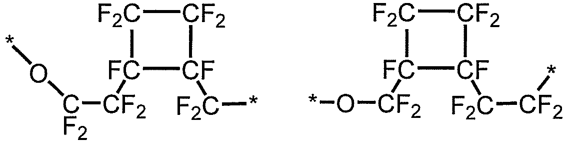 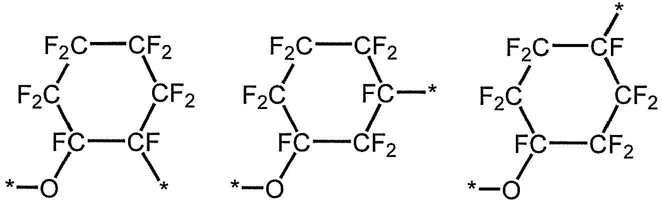
   wherein * represents a bond position,

      - (OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
   wherein e is an integer of 1 or more and 200 or less; a, b, c, d, and f are each independently an integer of 0 or more and 200 or less; the sum of a, b, c, d, e, and f is at least 1; and the occurrence order of the respective repeating units enclosed in parentheses provided with a, b, c, d, e, or f is not limited in the formula, and

      -(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)
   wherein f is an integer of 1 or more and 200 or less; a, b, c, d, and e are each independently an integer of 0 or more and 200 or less; the sum of a, b, c, d, e, and f is at least 1; and the occurrence order of the respective repeating units enclosed in parentheses provided with a, b, c, d, e, or f is not limited in the formula.
[7] The curable composition according to any one of [4] to [6], wherein X^{E} is a single bond.
[8] The curable composition according to any one of [4] to [6],
   wherein X^{E} is -X^{G}-X^{H},
   X^{G} is any of the following:
      a single bond;
      a C₁₋₆ alkylene group;
      -(CH₂)_{z9}-O-(CH₂)_{z10}-, wherein z9 is an integer of 0 to 6 and z10 is an integer of 0 to 6; or
      -(CH₂)_{z11}-phenylene-(CH₂)_{z12}-, wherein z11 is an integer of 0 to 6 and z12 is an integer of 0 to 6,
   X^{H} is any of the following: 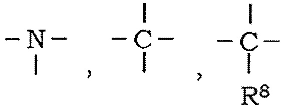 and
   R⁸ is a hydrogen atom or a C₁₋₆ alkyl group.
[9] The curable composition according to any one of [4] to [8],
   wherein X^{D} is -O-, -CO-, -COO-, -OCO-, -CONH-, -NHCO-, -OCONH-, -NHCOO-, -NH-CO-NH-, -CH₂CH(OH)CH₂-, -CH(CH₂OH)CH₂-, - (OSiR¹⁴₂)_{d5}-, 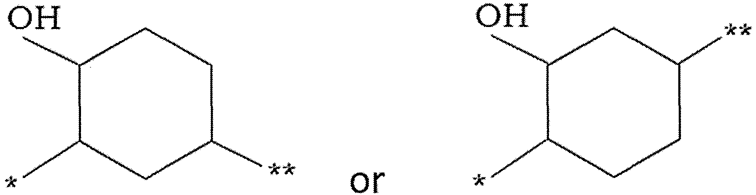
   wherein * and ** represent bond positions, and * is bonded to X^{B} and ** is bonded to X^{E},
   R¹⁴ is a C₁₋₆ alkyl group or a C₆₋₁₆ aryl group, and
   d5 is an integer of 1 to 10.
[10] The curable composition according to any one of [4] to [9],
   wherein X^{F} is any of the following:
   a single bond;
   a C₁₋₆ alkylene group;
   -(CH₂)_{z5}-O-(CH₂)_{z6}-, wherein z5 is an integer of 0 to 6 and z6 is an integer of 0 to 6; or
   -(CH₂)_{z7}-phenylene-(CH₂)_{z8}-, wherein z7 is an integer of 0 to 6 and z8 is an integer of 0 to 6.
[11] The curable composition according to any one of [4] to [10], wherein R⁵ is a hydrogen atom or a methyl group.
[12] The curable composition according to any one of [4] to [11],
   wherein X^{A} is each independently a single bond or a group represented by the following formula:

      - (C_{α}R¹¹_{2α})ₛ₁-R¹²ₜ₁-
   wherein
   R¹¹ is each independently a hydrogen atom or a fluorine atom,
   α is each independently an integer of 1 to 10,
   R¹² is each independently -O-, -CO-, -NR¹⁰-, -CONR¹⁰-, - NR¹⁰CO-, -COO-, -OCO-, or -OCONH-,
   R¹⁰ is a hydrogen atom or a C₁₋₆ alkyl group,
   s1 is an integer of 0 to 3,
   t1 is an integer of 0 to 3,
   the sum of s1 and t1 is 1 or more, and
   the occurrence order of the respective repeating units enclosed in parentheses provided with s1 or t1 is not limited in the formula.
[13] The curable composition according to any one of [4] to [12],
   wherein X^{A} is -CONR¹⁰-C_{α1}H_{2α1}-, - (C_{α2}H_{2α2})-OCONR¹⁰-, - (C_{α3}H_{2α3})-, or -(C_{α4}H_{2α4})-O-(C_{α5}H_{2α5}),
   R¹⁰ is a hydrogen atom or a C₁₋₆ alkyl group,
   α1 is an integer of 1 to 10,
   α2 is an integer of 1 to 10,
   α3 is an integer of 1 to 10,
   α4 is an integer of 0 to 6, and
   α5 is an integer of 0 to 6.
[14] The curable composition according to any one of [4] to [13],
   wherein X^{B} is each independently a group containing a group represented by the following formula:

      SiR¹_{nb}R^{sb}_{4-nb}
   wherein
   R¹ is a hydroxyl group or a hydrolyzable group,
   R^{sb} is a single bond, and
   nb is 1 or 2.
[15] The curable composition according to any one of [4] to [13],
   wherein X^{B} is each independently a group represented by X^{Ba}(R^{Si})ₙₐ,
   wherein
   X^{Ba} is each independently an (m + na + 1)-valent group,
   R^{Si} is each independently -X^{C}-SiR¹_{n'}R²_{3-n'},
   X^{C} is a divalent organic group having 1 to 10 carbon atoms,
   R¹ is each independently a hydroxyl group or a hydrolyzable group,
   R² is each independently a hydrogen atom or a monovalent organic group,
   n' is an integer of 1 to 3, and
   na is an integer of 1 to 10.
[16] The curable composition according to [15],
   wherein X^{C} is any of the following:
   a C₁₋₆ alkylene group;
   -(CH₂)_{z1}-O-(CH₂)_{z2}-, wherein z1 is an integer of 0 to 6 and z2 is an integer of 0 to 6;
   -(CH₂)_{z3}-phenylene-(CH₂)_{z4}-, wherein z3 is an integer of 0 to 6 and z4 is an integer of 0 to 6; or
   -(CH₂)_{z13}-OCONH-(CH₂)_{z14}-, wherein z13 is an integer of 0 to 6 and z14 is an integer of 0 to 6.
[17] The curable composition according to [15] or [16], wherein n' is 3.
[18] The curable composition according to any one of [15] to [17], wherein X^{Ba} is a trivalent group, n is 1, and m is 1.
[19] The curable composition according to any one of [15] to [18], wherein X^{Ba} is N or -C(-O-)-, n is 1, and m is 1.
[20] The curable composition according to any one of [4] to [19],
   wherein the formula (A3) is the following:

      R^{b}₂^{N}-R^{d}-CO-(R^{F2}-CO-NR^{c}-R^{a}(R^{Ac})ₘ₃-NR^{c}-CO)ₓ-R^{F2}-CO-R^{d}-NR^{b}₂ (A3-b)
   wherein
   R^{b} is each independently R^{Si}, R^{Ac}, or R^{c},
   provided that at least one of R^{b} is R^{Si},
   R^{Si} is each independently -X^{C}-SiR¹_{n'}R²_{3-n'},
   X^{C} is a divalent organic group having 1 to 10 carbon atoms,
   R¹ is each independently a hydroxyl group or a hydrolyzable group,
   R² is each independently a hydrogen atom or a monovalent organic group,
   n' is an integer of 1 to 3,
   R^{d} is each independently a single bond or a divalent organic group, and
   R^{F2}, R^{a}, R^{c}, R^{Ac}, m3, and x are the same as defined in [4].
[21] The curable composition according to [20], wherein one of R^{b} bonded to the N atom positioned at each end in the formula (A3) is R^{Si} and the other is R^{c} or R^{Ac},
[22] The curable composition according to [20] or [21], wherein R^{d} is each independently a single bond or -(CH₂)_{z17}-NR¹⁰-(CH₂)_{z18}-, wherein R¹⁰ is a hydrogen atom or a C₁₋₆ alkyl group, z17 is an integer of 0 to 6, and z18 is an integer of 0 to 6.
[23] The curable composition according to any one of [4] to [22],
   wherein R^{a} is each independently a group represented by the following formula:

      -R⁹-(R^{a'}-R⁹)ₖ-
   wherein
   R⁹ is each independently a C₁₋₆ alkylene group,
   R^{a'} is each independently a trivalent group, and
   k is an integer of 1 to 4.
[24] The curable composition according to [23], wherein R^{a'} is each independently N, -C(-O-)-, a trivalent group optionally containing an amino bond, an amide bond, a urethane bond, a urea bond, an ether bond, or an ester bond between carbon-carbon atoms.
[25] The curable composition according to [23] or [24], wherein k is 1 or 2.
[26] The curable composition according to any one of [4] to [25], wherein R^{c} is each independently a hydrogen atom or a C₁₋₆ alkyl group.
[27] The curable composition according to any one of [4] to [26], wherein x is an integer of 1 or more and 5 or less.
[28] The curable composition according to any one of [4] to [27], wherein the fluoropolyether group-containing acrylic compound comprises a compound represented by the formula (A1) or (A2).
[29] The curable composition according to any one of [4] to [28], wherein the fluoropolyether group-containing acrylic compound comprises a compound represented by the formula (A3).
[30] The curable composition according to any one of [1] to [29],
   wherein the fluoropolyether group-containing silane compound is a fluoropolyether group-containing silane compound represented by the following formula (B1) or (B2):

      R^{F3}_{α}-X^{Z}-R^{Si}_{β} (B1)

      R^{Si}_{γ}-X^{Z}-R^{F4}-X^{Z}-R^{Si}_{γ} (B2)
   wherein
   R^{F3} is each independently Rf³-R^{FB}-O_{q3}-,
   R^{F4} is -Rf⁴ₚ₃-R^{FB}-O_{q3}-,
   Rf³ is each independently a C₁₋₁₆ alkyl group optionally substituted with one or more fluorine atoms,
   Rf⁴ is a C₁₋₆ alkylene group optionally substituted with one or more fluorine atoms,
   R^{FB} is each independently a divalent fluoropolyether group,
   p3 is 0 or 1,
   q3 is each independently 0 or 1,
   R^{Si} is each independently a monovalent group containing a Si atom to which a hydroxyl group, a hydrolyzable group, a hydrogen atom, or a monovalent organic group is bonded,
   at least one R^{Si} is a monovalent group containing a Si atom to which a hydroxyl group or a hydrolyzable group is bonded,
   X^{Z} is each independently a single bond or a di- to decavalent organic group,
   α is an integer of 1 to 9,
   β is an integer of 1 to 9, and
   γ is each independently an integer of 1 to 9.
[31] The curable composition according to [30],
   wherein R^{Si} is a group represented by the following formula (S1), (S2), (S3), (S4), or (S5):

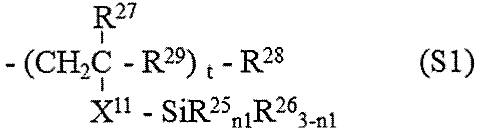

      -SiR²⁵ₙ₁R²⁶₃₋ₙ₁ (S2)

      - SiR^{a1}ₖ₁R^{b1}ₗ₁R^{c1}ₘ₁ (S3)

      - CR^{d1}ₖ₂R^{e1}ₗ₂R^{f1}ₘ₂ (S4)

      - NR^{g1}R^{h1} (S5)
   wherein
   R²⁵ is each independently a hydroxyl group or a hydrolyzable group,
   R²⁶ is each independently a hydrogen atom or a monovalent organic group,
   n1 is each independently an integer of 0 to 3 for each (SiR²⁵ₙ₁R²⁶₃₋ₙ₁) unit,
   X¹¹ is each independently a single bond or a divalent organic group,
   R²⁷ is each independently a hydrogen atom or a monovalent organic group,
   t is each independently an integer of 2 or more,
   R²⁸ is each independently a hydrogen atom, a halogen atom, or -X¹¹-SiR²⁵ₙ₁R²⁶₃₋ₙ₁,
   R²⁹ is each independently a single bond, an oxygen atom, an alkylene group having 1 to 6 carbon atoms, or an alkyleneoxy group having 1 to 6 carbon atoms,
   R^{a1} is each independently -Z¹-SiR²¹ₚ₁R²²_{q1}R²³ᵣ₁,
   Z¹ is each independently an oxygen atom or a divalent organic group,
   R²¹ is each independently -Z^{1'}-SiR^{21'}_{p1'}R^{22'}_{q1'}R^{23'}_{r1'},
   R²² is each independently a hydroxyl group or a hydrolyzable group,
   R²³ is each independently a hydrogen atom or a monovalent organic group,
   p1 is each independently an integer of 0 to 3,
   q1 is each independently an integer of 0 to 3,
   r1 is each independently an integer of 0 to 3,
   Z^{1'} is each independently an oxygen atom or a divalent organic group,
   R^{21'} is each independently -Z^{1"}-SiR^{22"}_{q1"}R^{23"}_{r1"},
   R^{22'} is each independently a hydroxyl group or a hydrolyzable group,
   R^{23'} is each independently a hydrogen atom or a monovalent organic group,
   p1' is each independently an integer of 0 to 3,
   q1' is each independently an integer of 0 to 3,
   r1' is each independently an integer of 0 to 3,
   Z^{1"} is each independently an oxygen atom or a divalent organic group,
   R^{22"} is each independently a hydroxyl group or a hydrolyzable group,
   R^{23"} is each independently a hydrogen atom or a monovalent organic group,
   q1" is each independently an integer of 0 to 3,
   r1" is each independently an integer of 0 to 3,
   R^{b1} is each independently a hydroxyl group or a hydrolyzable group,
   R^{c1} is each independently a hydrogen atom or a monovalent organic group,
   k1 is each independently an integer of 0 to 3,
   l1 is each independently an integer of 0 to 3,
   m1 is each independently an integer of 0 to 3,
   R^{d1} is each independently -Z²-CR³¹ₚ₂R³²_{q2}R³³ᵣ₂,
   Z² is each independently a single bond, an oxygen atom, or a divalent organic group,
   R³¹ is each independently -Z^{2'}-CR^{32'}_{q2'}R^{33'}_{r2'},
   R³² is each independently -Z³-SiR³⁴ₙ₂R³⁵₃₋ₙ₂,
   R³³ is each independently a hydrogen atom, a hydroxyl group, or a monovalent organic group,
   p2 is each independently an integer of 0 to 3,
   q2 is each independently an integer of 0 to 3,
   r2 is each independently an integer of 0 to 3,
   Z^{2'} is each independently a single bond, an oxygen atom, or a divalent organic group,
   R^{32'} is each independently -Z³-SiR³⁴ₙ₂R³⁵₃₋ₙ₂,
   R^{33'} is each independently a hydrogen atom, a hydroxyl group, or a monovalent organic group,
   q2' is each independently an integer of 0 to 3,
   r2' is each independently an integer of 0 to 3,
   Z³ is each independently a single bond, an oxygen atom, or a divalent organic group,
   R³⁴ is each independently a hydroxyl group or a hydrolyzable group,
   R³⁵ is each independently a hydrogen atom or a monovalent organic group, n2 is each independently an integer of 0 to 3,
   R^{e1} is each independently -Z³-SiR³⁴ₙ₂R³⁵₃₋ₙ₂,
   R^{f1} is each independently a hydrogen atom, a hydroxyl group, or a monovalent organic group,
   k2 is each independently an integer of 0 to 3,
   l2 is each independently an integer of 0 to 3,
   m2 is each independently an integer of 0 to 3,
   R^{g1} and R^{h1} are each independently -Z⁴-SiR²⁵ₙ₁R²⁶₃₋ₙ₁, -Z⁴-SiR^{a1}ₖ₁R^{b1}ₗ₁R^{c1}ₘ₁, or -Z⁴-CR^{d1} ₖ₂R^{e1}ₗ₂R^{f1}ₘ₂, and
   Z⁴ is each independently a single bond, an oxygen atom, or a divalent organic group,
   provided that in the formulae (S1), (S2), (S3), (S4), and (S5), at least one Si atom to which a hydroxyl group or a hydrolyzable group is bonded is present.
[32] The curable composition according to any one of [1] to [29],
   wherein the fluoropolyether group-containing silane compound is a fluoropolyether group-containing silane compound represented by the following formula (B3):

      R³⁹ⱼ-R³⁸-NR³⁷CO-(R^{F4}-CONR³⁷-R³⁶-NR³⁷CO)ᵣ-R^{F4}-CONR³⁷-R³⁸-R³⁹ⱼ (B3)
   wherein
   R^{F4} is -Rf⁴ₚ₃-R^{FB}-O_{q3}-,
   Rf⁴ is a C₁₋₆ alkylene group optionally substituted with one or more fluorine atoms,
   R^{FB} is each independently a divalent fluoropolyether group,
   p3 is 0 or 1,
   q3 is 0 or 1,
   R³⁶ is each independently a divalent organic group,
   R³⁷ is each independently a hydrogen atom or a monovalent organic group having 1 to 8 carbon atoms,
   R³⁸ is each independently a (j + 1)-valent organic group,
   R³⁹ is each independently -SiR²⁵ₙ₁R²⁶₃₋ₙ₁,
   R²⁵ is each independently a hydroxyl group or a hydrolyzable group,
   R²⁶ is each independently a hydrogen atom or a monovalent organic group,
   n1 is each independently an integer of 0 to 3 for each (SiR²⁵ₙ₁R²⁶₃₋ₙ₁) unit,
   j is each independently an integer of 1 to 9, and
   r is an integer of 1 or more.
[33] The curable composition according to any one of [30] to [32],
   wherein R^{FB} is each independently a group represented by the following formula:

      -(OC₆F₁₂)ₐ-(OC₅F₁₀)_{b}-(OC₄F₈)_{c}-(OC₃R^{Fa}₆)_{d}-(OC₂F₄)ₑ- (OCF₂)_{f}-
   wherein R^{Fa} is each independently a hydrogen atom, a fluorine atom, or a chlorine atom, and
   a, b, c, d, e, and f are each independently an integer of 0 to 200, the sum of a, b, c, d, e, and f is 1 or more, and the occurrence order of the respective repeating units enclosed in parentheses provided with a, b, c, d, e, or f is not limited in the formula, provided that when all R^{Fa} groups are hydrogen atoms or chlorine atoms, at least one of a, b, c, e, and f is 1 or more.
[34] The curable composition according to any one of [1] to [33],
   wherein the cross-linking agent is a compound represented by the following formula (C1):

      (R^{g1}-O)_{δ}-Si-R^{g2}_{4-δ} (C1)
   wherein
   R^{g1} is each independently at each occurrence a hydrogen atom or a monovalent organic group,
   R^{g2} is each independently a monovalent organic group, and
   δ is an integer of 2 to 4.
[35] The curable composition according to any one of [1] to [34], wherein the cross-linking agent is tetraethoxysilane, tetramethoxysilane, methyltriethoxysilane, methyltrimethoxysilane, dimethyldimethoxysilane, dimethyltrimethoxysilane, aminopropyltriethoxysilane, aminopropyltrimethoxysilane, tridecafluoro-n-octyltriethoxysilane, or tridecafluoro-n-octyltrimethoxysilane.
[36] The curable composition according to any one of [1] to [35], wherein the catalyst is an acid, a base, a transition metal, or a metal complex selected from tin-based catalysts, titanium-based catalysts, zirconia-based catalysts, bismuth-based catalysts, and organic amine-based catalysts.
[37] The curable composition according to any one of [1] to [36], wherein the catalyst is acetic acid, trifluoroacetic acid, ammonia, triethylamine, diethylamine, Ti, Ni, Sn, din-butyltin(IV) dilaurate, titanium diisopropoxy bis(ethylacetoacetate), titanium tetra-n-butoxide, titanium tetra-2-ethylhexoxide, titanium tetraacetylacetonate, zirconium tetraacetylacetonate, zirconium tetra-n-butoxide, zirconium dibutoxy bis(ethylacetoacetate), or bismuth tris(2-ethylhexanoate).
[38] The curable composition according to any one of [1] to [37], wherein the radical polymerization initiator is a diketone, an acyloin, an acyloin ether, a thioxanthone, a benzophenone, an acetophenone, a quinone, an aminobenzoic acid, a halogen compound, an acylphosphine oxide, or a peroxide.
[39] The curable composition according to any one of [1] to [38], wherein the radical polymerization initiator is benzoin, benzoin methyl ether, benzoin ethyl ether, benzoin isopropyl ether, thioxanthone, 2,4-diethylthioxanthone, thioxanthone-4-sulfonic acid, benzophenone, 4,4'-bis(dimethylamino)benzophenone, 4,4'-bis(diethylamino)benzophenone, acetophenone, 2-(4-toluenesulfonyloxy)-2-phenylacetophenone, p-dimethylaminoacetophenone, 2,2'-dimethoxy-2-phenylacetophenone, p-methoxyacetophenone, 2-methyl[4-(methylthio)phenyl]-2-morpholino-1-propanone, 2-benzyl-2-dimethylamino-1-(4-morpholinophenyl)-butan-1-one, anthraquinone, 1,4-naphthoquinone, ethyl 2-dimethylaminobenzoate, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, phenacyl chloride, trihalomethylphenylsulfone, acylphosphine oxide, or di-t-butyl peroxide, methyl benzoylformate, 1-hydroxy-cyclohexyl-phenyl-ketone, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]phenyl}-2-methyl-propan-1-one, 2-methyl-1-(4-methylthiophenyl)-2-morpholinopropan-1-one, 2-benzyl-2-dimethylamino-1-(4-morpholinophenyl)-1-butanone, 2-(dimethylamino)-2-[(4-methylphenyl)methyl]-1-[4-(4-morpholinyl)phenyl]-1-butanone, bis(2,4,6-trimethylbenzoyl)-phenylphosphine oxide, bis(η5-2,4-cyclopentadien-1-yl)-bis(2,6-difluoro-3-(1H-pyrrol-1-yl)-phenyl) titanium, 1,2-octanedione, 1-[4-(phenylthio)-, 2-(O-benzoyloxime)], ethanone, 1-[9-ethyl-6-(2-methylbenzoyl)-9H-carbazol-3-yl]-, 1-(0-acetyloxime), 2-hydroxy-2-methyl-1-phenyl-propan-1-one, 2,4,6-trimethylbenzoyl-diphenylphosphine oxide, t-butyl hydroperoxide, cumene hydroperoxide, diisopropylbenzene hydroperoxide, paramenthane hydroperoxide, or t-methylbutyl hydroperoxide.
[40] The curable composition according to any one of [1] to [39], further comprising a solvent.
[41] An article comprising a substrate and a layer on a surface of the substrate, wherein the layer is formed from the curable composition according to any one of [1] to [40].

### Advantageous Effect of Invention

According to the present disclosure, there can be provided a curable composition with excellent curability.

### Description of Embodiments

The term "monovalent organic group", as used herein, refers to a monovalent group containing carbon. The monovalent organic group is not limited, and may be a hydrocarbon group or a derivative thereof. The derivative of the hydrocarbon group refers to a group that has one or more of N, O, S, Si, amide, sulfonyl, siloxane, carbonyl, carbonyloxy, and the like at the end or in the molecular chain of the hydrocarbon group. The simple term "organic group" refers to a monovalent organic group. The term "divalent organic group" refers to a divalent group containing carbon. The divalent organic group may be a divalent group obtained by further removing one hydrogen atom from an organic group. Trivalent or higher organic groups similarly refer to groups obtained by removing a predetermined number of hydrogen atoms from an organic group.

As used herein, the "hydrocarbon group" refers to a group containing carbon and hydrogen and a group in which a hydrogen atom is removed from the hydrocarbon. Such hydrocarbon groups are not limited, but include C₁₋₂₀ hydrocarbon groups, such as an aliphatic hydrocarbon group and an aromatic hydrocarbon group. The above "aliphatic hydrocarbon group" may be either linear, branched, or cyclic, and may be either saturated or unsaturated. The hydrocarbon group may contain one or more ring structures. The hydrocarbon group may be substituted by one or more substituents.

Each substituent of the "hydrocarbon group", as used herein, is not limited, and examples thereof include a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5-to 10-membered heteroaryl group, each of which is optionally substituted with one or more halogen atoms.

The term "hydrolyzable group", as used herein, means a group which can undergo a hydrolysis reaction, namely, means a group which can be removed from a main backbone of the compound by a hydrolysis reaction. Examples of the hydrolyzable group include -OR^{j}, -OCOR^{j}, -O-N=CR^{j}₂, -NR^{j}₂, - NHR^{j}, -NCO, -NCO, or halogen (in these formulae, R^{j} represents a substituted or unsubstituted C₁₋₄ alkyl group).

The curable composition of the present disclosure contains:
a component (A): a fluoropolyether group-containing acrylic compound containing a (meth)acrylic group, a hydrolyzable silane group, and a fluoropolyether group;
a component (B): a fluoropolyether group-containing silane compound containing a fluoropolyether group and a hydrolyzable silyl group;
a component (C): a cross-linking agent;
a component (D): a catalyst; and
a component (E): a radical polymerization initiator.

Component (A): a fluoropolyether group-containing acrylic compound containing a (meth)acrylic group, a hydrolyzable silane group, and a fluoropolyether group

The curable composition of the present disclosure contains a fluoropolyether group-containing acrylic compound containing a (meth)acrylic group, a hydrolyzable silane group, and a fluoropolyether group. By containing the fluoropolyether group-containing acrylic compound, the curable composition of the present disclosure has UV curability. Here, the (meth)acrylic group encompasses acrylic and methacrylic groups.

The fluoropolyether group-containing acrylic compound contains a (meth)acrylic group, a hydrolyzable silane group, and a fluoropolyether group in the molecule.

In a preferred embodiment, the fluoropolyether group-containing acrylic compound includes a compound represented by the following formula (A1), (A2), or (A3):

R^{F1}-X^{A}-X^{B}R^{Ac}ₘ (A1)

R^{Ac}ₘX^{B}-X^{A}-R^{F2}-X^{A}-X^{B}R^{Ac}ₘ (A2)

R^{Ac}ₘX^{B}-X^{A}-(R^{F2}-R^{g}-R^{a}(R^{Ac})ₘ₃-R^{g})ₓ-R^{F2}- X^{A}-X^{B}R^{Ac}ₘ (A3)

wherein
R^{F1} is Rf¹-R^{F}-O_{q}-,
R^{F2} is each independently -Rf²ₚ-R^{F}-O_{q}-,
Rf¹ is a C₁₋₁₆ alkyl group optionally substituted with one or more fluorine atoms,
Rf² is a C₁₋₆ alkylene group optionally substituted with one or more fluorine atoms,
R^{F} is each independently a divalent fluoropolyether group,
p is 0 or 1,
q is each independently 0 or 1,
X^{A} is each independently a single bond or a divalent organic group,
X^{B} is each independently an (m + 1)-valent group,
provided that, in each formula, at least one X^{B} is an (m + 1)-valent group containing a hydrolyzable silyl group,
R^{Ac} is each independently -X^{D}-X^{E}(-X^{F}-OCO-CR⁵=CH₂)_{m'},
X^{D} is a single bond or a divalent group,
X^{E} is a single bond or an (m' + 1)-valent group,
X^{F} is each independently a single bond or a divalent group,
R⁵ is a hydrogen atom, a halogen atom, or a monovalent organic group having 1 to 8 carbon atoms,
m' is an integer of 1 to 10,
m is each independently an integer of 0 to 10,
R^{a} is each independently an (m3 + 2)-valent organic group,
m3 is an integer of 0 to 4,
provided that at least one of m and m3 is 1 or more,
R^{g} is each independently -NR^{c}CO-R^{e}-, -NR^{c}COO-R^{e}-, or - NR^{c}CONR^{c}-R^{e}-, where these groups are bonded to R^{a} on their left side,
R^{c} is each independently a hydrogen atom, a C₁₋₆ alkyl group, or a C₆₋₁₆ aryl group,
R^{e} is each independently a single bond or a divalent organic group, and
x is an integer of 1 or more.

In one embodiment, the fluoropolyether group-containing acrylic compound includes a compound represented by the formula (A1) or (A2). For example, the fluoropolyether group-containing acrylic compound is a compound represented by the formula (A1) or (A2).

In one embodiment, the fluoropolyether group-containing acrylic compound includes a compound represented by the formula (A1). For example, the fluoropolyether group-containing acrylic compound is a compound represented by the formula (A1).

In one embodiment, the fluoropolyether group-containing acrylic compound includes a compound represented by the formula (A2). For example, the fluoropolyether group-containing acrylic compound is a compound represented by the formula (A2).

In one embodiment, the fluoropolyether group-containing acrylic compound includes a compound represented by the formula (A3). For example, the fluoropolyether group-containing acrylic compound is a compound represented by the formula (A3).

In a preferred embodiment, the fluoropolyether group-containing acrylic compound includes a compound represented by the formula (A2) and/or a compound represented by the formula (A3). For example, the fluoropolyether group-containing acrylic compound is a compound represented by the formula (A2) and/or a compound represented by the formula (A3).

In another preferred embodiment, the fluoropolyether group-containing acrylic compound includes a compound represented by the formula (A2) and a compound represented by the formula (A3). For example, the fluoropolyether group-containing acrylic compound is a compound represented by the formula (A2) and a compound represented by the formula (A3).

The molar ratio of a compound having (meth)acrylic groups at both ends (for example, a compound represented by the formula (A2) and a compound represented by the formula (A3)) to a compound having (meth)acrylic groups at one end (for example, a compound represented by the formula (A1)) (both-end compound/one-end compound) may be preferably 50/50 to 100/0, more preferably 60/40 to 100/0, and still more preferably 90/10 to 100/0.

In the above formula (A1), R^{F1} is Rf¹-R^{F}-O_{q}-.

In the above formulae (A2) and (A3), R^{F2} is -Rf²ₚ-R^{F}-O_{q}-.

In the above formula, Rf¹ is a C₁₋₁₆ alkyl group optionally substituted with one or more fluorine atoms.

In the C₁₋₁₆ alkyl group optionally substituted with one or more fluorine atoms, the "C₁₋₁₆ alkyl group" may be linear or branched, and is preferably a linear or branched C₁₋₆ alkyl group, in particular C₁₋₃ alkyl group, and more preferably a linear C₁₋₆ alkyl group, in particular C₁₋₃ alkyl group.

Rf¹ is preferably a C₁₋₁₆ alkyl group substituted with one or more fluorine atoms, more preferably a CF₂H-C₁₋₁₅ perfluoroalkylene group, and still more preferably a C₁₋₁₆ perfluoroalkyl group.

The C₁₋₁₆ perfluoroalkyl group may be linear or branched, and is preferably a linear or branched C₁₋₆ perfluoroalkyl group, in particular C₁₋₃ perfluoroalkyl group, more preferably a linear C₁₋₆ perfluoroalkyl group, in particular C₁₋₃ perfluoroalkyl group, and specifically -CF₃, -CF₂CF₃, or -CF₂CF₂CF₃.

In the above formula, Rf² is each independently a C₁₋₆ alkylene group optionally substituted with one or more fluorine atoms.

In the C₁₋₆ alkylene group optionally substituted with one or more fluorine atoms, the "C₁₋₆ alkylene group" may be linear or branched, and is preferably a linear or branched C₁₋₃ alkylene group, and more preferably a linear C₁₋₃ alkylene group.

R^{f2} is preferably a C₁₋₆ alkylene group substituted with one or more fluorine atoms, more preferably a C₁₋₆ perfluoroalkylene group, and still more preferably a C₁₋₃ perfluoroalkylene group.

The C₁₋₆ perfluoroalkylene group may be linear or branched, and is preferably a linear or branched C₁₋₃ perfluoroalkylene group, more preferably a linear C₁₋₃ perfluoroalkyl group, and specifically -CF₂-, -CF₂CF₂-, or - CF₂CF₂CF₂-.

In the above formula, p is 0 or 1. In one embodiment, p is 0. In another embodiment, p is 1.

In the above formulae, q is each independently 0 or 1. In one embodiment, q is 0. In another embodiment, q is 1.

In the above formulae (A1) to (A3), R^{F} is each independently a divalent fluoropolyether group.

R^{F} is preferably a linear divalent fluoropolyether group. The linear divalent fluoropolyether group provides a relatively low viscosity, and improves applicability and handleability.

R^{F} is preferably a group represented by the following formula:

-(OC₆F₁₂)ₐ-(OC₅F₁₀)_{b}-(OC₄F₈)_{c}-(OC₃R^{Fa}₆)_{d}-(OC₂F₄)ₑ- (OCF₂)_{f}-

wherein
R^{Fa} is each independently a hydrogen atom, a fluorine atom, or a chlorine atom;
a, b, c, d, e, and f are each independently an integer of 0 to 200, and the sum of a, b, c, d, e, and f is 1 or more; the occurrence order of the respective repeating units enclosed in parentheses provided with a, b, c, d, e, or f is not limited in the formula; however, when all R^{Fa} groups are hydrogen atoms or chlorine atoms, at least one of a, b, c, e, and f is 1 or more.

R^{Fa} is preferably a hydrogen atom or a fluorine atom, and more preferably a fluorine atom. However, when all R^{Fa} groups are hydrogen atoms or chlorine atoms, at least one of a, b, c, e, and f is 1 or more.

Preferably, a, b, c, d, e, and f may be each independently an integer of 0 to 100.

The sum of a, b, c, d, e, and f is preferably 5 or more, more preferably 10 or more, and it may be, for example, 15 or more or 20 or more. The sum of a, b, c, d, e, and f is preferably 200 or less, more preferably 100 or less, still more preferably 60 or less, and it may be, for example, 50 or less or 30 or less.

These repeating units may be linear or branched, or they may contain a ring structure. For example, -(OC₆F₁₂)-may be -(OCF₂CF₂CF₂CF₂CF₂CF₂)-, -(OCF(CF₃)CF₂CF₂CF₂CF₂)-, - (OCF₂CF(CF₃)CF₂CF₂CF₂)-, -(OCF₂CF₂CF(CF₃)CF₂CF₂)-, - (OCF₂CF₂CF₂CF(CF₃)CF₂)-, -(OCF₂CF₂CF₂CF₂CF(CF₃)) -, or the like. - (OC₅F₁₀)- may be -(OCF₂CF₂CF₂CF₂CF₂)-, -(OCF(CF₃)CF₂CF₂CF₂)-, - (OCF₂CF(CF₃)CF₂CF₂)-, - (OCF₂CF₂CF(CF₃)CF₂)-, - (OCF₂CF₂CF₂CF(CF₃))-, or the like. -(OC₄F₈)- may be any of - (OCF₂CF₂CF₂CF₂)-, - (OCF (CF₃)CF₂CF₂)-, - (OCF₂CF(CF₃)CF₂)-, - (OCF₂CF₂CF(CF₃)) -, - (OC (CF₃)2CF₂)-, -(OCF₂C(CF₃)₂)-, - (OCF(CF₃)CF(CF₃))-, -(OCF(C₂F₅)CF₂)-, and - (OCF₂CF(C₂F₅))-. - (OC₃F₆)- (that is, in the above formula, R^{Fa} is a fluorine atom) may be any of -(OCF₂CF₂CF₂)-, -(OCF(CF₃)CF₂)-, and - (OCF₂CF(CF₃)) -. -(OC₂F₄)- may be any of -(OCF₂CF₂)- and - (OCF (CF₃)) -.

The ring structure may be any of the following 3-membered ring, 4-membered rings, 5-membered rings, and 6-membered rings: 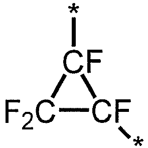 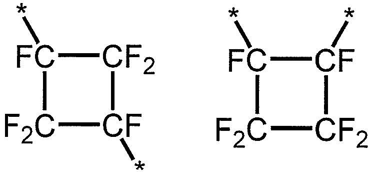 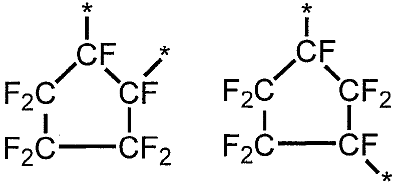 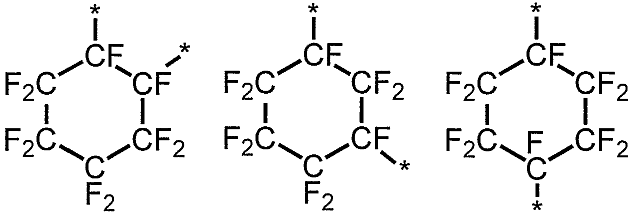 wherein * represents a bond position.

The ring structure may be preferably a 4-membered ring, a 5-membered ring, or a 6-membered ring, and more preferably a 4-membered ring or a 6-membered ring.

The repeating units having a ring structure may be preferably any of the following units: 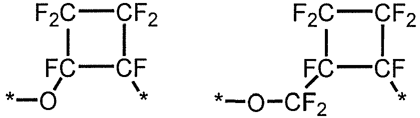 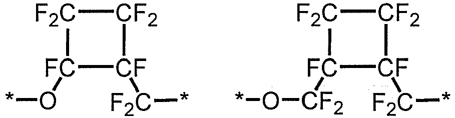 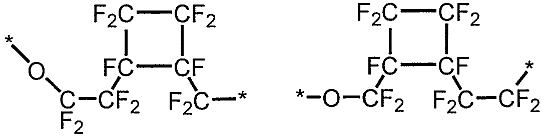 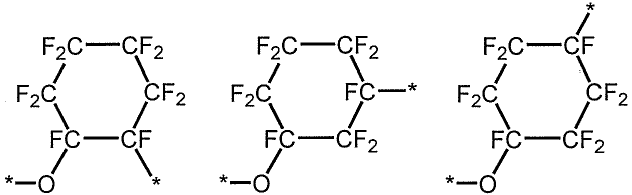 wherein * represents a bond position.

In one embodiment, the repeating units are linear. When the repeating units are linear, the durability and the like of the cured product layer can be improved.

In one embodiment, the repeating units are branched.

In one embodiment, R^{F} is each independently a group represented by any of the following formulae (f1) to (f6):

-(OC₃F₆)_{d}-(OC₂F₄)ₑ- (f1)
wherein d is an integer of 1 to 200, and e is 0 or 1, preferably 1,

   - (OC₄F₈)_{c}-(OC₃F₆)_{d}-(OC₂F₄)ₑ-(OCF₂)_{f}- (f2)
wherein c and d are each independently an integer of 0 or more and 30 or less, and e and f are each independently an integer of 1 or more and 200 or less;
the sum of c, d, e, and f is 2 or more; and
the occurrence order of the respective repeating units enclosed in parentheses provided with the subscript c, d, e, or f is not limited in the formula,

   -(R⁶-R⁷)_{g}- (f3)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups independently selected from these groups;
g is an integer of 2 to 100,

   -(R⁶-R⁷)_{g}-R^{r}-(R^{7'}-R^{6'})_{g'}- (f4)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups independently selected from these groups;
R^{6'} is OCF₂ or OC₂F₄;
R^{7'} is a group selected from OC₂F₄, OC₃F₆, OC₄F₈, OC₅F₁₀, and OC₆F₁₂, or is a combination of two or three groups independently selected from these groups;
g is an integer of 2 to 100;
g' is an integer of 2 to 100; and
R^{r} is any of the following: 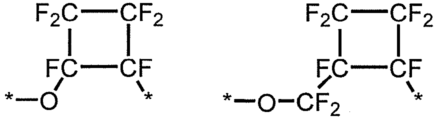 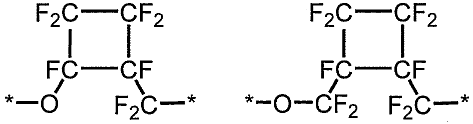 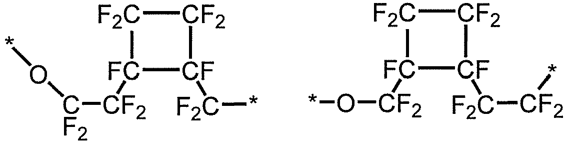 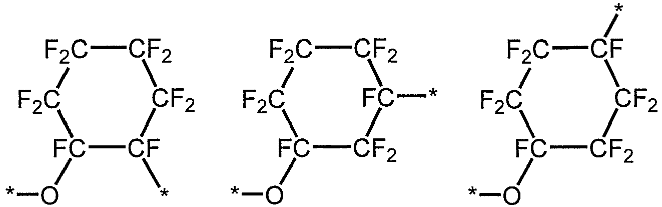
wherein * represents a bond position,

   - (OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein e is an integer of 1 or more and 200 or less; a, b, c, d, and f are each independently an integer of 0 or more and 200 or less; and the occurrence order of the respective repeating units enclosed in parentheses provided with a, b, c, d, e, or f is not limited in the formula, and

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)
wherein f is an integer of 1 or more and 200 or less; a, b, c, d, and e are each independently an integer of 0 or more and 200 or less; and the occurrence order of the respective repeating units enclosed in parentheses provided with a, b, c, d, e, or f is not limited in the formula.

In the above formula (f1), d is preferably 5 to 200, more preferably 10 to 100, still more preferably 15 to 50, and it is, for example, an integer of 25 to 35. In one embodiment, e is 1. In another embodiment, e is 0. In the above formula (f1), (OC₃F₆) is preferably a group represented by (OCF₂CF₂CF₂), (OCF₂CF(CF₃)), or (OCF (CF₃)CF₂), and is more preferably a group represented by -(OCF₂CF₂CF₂)_{d}-. In the above formula (f1), (OC₂F₄) is preferably a group represented by (OCF₂CF₂) or (OCF (CF₃)), and is more preferably a group represented by (OCF₂CF₂).

In the above formula (f2), e and f are each independently an integer of preferably 5 to 200, and more preferably 10 to 200. The sum of c, d, e, and f is preferably 5 or more, more preferably 10 or more, and it may be, for example, 15 or more or 20 or more. In one embodiment, the above formula (f2) is preferably a group represented by - (OCF₂CF₂CF₂CF₂)_{c}-(OCF₂CF₂CF₂)_{d}-(OCF₂CF₂)ₑ-(OCF₂)_{f}-. In another embodiment, the formula (f2) may be a group represented by -(OC₂F₄)ₑ-(OCF₂)_{f}-.

In the above formula (f3), R⁶ is preferably OC₂F₄. In the above (f3), R⁷ is preferably a group selected from OC₂F₄, OC₃F₆, and OC₄F₈, or a combination of two or three groups independently selected from these groups, and more preferably a group selected from OC₃F₆ and OC₄F₈. The combination of two or three groups independently selected from OC₂F₄, OC₃F₆, and OC₄F₈ is not limited, and examples thereof include -OC₂F₄OC₃F₆-, -OC₂F₄OC₄F₃-, -OC₃F₆OC₂F₄-, - OC₃F₆OC₃F₆-, -OC₃F₆OC₄F₈-, -OC₄F₈OC₄F₈-, -OC₄F₈OC₃F₆-, - OC₄F₈OC₂F₄-, -OC₂F₄OC₂F₄OC₃F₆-, -OC₂F₄OC₂F₄OC₄F₈-, - OC₂F₄OC₃F₆OC₂F₄-, -OC₂F₄OC₃F₆OC₃F₆-, -OC₂F₄OC₄F₈OC₂F_{4-f}, - OC₃F₆OC₂F₄OC₂F₄-, -OC₃F₆OC₂F₄OC₃F₆-, -OC₃F₆OC₃F₆OC₂F₄-, and - OC₄F₈OC₂F₄OC₂F₄-. In the above formula (f3), g is an integer of preferably 3 or more, and more preferably 5 or more. g is preferably an integer of 50 or less. In the above formula (f3), OC₂F₄, OC₃F₆, OC₄F₈, OC₅F₁₀, and OC₆F₁₂ may be either linear or branched, and are preferably linear. In this embodiment, the above formula (f3) is preferably -(OC₂F₄-OC₃F₆)_{g}- or -(OC₂F₄-OC₄F₈)_{g}-.

In the above formula (f4), R⁶, R⁷, and g have the same definition as described for the above formula (f3) and have the same embodiments. R^{6'}, R^{7'}, and g' have the same definition as R⁶, R⁷, and g described in the above formula (f3), respectively, and have the same embodiments. R^{r} is preferably any of the following: 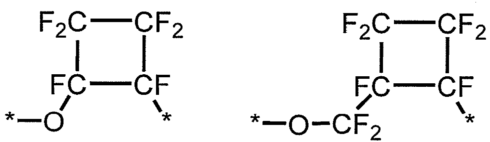 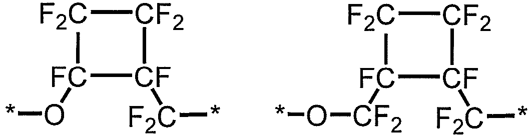 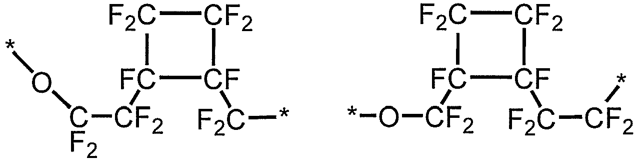 wherein * represents a bond position, and more preferably 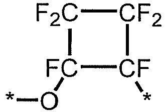 wherein * represents a bond position.

In the above formula (f5), e is an integer of preferably 1 or more and 100 or less, and more preferably 5 or more and 100 or less. The sum of a, b, c, d, e, and f is preferably 5 or more, more preferably 10 or more, and it is, for example, 10 or more and 100 or less.

In the above formula (f6), f is an integer of preferably 1 or more and 100 or less, and more preferably 5 or more and 100 or less. The sum of a, b, c, d, e, and f is preferably 5 or more, more preferably 10 or more, and it is, for example, 10 or more and 100 or less.

In one embodiment, R^{F} is a group represented by the above formula (f1) or (f2).

In one embodiment, R^{F} is a group represented by the above formula (f1).

In one embodiment, R^{F} is a group represented by the above formula (f2).

In one embodiment, R^{F} is a group represented by the above formula (f3) or (f4).

In one embodiment, R^{F} is a group represented by the above formula (f3).

In one embodiment, R^{F} is a group represented by the above formula (f4).

In one embodiment, R^{F} is a group represented by the above formula (f5).

In one embodiment, R^{F} is a group represented by the above formula (f6).

In R^{F}, the ratio of e to f (hereinafter, referred to as an "e/f ratio") is 0.1 to 10, preferably 0.2 to 5, more preferably 0.2 to 2, still more preferably 0.2 to 1.5, and even more preferably 0.2 to 0.85. With an e/f ratio of 10 or less, the durability and chemical resistance (such as durability against artificial sweat) of a cured product layer obtained from the compound are further improved. The smaller the e/f ratio is, the more improved the durability and chemical resistance of the cured product layer are. On the other hand, with an e/f ratio of 0.1 or more, the stability of the compound can be further enhanced. The larger the e/f ratio is, the more improved the stability of the compound is.

In one embodiment, the e/f ratio is preferably 0.2 to 0.95, and more preferably 0.2 to 0.9.

In one embodiment, from the viewpoint of heat resistance, the e/f ratio is preferably 1.0 or more, and more preferably 1.0 to 2.0.

In the fluoropolyether group-containing acrylic compound, the number average molecular weight of the R^{F1} and R^{F2} moieties is, but is not limited to, for example, 500 to 30,000, preferably 1,500 to 30,000, and more preferably 2,000 to 10,000. Herein, the number average molecular weight of R^{F1} and R^{F2} is a value obtained by ¹⁹F-NMR measurement.

In the above formulae (A1) to (A3), R^{Ac} is each independently -X^{D}-X^{E}(-X^{F}-OCO-CR⁵=CH₂)_{m'}.

X^{D} is a single bond, or a divalent group, such as a divalent organic group.

X^{D} is preferably -O-, -CO-, -COO-, -OCO-, -CONH-, - NHCO-, -OCONH-, -NHCOO-, -NH-CO-NH-, -CH₂CH(OH)CH₂-, - CH (CH₂OH)CH₂-, - (OSiR¹⁴₂)_{d5}-, 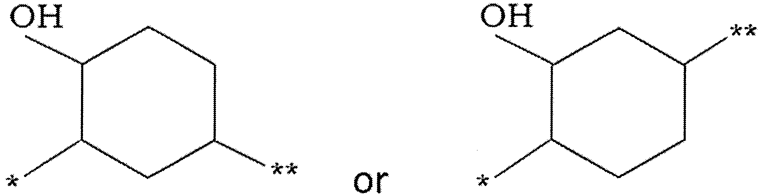
wherein * and ** represent bond positions, and * is bonded to X^{B} and ** is bonded to X^{E},
R¹⁴ is a C₁₋₆ alkyl group or a C₆₋₁₆ aryl group, and
d5 is an integer of 1 to 10. These groups are bonded to X^{B} on their left side.

X^{D} is more preferably -CONH-, -CH₂CH(OH)CH₂-, or - CH(CH₂OH)CH₂-, and more preferably -CONH-.

X^{E} is a single bond or an (m' + 1)-valent group.

In one embodiment, X^{E} is a single bond.

In one embodiment, X^{E} is a tri-or tetravalent group represented by the following formula:

-X^{G}-X^{H}

wherein
X^{G} is any of the following:
   a single bond;
   a C₁₋₆ alkylene group;
   - (CH₂)_{z9}-O-(CH₂)_{z10}-, wherein z9 is an integer of 0 to 6, such as an integer of 1 to 6, and z10 is an integer of 0 to 6, such as an integer of 1 to 6; or
   - (CH₂)_{z11}-phenylene- (CH₂)_{z12}-, wherein z11 is an integer of 0 to 6, such as an integer of 1 to 6, and z12 is an integer of 0 to 6, such as an integer of 1 to 6,
X^{H} is any of the following: 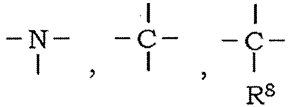 and
R⁸ is a hydrogen atom or a C₁₋₆ alkyl group.

The C₁₋₆ alkylene group may be linear or branched, but is preferably linear.

In a preferred embodiment, the C₁₋₆ alkylene group is a C₂₋₄ alkylene group.

The C₁₋₆ alkyl group is preferably a C₁₋₃ alkyl group, and more preferably a methyl group.

X^{F} is each independently a single bond, or a divalent group, such as a divalent organic group (preferably a divalent organic group having 1 to 10 carbon atoms).

In one embodiment, X^{F} is any of the following:
a single bond;
a C₁₋₆ alkylene group;
- (CH₂)_{z5}-O-(CH₂)_{z6}-, wherein z5 is an integer of 0 to 6, such as an integer of 1 to 6, and z6 is an integer of 0 to 6, such as an integer of 1 to 6; or
- (CH₂)_{z7}-phenylene-(CH₂)_{z8}-, wherein z7 is an integer of 0 to 6, such as an integer of 1 to 6, and z8 is an integer of 0 to 6, such as an integer of 1 to 6.

These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted. These groups are bonded to X^{B} on their left side.

The C₁₋₆ alkylene group may be linear or branched, but is preferably linear.

In a preferred embodiment, X^{F} is a C₁₋₆ alkylene group, preferably a C₂₋₄ alkylene group.

In one embodiment, X^{D}, X^{E}, and X^{F} are single bonds.

R⁵ is a hydrogen atom, a halogen atom, or a monovalent organic group having 1 to 8 carbon atoms.

The above monovalent organic group is preferably a C₁₋₈ alkyl group, a C₃₋₈ cycloalkyl group, or a C₅₋₈ aryl group, more preferably a C₁₋₆ alkyl group or a phenyl group, still more preferably a C₁₋₃ alkyl group, and particularly preferably a methyl group.

In one embodiment, R⁵ is a hydrogen atom.

In one embodiment, R⁵ is a methyl group.

m' is an integer of 1 to 10, preferably an integer of 1 to 3, and more preferably 1.

In the above formulae (A1) to (A3), X^{A} is each independently a single bond or a divalent organic group.

In one embodiment, X^{A} is each independently a single bond or a divalent organic group not containing a urethane bond.

In a preferred embodiment, X^{A} is each independently a single bond or a group represented by the following formula:

- (C_{α}R¹¹_{2α}) ₛ₁-R¹²ₜ₁-

wherein
R¹¹ is each independently a hydrogen atom or a fluorine atom,
α is each independently an integer of 1 to 10,
R¹² is each independently -O-, -CO-, -CONH-, -NHCO-, - COO-, -OCO-, or -OCONH-,
s1 is an integer of 0 to 3,
t1 is an integer of 0 to 3,
the sum of s1 and t1 is 1 or more, and
the occurrence order of the respective repeating units enclosed in parentheses provided with s1 or t1 is not limited in the formula.

In the formula, the left side is bonded to R^{F1} or R^{F2}.

In one embodiment, X^{A} is a single bond.

In one embodiment, X^{A} is each independently - (C_{α}R¹¹_{2α})ₛ₁-R¹²ₜ₁-.

R¹¹ is preferably a hydrogen atom.

α is each independently preferably an integer of 1 to 6, more preferably an integer of 1 to 4, and still more preferably an integer of 2 to 4.

R¹² is each independently preferably -O-, -CO-, -NR¹⁰-, -CONH-, or -COO-, and more preferably -CONH-.

R¹⁰ is a hydrogen atom or a C₁₋₆ alkyl group, preferably a hydrogen atom.

s1 is preferably an integer of 1 to 3, more preferably 1 or 2, and still more preferably 1.

t1 is preferably an integer of 0 to 2, more preferably 1 or 2, and still more preferably 1.

In a preferred embodiment,
R¹¹ is a hydrogen atom,
α is an integer of 2 to 4,
R¹² is -O-, -CO-, -NR¹⁰-, -CONH-, or -COO-,
R¹⁰ is a hydrogen atom or a C₁₋₆ alkyl group,
s1 is 1 or 2, and
t1 is 0 or 1.

In a more preferred embodiment, X^{A} is -CONR¹⁰-C_{α1}H_{2α1}-, - (C_{α2}H_{2α2} ) -OCONR¹⁰- , - (C_{α3}H_{2α3}) - , or - (C_{α4}H_{2α4}) -O- (C_{α5}H_{2α5}) ,
R¹⁰ is a hydrogen atom or a C₁₋₆ alkyl group,
α1 is an integer of 1 to 10,
α2 is an integer of 1 to 10,
α3 is an integer of 1 to 10,
α4 is an integer of 0 to 6, and
α5 is an integer of 0 to 6. Such groups are bonded to R^{F1} or R^{F2} on their left side.

X^{A} is preferably -CONH-C_{α}H_{2α}-. Such a group is bonded to R^{F1} or R^{F2} on its left side.

C_{α1}H_{2α1} is preferably (CH₂)_{α1}.

C_{α2}H_{2α2} is preferably (CH₂)_{α2}.

C_{α3}H_{2α3} is preferably (CH₂)_{α3}.

C_{α4}H_{2α4} is preferably (CH₂)_{α4}.

C_{α5}H_{2α5} is preferably (CH₂)_{α5}.

In the above formulae (A1) to (A3), X^{B} is each independently an (m + 1)-valent group. However, in each formula, at least one X^{B} is an (m + 1)-valent group containing a hydrolyzable silyl group.

In one embodiment, X^{B} is each independently an (m + 1)-valent group containing a hydrolyzable silyl group.

In one embodiment, X^{B} is each independently a group containing a group represented by the following formula:

SiR¹_{nb}R^{5b}_{4-nb}

wherein
R¹ is a hydroxyl group or a hydrolyzable group,
R^{sb} is a single bond, and
nb is 1 or 2, or
a group represented by the following formula:

XBa (R^{Si})ₙₐ

wherein
X^{Ba} is each independently an (m + na + 1)-valent group,
R^{Si} is each independently -X^{c}-SiR¹_{n'}R²_{3-n'} ,
X^{C} is a divalent organic group having 1 to 10 carbon atoms,
R¹ is each independently a hydroxyl group or a hydrolyzable group,
R² is each independently a hydrogen atom or a monovalent organic group,
n' is an integer of 1 to 3, and
na is an integer of 1 to 10.

In one embodiment, X^{B} is each independently a group represented by X^{Ba}(R^{Si})ₙₐ,
wherein
X^{Ba} is each independently an (m + na + 1)-valent group,
R^{Si} is each independently -X^{C}-SiR¹_{n'}R²_{3-n'},
X^{C} is a divalent organic group having 1 to 10 carbon atoms,
R¹ is each independently a hydroxyl group or a hydrolyzable group,
R² is each independently a hydrogen atom or a monovalent organic group,
n' is an integer of 1 to 3, and
na is an integer of 1 to 10.

In such an embodiment, the formulae (A1) and (A2) are respectively represented by the following formulae (A1-a) and (A2-a):

R^{F1} - X^{A}- X^{Ba} R^{Si}ₙₐR^{Ac}ₘ (A1-a)

R^{Ac}ₘR^{Si}ₙₐX^{Ba} - X^{A} - R^{F2} - X^{A} - X^{Ba} R^{Si}ₙₐR^{Ac}ₘ (A2-a)

wherein individual reference symbols are the same as defined above.

R^{Si} is each independently -X^{C}-SiR¹_{n'}R²_{3-n'} .

X^{C} is a divalent organic group having 1 to 10 carbon atoms.

In one embodiment, X^{C} is any of the following:
a C₁₋₆ alkylene group;
- (CH₂)_{z1}-O- (CH₂)_{z2}-, wherein z1 is an integer of 0 to 6, such as an integer of 1 to 6, and z2 is an integer of 0 to 6, such as an integer of 1 to 6;
- (CH₂)_{z3}-phenylene-(CH₂)_{z4}-, wherein z3 is an integer of 0 to 6, such as an integer of 1 to 6, and z4 is an integer of 0 to 6, such as an integer of 1 to 6; or
- (CH₂)_{z13}-OCONH-(CH₂)_{z14}-, wherein z13 is an integer of 0 to 6 and z14 is an integer of 0 to 6.
These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted. These groups are bonded to X^{B} on their left side.

The C₁₋₆ alkylene group may be linear or branched, but is preferably linear.

In a preferred embodiment, X^{C} is a C₁₋₆ alkylene group, preferably a C₂₋₄ alkylene group.

R¹ is each independently a hydroxyl group or a hydrolyzable group.

R¹ is preferably, each independently, a hydrolyzable group.

R¹ is preferably, each independently, -OR^{h}, -OCOR^{h}, -ON=CR^{H}₂, -NR^{h}₂, -NHR^{h}, -NCO, or a halogen (in these formulae, R^{h} represents a substituted or unsubstituted C₁₋₄ alkyl group) , and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{h} is a methyl group, and in another embodiment, R^{h} is an ethyl group.

R² is each independently a hydrogen atom or a monovalent organic group. Such a monovalent organic group is a monovalent organic group excluding the above hydrolyzable group.

In R², the monovalent organic group is preferably a C₁₋₂₀ alkyl group, more preferably a C₁₋₆ alkyl group, and still more preferably a methyl group.

In the above formula, n' is each independently an integer of 1 to 3 in each (SiR¹_{n'}R²_{3-n'}) unit, preferably 2 or 3, and more preferably 3.

na is preferably an integer of 1 to 6, more preferably an integer of 1 to 3, and particularly preferably 1.

In one embodiment, X^{Ba} is a trivalent group, and it may be preferably any of the following: 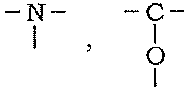 . In one embodiment, -C (-O-) - is bonded to R^{Si} by O. In another embodiment, -C(-O-)- is bonded to R^{Ac} by O.

In a preferred embodiment, X^{Ba} is N. In this case, m is 1 and n is 1 in the formulae.

In another embodiment, X^{B} is each independently a group containing a group represented by SiR¹_{nb}R^{sb}_{4-nb},
wherein
R¹ is a hydroxyl group or a hydrolyzable group,
R^{sb} is a single bond, and nb is 1 or 2,
preferably a group represented by -X^{Bb}-SiR¹_{nb}R^{sb}_{4-nb},
wherein
X^{Bb} is a single bond or a divalent group,
R¹ is a hydroxyl group or a hydrolyzable group,
R^{sb} is a single bond, and
nb is 1 or 2.

In such an embodiment, the formulae (A1) and (A2) are respectively represented by the following formulae (A1-b) and (A2-b):

R^{F1} -X^{A} - X^{Bb} - SiR^{a}_{nb}R^{Ac}ₘ (A1-b)

R^{Ac}ₘR^{a}_{nb}Si - X^{Bb}- X^{A} - R^{F2} - X^{A} - X^{Bb} - SiR^{a}_{nb}R^{Ac} ₘ (A2-b)

wherein individual reference symbols are the same as defined above.

In one embodiment, nb is 1.

In another embodiment, nb is 2.

In one embodiment, X^{Bb} is a single bond.

In another embodiment, X^{Bb} is a divalent group, a C₁₋₆ alkylene group.

In the above formulae (A1) and (A2), m is each independently an integer of 0 to 10 and n is each independently an integer of 1 to 10.

m is preferably an integer of 1 to 10, more preferably an integer of 1 to 6, still more preferably an integer of 1 to 3, and even more preferably 1.

n is preferably an integer of 1 to 6, more preferably an integer of 1 to 3, and particularly preferably 1.

In a preferred embodiment, m is 1 and n is 1.

In the above (A3), R^{a} is each independently an (m3 + 2)-valent organic group.

In one embodiment, R^{a} is a group represented by the following formula:

-R⁹- (R^{a'}-R⁹) ₖ-

wherein
R⁹ is each independently a C₁₋₆ alkylene group,
R^{a'} is each independently a trivalent group, such as a trivalent organic group, and
k is an integer of 1 to 4.

In such a group, -C(-O-)- is bonded to R^{Ac} by O.

R⁹ is preferably a C₁₋₄ alkylene group, and more preferably a C₂₋₄ alkylene group.

In one embodiment, k is 0.

In another embodiment, k is an integer of 1 to 4.

In a preferred embodiment, k is an integer of 1 to 2.

In one embodiment, k is 1.

In one embodiment, k is 2.

In one embodiment, R^{a'} is each independently a trivalent group containing a N atom or an O atom.

In a preferred embodiment, R^{a'} is each independently N, -C(-O-)-, a trivalent group optionally containing an amino bond, an amide bond, a urethane bond, a urea bond, an ether bond, or an ester bond between carbon-carbon atoms.

In one embodiment, R^{a'} is each independently any of the following groups:

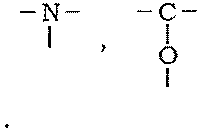

In one embodiment, R^{a'} is N.

In one embodiment, R^{a'} is -C(-O-)-.

In the above formula (A3), m3 is an integer of 0 to 4.

m3 is preferably an integer of 1 to 4, and more preferably 1 or 2.

In one embodiment, m3 is 1.

. In one embodiment, m3 is 2.

In the above formula (A3), R^{g} is each independently - NR^{c}CO-R^{e}-, -NR^{c}COO-R^{e}-, or -NR^{c}CONR^{c}-R^{e}-. Here, these groups are bonded to R^{a} on their left side.

R^{g} is preferably -NR^{c}CO-R^{e}-.

R^{c} is each independently a hydrogen atom, a C₁₋₆ alkyl group, or a C₆₋₁₆ aryl group.

The C₁₋₆ alkyl group is preferably a C₁₋₃ alkyl group, and particularly preferably a methyl group. The C₁₋₆ alkyl group may be linear or branched.

The C₆₋₁₆ aryl group is preferably a C₆₋₁₀ aryl group, and more preferably a phenyl group.

In one embodiment, R^{c} is a hydrogen atom.

In one embodiment, R^{c} is a methyl group.

In the above formulae, R^{e} is each independently a single bond or a divalent organic group.

In one embodiment, R^{e} is a single bond.

In one embodiment, R^{e} is each independently a divalent organic group.

The divalent organic group is preferably -R⁴³-Oₓ₂-R⁴⁴-, wherein R⁴³ and R⁴⁴ are each independently a single bond or a C₁₋₂₀ alkylene group, and x2 is 0 or 1. Such a C₁₋₂₀ alkylene group may be linear or branched, but is preferably linear. Such a C₁₋₂₀ alkylene group is preferably a C₁₋₁₀ alkylene group, more preferably a C₁₋₆ alkylene group, and still more preferably a C₁₋₃ alkylene group.

In the above formula (A3), x is an integer of 1 or more.

In one embodiment, x is preferably an integer of 1 or more and 100 or less, more preferably an integer of 1 or more and 10 or less, still more preferably an integer of 1 or more and 5 or less, such as an integer of 2 or more and 10 or less, and still more preferably an integer of 2 or more and 5 or less.

In a preferred embodiment, the formula (A3) is the following formula (A3-a):

**R^{b}₂N** - R^{j} - **(R^{F2}** - R^{g} - **R^{a}(R^{Ac})ₘ₃ - R^{g})ₓ -** R^{F2} - R^{j} - **NR^{b}₂** (A3-a)

wherein
R^{b} is each independently R^{Si}, R^{Ac}, or R^{c},
provided that at least one of R^{b} is R^{Si},
R^{j} is each independently -CO-R^{d}-, -O-R^{d}-, or -NR^{c}-R^{d}-, where these groups are bonded to R^{F2} on their left side,
R^{d} is each independently a single bond or a divalent organic group, and
R^{F2}, R^{a}, R^{c}, R^{Ac}, m3, and x are the same as defined above.

In the above formula (A3-a), R^{b} is each independently R^{Si}, R^{Ac}, or R^{c}.

In the above formula (A3-a), at least one of R^{b} is R^{Si}.

In a preferred embodiment, at least one of R^{b} bonded to the N atom positioned at each end in the formula (A3-a) is R^{Si} .

In one embodiment, one of R^{b} bonded to the N atom positioned at each end in the formula (A3-a) is R^{Si} and the other is R^{c}.

In another embodiment, one of R^{b} bonded to the N atom positioned at each end in the formula (A3-a) is R^{Si} and the other is R^{Ac}.

In a preferred embodiment, R^{Ac} is -CONH-X^{F}-OCO-CR⁵=CH₂.

R^{j} is each independently -CO-R^{d}-, -O-R^{d}-, or -NR^{c}-R^{d}-. Here, these groups are bonded to R^{F2} on their left side.

In one embodiment, R^{j} is each independently -CO-R^{d}-.

R^{d} is each independently a single bond or a divalent organic group.

In one embodiment, R^{d} is a single bond.

In another embodiment, R^{d} is a divalent organic group.

The divalent organic group in R^{d} is any of the following:
a C₁₋₁₀ alkylene group, preferably a C₂₋₆ alkylene group;
- (CH₂)_{z13}-O- (CH₂)_{z14}-, wherein z13 is an integer of 0 to 6, such as an integer of 1 to 6, and z14 is an integer of 0 to 6, such as an integer of 1 to 6;
- (CH₂)_{z15}-phenylene- (CH₂)_{z16}-, wherein z15 is an integer of 0 to 6, such as an integer of 1 to 6, and z16 is an integer of 0 to 6, such as an integer of 1 to 6; or
- (CH₂)_{z17}-NR¹⁰- (CH₂)_{z18}-, wherein R¹⁰ is a hydrogen atom or a C₁₋₆ alkyl group, z17 is an integer of 0 to 6, and z18 is an integer of 0 to 6.
These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted. These groups are bonded to CO on their left side.

The divalent organic group in R^{d} is preferably - (CH₂)_{z17}-NR¹⁰- (CH₂)_{z18}- (wherein R¹⁰ is a hydrogen atom or a C₁₋₆ alkyl group, z17 is an integer of 0 to 6, and z18 is an integer of 0 to 6), and more preferably -NR¹⁰- (CH₂)_{z13}- (wherein R¹⁰ is a hydrogen atom or a C₁₋₆ alkyl group, and z18 is an integer of 1 to 6).

The C₁₋₁₀ alkylene group may be linear or branched, but is preferably linear.

In a preferred embodiment, the formula (A3) is the following formula (A3-b):

R^{b}₂N- R^{d}- CO- (R^{F2}- CO- NR^{c}- R^{a}(R^{Ac})ₘ₃- NR^{c}- CO)ₓ- R^{F2}- CO- R^{d}- NR^{b}₂ (A3-b)

wherein R^{F2}, R^{a}, R^{b}, R^{c}, R^{d}, R^{Ac}, m3, and x are the same as defined above.

The fluoropolyether group-containing acrylic compound represented by the above formulae (A1) to (A3) is not limited, and it may have a number average molecular weight of 5 × 10² to 2 10⁵. In such a range, it is preferable that the number average molecular weight is 2 10³ to 1 × 10⁵, more preferably 3 10³ to 2 10⁴, from the viewpoint of abrasion durability. The "number average molecular weight" is defined as a value obtained by ¹⁹F-NMR measurement.

The fluoropolyether group-containing acrylic compounds represented by the above formulae (A1) and (A2) can be obtained by first preparing fluoropolyether group-containing silane compounds having reactive moieties such as -NH- and -C(OH)-, and then allowing compounds having a (meth)acrylic group to react with the reactive moieties.

In one embodiment, the fluoropolyether group-containing acrylic compounds represented by the above formulae (A1) and (A2) can be obtained by allowing compounds represented by the following formulae:

R^{F1}-COOR²¹

R²¹OOC-R^{F2}-COOR²¹

wherein R²¹ is a hydrogen atom or a methyl group, and R^{F1} and R^{F2} are the same as described with respect to the formulae (A1) and (A2),
to react with a compound represented by the following formula:

R²⁴-R²³-NH-R²²-SiR¹_{n'}R²₃₋ₙ'

wherein R²² is a divalent group,
R²³ is a divalent group,
R²⁴ is a reactive group such as NH₂, and
R¹, R², and n' are the same as described with respect to the formulae (A1) and (A2),
to obtain compounds represented by the following formulae:

R^{F1}-R²⁵-R²³-NH-R²²-SiR¹_{n'}R²_{3-n'}

R²_{3-n'}R¹_{n'}Si-R²²-HN-R²³-R²⁵-R^{F2}-R²⁵-R²³-NH-R²²-SiR¹_{n'}R²_{3-n'} and then allowing the above compounds to react with a compound represented by the following formula:

R⁵⁴-R⁵⁵-OCOCH=CH₂

wherein R⁵⁴ is a reactive group such as -NCO, -COOH, or COOCl, and
R⁵⁵ is a divalent group, or

R⁵⁶-OCOCR⁵⁷=CH₂

wherein R⁵⁶ is a halogen, H, or a monovalent hydrocarbon group, and
R⁵⁷ is a hydrogen atom or a C₁₋₃ alkyl.

In one embodiment, the fluoropolyether group-containing acrylic compounds represented by the above formulae (A1) and (A2) can be obtained by allowing compounds represented by the following formulae:

R^{F1}-COF

FOC-R^{F2}-COF

wherein R^{F1} and R^{F2} are the same as described with respect to the formulae (A1) and (A2),
to react with a compound represented by the following formula:

Br-Mg-CH₂CH=CH₂

to obtain compounds represented by the following formulae:

R^{F1}-C (OH) (CH₂CH=CH₂)₂

(CH₂=CHCH₂)₂ (HO) C-R^{F2}-C (OH) (CH₂CH=CH₂)₂

, then allowing the above compounds to react with the following formula:

HSiR¹_{n'R}²_{3-n'}

to obtain compounds represented by the following formulae:

R^{F1}-C (OH)(CH₂CH=CH₂)₂

(R²_{3-n'}R¹_{n'}Si-CH₂CH₂CH₂)₂(HO)C-R^{F2}-C(OH)(CH₂CH₂CH₂- SiR¹_{n'}R²_{3-n'})₂

, and then allowing the above compounds to react with a compound represented by the following formula:

R³⁴-R³⁵-OCOCH=CH₂

wherein R³⁴ is a reactive group such as -NCO or -COOH, and
R³⁵ is a divalent group.

In one embodiment, for the fluoropolyether group-containing acrylic compounds represented by the above formulae (A1) and (A2), a compound represented by the following formula:

HOCH₂-R^{F2}-CH₂OH

wherein R^{F1} and R^{F2} are the same as described with respect to the formulae (A1) and (A2),
is allowed to react with 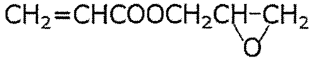 to obtain 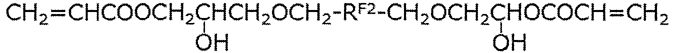 . Then, the above compound can be allowed to react with OCN-(CH₂)₃-SiR¹_{n'}R²_{3-n'}
wherein individual reference symbols are the same as defined above,
thereby obtaining a compound represented by the following: 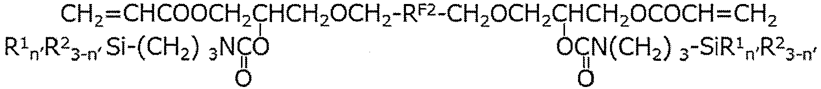 wherein individual reference symbols are the same as defined above.

In one embodiment, for the fluoropolyether group-containing acrylic compounds represented by the above formulae (A1) and (A2), a compound represented by the following formula: 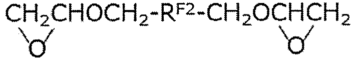 wherein individual reference symbols are the same as defined above,
is allowed to react with

HOOC=CH₂

to obtain a compound represented by the following: 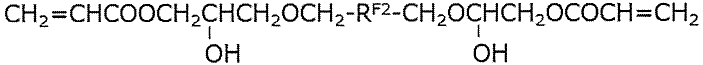 wherein individual reference symbols are the same as defined above.

Then, the above compound can be allowed to react with OCN-(CH₂)₃-SiR¹_{n'}R²_{3-n'}
wherein individual reference symbols are the same as defined above,
thereby obtaining a compound represented by the following: 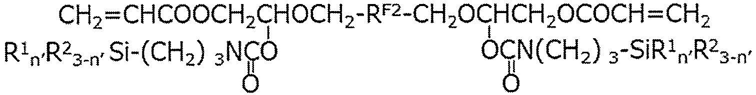 wherein individual reference symbols are the same as defined above.

In one embodiment, for the fluoropolyether group-containing acrylic compound represented by the above formula (A3), a compound represented by the following formula:

R²¹OOC-R^{F2}-COOR²¹

wherein R²¹ is a hydrogen atom or a methyl group, and R^{F2} is the same as described with respect to the formula (A3), is allowed to react with the following formula:

NH₂-R⁹-(NH-R⁹)ₖ-NH₂

wherein R⁹ and k are the same as described with respect to the formula (A3),
to obtain

R²¹OOC-(R^{F2}-CONH-R⁹-(NH-R⁹)ₖ-NHCO)ₓ-R^{F2}-COOR²¹

wherein R²¹ is a hydrogen atom or a methyl group, and R^{F2}, R⁹, and k are the same as described with respect to the formula (A3).

Then, the obtained compound is allowed to react with a compound represented by the following:

NR²³ₘH₂₋ₘ-R²²-SiR¹_{n'}R²_{3-n'}

wherein R²³ is a C₁₋₆ alkyl group or a phenyl group, m is 0 or 1, R²² is a divalent group, and R¹, R², and n' are the same as described with respect to the formula (A3),
to obtain a compound represented by the following formula:

R²_{3-n'}R¹_{n'}Si-R²²-HNOC-(R^{F2}-CONH-R⁹-(NH-R⁹)ₖ-NHCO)ₓ-R^{F2}- CONH-R²²-SiR¹_{n'}R²_{3-n'} .

Then, the obtained compound can be allowed to react with a compound represented by the following formula:

R³⁴-R³⁵-OCOCH=CH₂

wherein R³⁴ is a reactive group such as -NCO or -COOH, and
R³⁵ is a divalent group,
thereby obtaining the compound represented by the formula (A3).

In one embodiment, for the fluoropolyether group-containing acrylic compound represented by the above formula (A3), a compound represented by the following formula:

R²¹OOC-R^{F2}-COOR²¹

wherein R²¹ is a hydrogen atom or a methyl group, and R^{F2} is the same as described with respect to the formula (A3), is allowed to react with the following formula:

NH₂-R⁹-(CH(OH)-R⁹)ₖ-NH₂

wherein R⁹ and k are the same as described with respect to the formula (A3),
to obtain

R²¹OOC-(R^{F2}-CONH-R⁹-(CH(OH)-R⁹)ₖ-NHCO)ₓ-R^{F2}-COOR²¹

wherein R²¹ is a hydrogen atom or a methyl group, and R^{F2}, R⁹, and k are the same as described with respect to the formula (A3).

Then, the obtained compound is allowed to react with a compound represented by the following:

NR²³ₘH₂₋ₘ-R²²-SiR¹_{n'}R²_{3-n'}

wherein R²³ is a C₁₋₆ alkyl group or a phenyl group, m is 0 or 1, R²² is a divalent group, and R¹, R², and n' are the same as described with respect to the formula (A3),
to obtain a compound represented by the following formula:

R²_{3-n'}R¹_{n'}Si-R²²-HNOC-(R^{F2}-CONH-R⁹-(CH(OH)-R⁹)ₖ- NHCO)ₓ-R^{F2}-CONH-R²²-SiR¹_{n'}R²_{3-n'} .

Then, the obtained compound can be allowed to react with a compound represented by the following formula:

R³⁴-R³⁵-OCOCH=CH₂

wherein R³⁴ is a reactive group such as -NCO or -COOH, and
R³⁵ is a divalent group,
thereby obtaining the compound represented by the formula (A3).

In one embodiment, for the fluoropolyether group-containing acrylic compound represented by the above formula (A3), a compound represented by the following formula:

R²¹OOC-R^{F2}-COOR²¹

wherein R²¹ is a hydrogen atom or a methyl group, and R^{F2} is the same as described with respect to the formula (A3), is allowed to react with the following formula:

NH₂-R⁹-(NH-R⁹)ₖ-NH₂

wherein R⁹ and k are the same as described with respect to the formula (A3),
to obtain

R²¹OOC-(R^{F2}-CONH-R⁹-(NH-R⁹)ₖ-NHCO)ₓ-R^{F2}-COOR²¹

wherein R²¹ is a hydrogen atom or a methyl group, and R^{F2}, R⁹, and k are the same as described with respect to the formula (A3).

Then, the obtained compound is allowed to react with a compound represented by the following:

NH₂-R^{9'}-NH₂

wherein R^{9'} is the same as described with respect to R⁹, to obtain the following formula:

R²¹OOC-(R^{F2}-CONH-R⁹-(NH-R⁹)ₖ-NHCO)ₓ-(R^{F2}-CONH-R^{9'}-NHCO)_{x'}-R^{F2}- COOR²¹

wherein R²¹ is a hydrogen atom or a methyl group, R^{F2}, R⁹, and k are the same as described with respect to the formula (A3), and R^{9'} is the same as described with respect to R⁹.

Then, the obtained compound is allowed to react with a compound represented by the following:

NR²³ₘH₂₋ₘ-R²²-SiR¹_{n'}R²_{3-n'}

wherein R²³ is a C₁₋₆ alkyl group or a phenyl group, m is 0 or 1, R²² is a divalent group, and R¹, R², and n' are the same as described with respect to the formula (A3),
to obtain a compound represented by the following formula:

R²_{3-n'}R¹_{n'}Si-R²²-HNOC-(R^{F2}-CONH-R⁹-(NH-R⁹)ₖ-NHCO)ₓ- (R^{F2}-CONH-R^{9'}-NHCO)_{x'}-R^{F2}-CONH-R²²-SiR¹_{n'}R²_{3-n'}.

Then, the obtained compound can be allowed to react with a compound represented by the following formula:

R³⁴-R³⁵-OCOCH=CH₂

wherein R³⁴ is a reactive group such as -NCO or -COOH, and
R³⁵ is a divalent group,
thereby obtaining the compound represented by the formula (A3).

The reaction conditions of each step of the above reactions can be suitably set by those skilled in the art.

Component (B): a fluoropolyether group-containing silane compound containing a fluoropolyether group and a hydrolyzable silyl group

The curable composition of the present disclosure contains a fluoropolyether group-containing silane compound containing a fluoropolyether group and a hydrolyzable silyl group. By containing the fluoropolyether group-containing silane compound, the curable composition of the present disclosure has curability due to moisture (water).

The fluoropolyether group-containing silane compound contains a fluoropolyether group and a hydrolyzable silyl group in the molecule.

In a preferred embodiment, the fluoropolyether group-containing silane compound is a compound represented by the following formula (B1) or (B2):

R^{F3}_{α} - X^{Z} - R^{Si}_{β} (B1)

R^{Si}_{γ} - X^{Z} - R^{F4} - X^{Z} - R^{Si}_{γ} (B2)

wherein
R^{F3} is each independently Rf³-R^{FB}- O_{q3}-,
R^{F4} is -Rf⁴ₚ₃-R^{FB}-O_{q3}-,
Rf³ is each independently a C₁₋₁₆ alkyl group optionally substituted with one or more fluorine atoms,
Rf⁴ is a C₁₋₆ alkylene group optionally substituted with one or more fluorine atoms,
R^{FB} is each independently a divalent fluoropolyether group,
p3 is 0 or 1,
q3 is each independently 0 or 1,
R^{Si} is each independently a monovalent group containing a Si atom to which a hydroxyl group, a hydrolyzable group, a hydrogen atom, or a monovalent organic group is bonded,
at least one R^{Si} is a monovalent group containing a Si atom to which a hydroxyl group or a hydrolyzable group is bonded,
X^{Z} is each independently a single bond or a di- to decavalent organic group,
α is an integer of 1 to 9,
β is an integer of 1 to 9, and
γ is each independently an integer of 1 to 9.

In the above formula (B1), R^{F3} is each independently R^{f3}-R^{FB}-O_{q3}-.

In the above formula (B2), R^{F4} is -Rf⁴ₚ₃-R^{FB}-O_{q3}-.

In the above formula, Rf³ is each independently a C₁₋₁₆ alkyl group optionally substituted with one or more fluorine atoms.

In the C₁₋₁₆ alkyl group optionally substituted with one or more fluorine atoms, the "C₁₋₁₆ alkyl group" may be linear or branched, and is preferably a linear or branched C₁₋₆ alkyl group, in particular C₁₋₃ alkyl group, and more preferably a linear C₁₋₆ alkyl group, in particular C₁₋₃ alkyl group.

Rf³ is preferably a C₁₋₁₆ alkyl group substituted with one or more fluorine atoms, more preferably a CF₂H-C₁₋₁₅ perfluoroalkylene group, and still more preferably a C₁₋₁₆ perfluoroalkyl group.

The C₁₋₁₆ perfluoroalkyl group may be linear or branched, and is preferably a linear or branched C₁₋₆ perfluoroalkyl group, in particular C₁₋₃ perfluoroalkyl group, more preferably a linear C₁₋₆ perfluoroalkyl group, in particular C₁₋₃ perfluoroalkyl group, and specifically -CF₃, -CF₂CF₃, or -CF₂CF₂CF₃.

In the above formula, Rf⁴ is a C₁₋₆ alkylene group optionally substituted with one or more fluorine atoms.

In the C₁₋₆ alkylene group optionally substituted with one or more fluorine atoms, the "C₁₋₆ alkylene group" may be linear or branched, and is preferably a linear or branched C₁₋₃ alkylene group, and more preferably a linear C₁₋₃ alkylene group.

Rf⁴ is preferably a C₁₋₆ alkylene group substituted with one or more fluorine atoms, more preferably a C₁₋₆ perfluoroalkylene group, and still more preferably a C₁₋₃ perfluoroalkylene group.

The C₁₋₆ perfluoroalkylene group may be linear or branched, and is preferably a linear or branched C₁₋₃ perfluoroalkylene group, more preferably a linear C₁₋₃ perfluoroalkylene group, and specifically -CF₂-, -CF₂CF₂-, or -CF₂CF₂CF₂- .

In the above formula, p3 is 0 or 1. In one embodiment, p3 is 0. In another embodiment, p3 is 1.

In the above formulae, q3 is each independently 0 or 1. In one embodiment, q3 is 0. In another embodiment, q3 is 1.

In the above formulae (B1) and (B2), R^{FB} is each independently a divalent fluoropolyether group.

R^{FB} is a fluoropolyether group that is the same as R^{F}, and has the same embodiments.

R^{FB} is preferably a linear divalent fluoropolyether group. The linear divalent fluoropolyether group provides a relatively low viscosity, and improves applicability and handleability.

That is, R^{FB} is preferably a group represented by the following formula:

-(OC₆F₁₂)ₐ-(OCSF₁₀)_{b}-(OC₄F₈)_{c}-(OC₃R^{Fa}₆)_{d}-(OC₂F₄)ₑ- (OCF₂)_{f}-

wherein
R^{Fa} is each independently a hydrogen atom, a fluorine atom, or a chlorine atom;
a, b, c, d, e, and f are each independently an integer of 0 to 200, and the sum of a, b, c, d, e, and f is 1 or more; the occurrence order of the respective repeating units enclosed in parentheses provided with a, b, c, d, e, or f is not limited in the formula; however, when all R^{Fa} groups are hydrogen atoms or chlorine atoms, at least one of a, b, c, e, and f is 1 or more.

In one embodiment, R^{FB} is each independently a group represented by any of the following formulae (f1) to (f6):

-(OC₃F₆)_{d}-(OC₂F₄)ₑ- (f1)

wherein d is an integer of 1 to 200 and e is 0 or 1,

-(OC₄F₈)_{c}-(OC₃F₆)_{d}-(OC₂F₄)ₑ-(OCF₂)_{f}- (f2)

wherein c and d are each independently an integer of 0 or more and 30 or less, and e and f are each independently an integer of 1 or more and 200 or less;
the sum of c, d, e, and f is 2 or more; and
the occurrence order of the respective repeating units enclosed in parentheses provided with the subscript c, d, e, or f is not limited in the formula,

   - (R⁶-R⁷)_{g}- (f3)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups independently selected from these groups;
g is an integer of 2 to 100,

   -(R⁶-R⁷)_{g}-R^{r}-(R^{7'}-R^{6'})_{g'}- (f4)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups independently selected from these groups;
R^{6'} is OCF₂ or OC₂F₄;
R^{7'} is a group selected from OC₂F₄, OC₃F₆, OC₄F₈, OC₅F₁₀, and OC₆F₁₂, or is a combination of two or three groups independently selected from these groups;
g is an integer of 2 to 100;
g' is an integer of 2 to 100; and
R^{r} is any of the following: 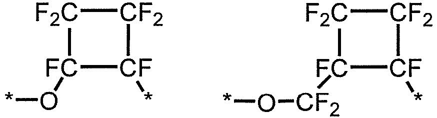 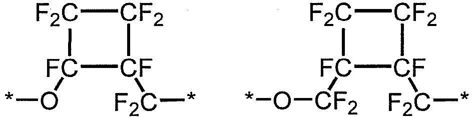 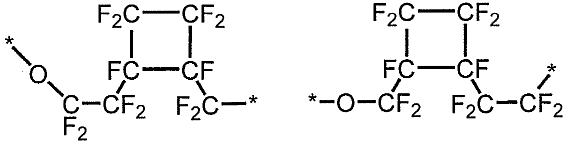 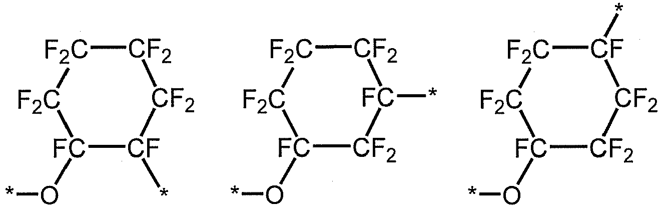
wherein * represents a bond position,
-(OC₆F₁₂)ₐ-(OC₅F₁₀)_{b}-(OC₄F₈)_{c}-(OC₃F₆)_{d}-(OC₂F₄)ₑ-(OCF₂)_{f}-(f5)
wherein e is an integer of 1 or more and 200 or less; a, b, c, d, and f are each independently an integer of 0 or more and 200 or less; and the occurrence order of the respective repeating units enclosed in parentheses provided with a, b, c, d, e, or f is not limited in the formula, and
-(OC₆F₁₂)ₐ-(OC₅F₁₀)_{b}-(OC₄F₈)_{c}-(OC₃F₆)_{d}-(OC₂F₄)ₑ-(OCF₂)_{f}-(f6)
wherein f is an integer of 1 or more and 200 or less; a, b, c, d, and e are each independently an integer of 0 or more and 200 or less; and the occurrence order of the respective repeating units enclosed in parentheses provided with a, b, c, d, e, or f is not limited in the formula.

In one embodiment, R^{FB} is a group represented by the above formula (f1) or (f2).

In one embodiment, R^{FB} is a group represented by the above formula (f1).

In one embodiment, R^{FB} is a group represented by the above formula (f2).

In one embodiment, R^{FB} is a group represented by the above formula (f3) or (f4).

In one embodiment, R^{FB} is a group represented by the above formula (f3).

In one embodiment, R^{FB} is a group represented by the above formula (f4).

In one embodiment, R^{FB} is a group represented by the above formula (f5).

In one embodiment, R^{FB} is a group represented by the above formula (f6).

In the above formulae (B1) and (B2), R^{Si} is each independently a monovalent group containing a Si atom to which a hydroxyl group, a hydrolyzable group, a hydrogen atom, or a monovalent organic group is bonded (hereinafter, also referred to as a "hydrolyzable silyl group"), and at least one R^{Si} is a monovalent group containing a Si atom to which a hydroxyl group or a hydrolyzable group is bonded.

In a preferred embodiment, R^{Si} is a monovalent group containing a Si atom to which a hydroxyl group or a hydrolyzable group is bonded.

In a preferred embodiment, R^{Si} is a group represented by the following formula (S1), (S2), (S3), (S4), or (S5):

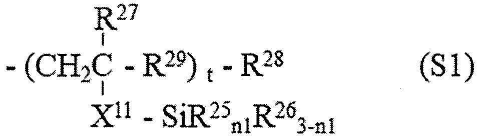

- SiR²⁵ₙ₁R²⁶₃₋ₙ₁ (S2)

- SiR^{a1}ₖ₁R^{b1}ₗ₁R^{c1}ₘ₁ (S3)

- CR^{d1}ₖ₂R^{e1}ₗ₂R^{f1}ₘ₂ (S4)

- NR^{g1}R^{h1} (S5)

wherein
R²⁵ is each independently a hydroxyl group or a hydrolyzable group,
R²⁶ is each independently a hydrogen atom or a monovalent organic group,
n1 is each independently an integer of 0 to 3 for each (SiR²⁵ₙ₁R²⁶₃₋ₙ₁) unit,
X¹¹ is each independently a single bond or a divalent organic group,
R²⁷ is each independently a hydrogen atom or a monovalent organic group,
t is each independently an integer of 2 or more,
R²⁸ is each independently a hydrogen atom, a halogen atom, or -X¹¹-SiR²⁵ₙ₁R²⁶₃₋ₙ₁,
R²⁹ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁,
Z¹ is each independently an oxygen atom or a divalent organic group,
R²¹ is each independently -Z^{1'}-SiR^{21'}_{p1'}R^{22'}_{q1'}R^{23'}_{r1'}
R²² is each independently a hydroxyl group or a hydrolyzable group,
R²³ is each independently a hydrogen atom or a monovalent organic group,
p1 is each independently an integer of 0 to 3,
q1 is each independently an integer of 0 to 3,
r1 is each independently an integer of 0 to 3,
Z^{1'} is each independently an oxygen atom or a divalent organic group,
R^{21'} is each independently -Z^{1"}-SiR^{22"}_{q1"}R^{23"}_{r1"} ,
R^{22'} is each independently a hydroxyl group or a hydrolyzable group,
R^{23'} is each independently a hydrogen atom or a monovalent organic group,
p1' is each independently an integer of 0 to 3,
q1' is each independently an integer of 0 to 3,
r1' is each independently an integer of 0 to 3,
Z^{1"} is each independently an oxygen atom or a divalent organic group,
R^{22"} is each independently a hydroxyl group or a hydrolyzable group,
R^{23"} is each independently a hydrogen atom or a monovalent organic group,
q1" is each independently an integer of 0 to 3,
r1" is each independently an integer of 0 to 3,
R^{b1} is each independently a hydroxyl group or a hydrolyzable group,
R^{c1} is each independently a hydrogen atom or a monovalent organic group,
k1 is each independently an integer of 0 to 3,
l1 is each independently an integer of 0 to 3,
m1 is each independently an integer of 0 to 3,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a hydrogen atom or a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
R^{g1} and R^{h1} are each independently -Z⁴-SiR²⁵ₙ₁R²⁶₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that in the formulae (S1), (S2), (S3), (S4), and (S5), at least one Si atom to which a hydroxyl group or a hydrolyzable group is bonded is present.

In the above formulae, R²⁵ is each independently a hydroxyl group or a hydrolyzable group.

R²⁵ is preferably, each independently, a hydrolyzable group.

Preferably, R²⁵ is each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group) , and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

In the above formulae, R²⁶ is each independently a hydrogen atom or a monovalent organic group. Such a monovalent organic group is a monovalent organic group excluding the above hydrolyzable group.

In R²⁶, the monovalent organic group is preferably a C₁₋₂₀ alkyl group, more preferably a C₁₋₆ alkyl group, and still more preferably a methyl group.

In the above formulae, n1 is each independently an integer of 0 to 3 for each (SiR²⁵ₙ₁R²⁶₃₋ₙ₁) unit. However, when R^{Si} is a group represented by the formula (S1) or (S2), the R^{Si} moiety at the end of the formula (B1) and the formula (B2) (hereinafter, also referred to simply as an "end moiety" of the formula (B1) and the formula (B2)) has at least one (SiR²⁵ₙ₁R²⁶₃₋ₙ₁) unit wherein n1 is 1 to 3. That is, in such end moieties, not all n1 are 0 at the same time. In other words, in the end moieties of the formula (B1) and the formula (B2), at least one Si atom to which a hydroxyl group or a hydrolyzable group is bonded is present.

n1 is each independently an integer of preferably 1 to 3, more preferably 2 to 3, and still more preferably 3 for each (SiR²⁵ₙ₁R²⁶₃₋ₙ₁) unit.

In the above formula, X¹¹ is each independently a single bond or a divalent organic group. Such a divalent organic group is preferably -R⁴¹-Oₓ-R⁴²-, wherein R⁴¹ and R⁴² are each independently a single bond or a C₁₋₂₀ alkylene group, and x is 0 or 1. Such a C₁₋₂₀ alkylene group may be linear or branched, but is preferably linear. Such a C₁₋₂₀ alkylene group is preferably a C₁₋₁₀ alkylene group, more preferably a C₁₋₆ alkylene group, and still more preferably a C₁₋₃ alkylene group.

In one embodiment, X¹¹ is each independently a -C₁₋₆ alkylene-O-C₁₋₆ alkylene- or a -O-C₁₋₆ alkylene-.

In a preferred embodiment, X¹¹ is each independently a single bond or a linear C₁₋₆ alkylene group, preferably a single bond or a linear C₁₋₃ alkylene group, more preferably a single bond or a linear C₁₋₂ alkylene group, and still more preferably a linear C₁₋₂ alkylene group.

In the above formula, R²⁷ is each independently a hydrogen atom or a monovalent organic group. Such a monovalent organic group is preferably a C₁₋₂₀ alkyl group. Such a C₁₋₂₀ alkyl group may be linear or branched, but is preferably linear.

In a preferred embodiment, R²⁷ is each independently a hydrogen atom or a linear C₁₋₆ alkyl group, preferably a hydrogen atom or a linear C₁₋₃ alkyl group, and preferably a hydrogen atom or a methyl group.

In the above formula, t is each independently an integer of 2 or more.

In a preferred embodiment, t is each independently an integer of 2 to 10, preferably an integer of 2 to 6.

In the above formula, R²⁸ is each independently a hydrogen atom, a halogen atom, or -X¹¹-SiR²⁵ₙ₁R²⁶₃₋ₙ₁. Such a halogen atom is preferably an iodine atom, a chlorine atom, or a fluorine atom, and more preferably a fluorine atom. In a preferred embodiment, R²⁸ is a hydrogen atom.

In the above formula, R²⁹ is each independently a single bond, an oxygen atom, an alkylene group having 1 to 6 carbon atoms, or an alkyleneoxy group having 1 to 6 carbon atoms.

In one embodiment, R²⁹ is each independently an oxygen atom, an alkylene group having 1 to 6 carbon atoms, or an alkyleneoxy group having 1 to 6 carbon atoms.

In a preferred embodiment, R²⁹ is a single bond.

In one embodiment, the formula (S1) is the following formula (S1-a): 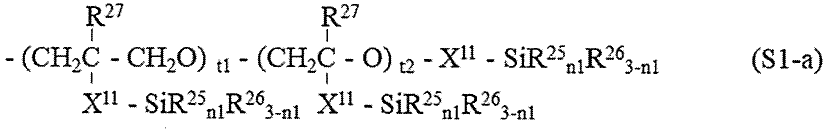 wherein
R²⁵, R²⁶, R²⁷, X¹¹, and n1 have the same definition as described for the above formula (S1);
t1 and t2 are each independently an integer of 1 or more, preferably an integer of 1 to 10, and more preferably an integer of 2 to 10, such as an integer of 1 to 5 or an integer of 2 to 5; and
the occurrence order of the respective repeating units enclosed in parentheses provided with t1 and t2 is not limited in the formula.

In a preferred embodiment, the formula (S1) is the following formula (S1-b): 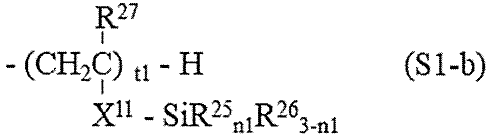 wherein R²⁵, R²⁶, R²⁷, X¹¹, n1, and t have the same definition as described for the above formula (S1).

In the above formula, R^{a1} is each independently -Z¹-SiR²¹ₚ₁R²²_{q1}R²³ᵣ₁ .

Z¹ is each independently an oxygen atom or a divalent organic group. The structure denoted as Z¹ hereinafter is bonded to (SiR^{Z1}ₚ₁R²²_{q1}R²³ᵣ₁) on its right side.

In a preferred embodiment, Z¹ is a divalent organic group.

In a preferred embodiment, Z¹ does not include a group that forms a siloxane bond with the Si atom to which Z¹ is bonded. Preferably, in the formula (S3), (Si-Z¹-Si) does not contain a siloxane bond.

Z¹ is preferably a C₁₋₆ alkylene group, -(CH₂)_{z1}-O-(CH₂)_{z2}-(wherein z1 is an integer of 0 to 6, such as an integer of 1 to 6, and z2 is an integer of 0 to 6, such as an integer of 1 to 6), or -(CH₂)_{z3}-phenylene-(CH₂)_{z4}- (wherein z3 is an integer of 0 to 6, such as an integer of 1 to 6, and z4 is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z¹ is a C₁₋₆ alkylene group or -(CH₂)_{z3}-phenylene-(CH₂)_{z4}-, preferably -phenylene-(CH₂)_{z4}-. When Z¹ is such a group, light resistance, in particular ultraviolet resistance, can be further enhanced.

In another preferred embodiment, Z¹ is a C₁₋₃ alkylene group. In one embodiment, Z¹ may be -CH₂CH₂CH₂-. In another embodiment, Z¹ may be -CH₂CH₂-.

R²¹ is each independently -Z^{1'}-SiR^{21'}_{p1'}R^{22'}_{q1'}R^{23'}_{r1'}.

Z^{1'} is each independently an oxygen atom or a divalent organic group. The structure denoted as Z^{1'} hereinafter is bonded to (SiR^{21'}_{p1'}R^{22'}_{q1'}R^{23'}_{r1'}) on its right side.

In a preferred embodiment, Z^{1'} is a divalent organic group.

In a preferred embodiment, Z^{1'} does not include a group that forms a siloxane bond with the Si atom to which Z^{1'} is bonded. Preferably, in the formula (S3), (Si-Z^{1'}-Si) does not contain a siloxane bond.

Z^{1'} is preferably a C₁₋₆ alkylene group, -(CH₂)_{z1'}-O-(CH₂)_{z2'}- (wherein z1' is an integer of 0 to 6, such as an integer of 1 to 6, and z2' is an integer of 0 to 6, such as an integer of 1 to 6), or -(CH₂)_{z3'}-phenylene-(CH₂)_{z4'}-(wherein z3' is an integer of 0 to 6, such as an integer of 1 to 6, and z4' is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z^{1'} is a C₁₋₆ alkylene group or -(CH₂)_{z3'}-phenylene-(CH₂)_{z4'}-, preferably -phenylene-(CH₂)_{z4'}-. When Z^{1'} is such a group, light resistance, in particular ultraviolet resistance, can be further enhanced.

In another preferred embodiment, Z^{1'} is a C₁₋₃ alkylene group. In one embodiment, Z^{1'} may be -CH₂CH₂CH₂-. In another embodiment, Z^{1'} may be -CH₂CH₂-.

R^{21'} is each independently -Z^{1"}-SiR^{22"}_{q1"}R^{23"}_{r1"}.

Z^{1"} is each independently an oxygen atom or a divalent organic group. The structure denoted as Z^{1"} hereinafter is bonded to (SiR^{22"}_{q1"}R^{23"}_{r1"}) on its right side.

In a preferred embodiment, Z^{1"} is a divalent organic group.

In a preferred embodiment, Z^{1"} does not include a group that forms a siloxane bond with the Si atom to which Z^{1"} is bonded. Preferably, in the formula (S3), (Si-Z^{1"}-Si) does not contain a siloxane bond.

Z^{1"} is preferably a C₁₋₆ alkylene group, -(CH₂)_{z1"}-O-(CH₂)_{z2"}- (wherein z1" is an integer of 0 to 6, such as an integer of 1 to 6, and z2" is an integer of 0 to 6, such as an integer of 1 to 6), or -(CH₂)_{z3"}-phenylene-(CH₂)_{z4"}-(wherein z3" is an integer of 0 to 6, such as an integer of 1 to 6, and z4" is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z^{1"} is a C₁₋₆ alkylene group or -(CH₂)_{z3"}-phenylene-(CH₂)_{z4"}-, preferably -phenylene-(CH₂)_{z4"}-. When Z^{1"} is such a group, light resistance, in particular ultraviolet resistance, can be further enhanced.

In another preferred embodiment, Z^{1"} is a C₁₋₃ alkylene group. In one embodiment, Z^{1"} may be -CH₂CH₂CH₂-. In another embodiment, Z^{1"} may be -CH₂CH₂-.

R^{22"} is each independently a hydroxyl group or a hydrolyzable group.

R^{22"} is preferably, each independently, a hydrolyzable group.

Preferably, R^{22"} is each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

R^{23"} is each independently a hydrogen atom or a monovalent organic group. Such a monovalent organic group is a monovalent organic group excluding the above hydrolyzable group.

In R^{23"}, the monovalent organic group is preferably a C₁₋₂₀ alkyl group, more preferably a C₁₋₆ alkyl group, and still more preferably a methyl group.

q1" is each independently an integer of 0 to 3, and r1" is each independently an integer of 0 to 3. The sum of q1" and r1" is 3 in the (SiR^{22"}_{q1"}R^{23"}_{r1"}) unit.

q1" is each independently an integer of preferably 1 to 3, more preferably 2 to 3, and still more preferably 3 for each (SiR^{22"}_{q1"}R^{23"}_{r1"}) unit.

R^{22'} is each independently a hydroxyl group or a hydrolyzable group.

R^{22'} is preferably, each independently, a hydrolyzable group.

Preferably, R^{22'} is each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

R^{23'} is each independently a hydrogen atom or a monovalent organic group. Such a monovalent organic group is a monovalent organic group excluding the above hydrolyzable group.

In R^{23'}, the monovalent organic group is preferably a C₁₋₂₀ alkyl group, more preferably a C₁₋₆ alkyl group, and still more preferably a methyl group.

p1' is each independently an integer 0 to 3, q1' is each independently an integer of 0 to 3, and r1' is each independently an integer of 0 to 3. The sum of p', q1', and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1 to 3, an integer of 2 to 3, or 3 for each (SiR²¹'_{p1'}R^{22'}_{q1'}R^{23'}_{r1'}) unit. In a preferred embodiment, p1' is 3.

In one embodiment, q1' is each independently an integer of 1 to 3, preferably an integer of 2 to 3, and more preferably 3 for each (SiR^{21'}_{p1'}R^{22'}_{q1'}R^{23'}_{r1'}) unit.

In one embodiment, p1' is 0, and q1' is each independently an integer of 1 to 3, preferably an integer of 2 to 3, and more preferably 3 for each (SiR^{21'}_{p1'}R^{22'}_{q1'}R^{23'}_{r1'}) unit.

R²² is each independently a hydroxyl group or a hydrolyzable group.

R²² is preferably, each independently, a hydrolyzable group.

Preferably, R²² is each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

R²³ is each independently a hydrogen atom or a monovalent organic group. Such a monovalent organic group is a monovalent organic group excluding the above hydrolyzable group.

In R²³, the monovalent organic group is preferably a C₁₋₂₀ alkyl group, more preferably a C₁₋₆ alkyl group, and still more preferably a methyl group.

p1 is each independently an integer 0 to 3, q1 is each independently an integer of 0 to 3, and r1 is each independently an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferred embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and still more preferably 3 for each (SiR²¹ₚ₁R²²_{q1}R²³ᵣ₁) unit.

In the above formula, R^{b1} is each independently a hydroxyl group or a hydrolyzable group.

R^{b1} is preferably, each independently, a hydrolyzable group.

Preferably, R^{b1} is each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

In the above formula, R^{c1} is each independently a hydrogen atom or a monovalent organic group. Such a monovalent organic group is a monovalent organic group excluding the above hydrolyzable group.

In R^{c1}, the monovalent organic group is preferably a C₁₋₂₀ alkyl group, more preferably a C₁₋₆ alkyl group, and still more preferably a methyl group.

k1 is each independently an integer 0 to 3, l1 is each independently an integer of 0 to 3, and m1 is each independently an integer of 0 to 3. The sum of k1, l1, and m1 is 3 in the (SiR^{a1}ₖ₁R^{b1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferred embodiment, k1 is 3.

In the above formulae (B1) and (B2), when R^{Si} is a group represented by the formula (S3), preferably, at least two Si atoms to which a hydroxyl group or a hydrolyzable group is bonded are present in the end moieties of the formula (B1) and the formula (B2).

In a preferred embodiment, the group represented by the formula (S3) has any one of -Z¹-SiR²²_{q1}R²³ᵣ₁ (wherein q1 is an integer of 1 to 3, preferably 2 or 3, and more preferably 3, and r1 is an integer of 0 to 2), -Z^{1'}-SiR^{22'}_{q1'}R^{23'}_{r1'} (wherein q1' is an integer of 1 to 3, preferably 2 or 3, and more preferably 3, and r1' is an integer of 0 to 2), and -Z^{1"}-SiR^{22"}_{q1"}R^{23"}_{r1"} (wherein q1" is an integer of 1 to 3, preferably 2 or 3, and more preferably 3, and r1" is an integer of 0 to 2). Z¹, Z^{1'}, Z^{1"}, R²², R²³, R^{22'}, R^{23'}, R^{22"}, and R^{23"} are the same as defined above.

In a preferred embodiment, when R^{21'} is present in the formula (S3), q1" is an integer of 1 to 3, preferably 2 or 3, and more preferably 3 in at least one, preferably all of R^{21'} groups.

In a preferred embodiment, when R²¹ is present in the formula (S3), p1' is 0, and q1' is an integer of 1 to 3, preferably 2 or 3, and more preferably 3 in at least one, preferably all of R²¹ groups.

In a preferred embodiment, when R^{a1} is present in the formula (S3), p1 is 0, and q1 is an integer of 1 to 3, preferably 2 or 3, and more preferably 3 in at least one, preferably all of R^{a1} groups.

In a preferred embodiment, in the formula (S3), k1 is 2 or 3, preferably 3, p1 is 0, and q1 is 2 or 3, preferably 3.

R^{d1} is each independently -Z²-CR³¹ₚ₂R³²_{q2}R³³ᵣ₂.

Z² is each independently a single bond, an oxygen atom, or a divalent organic group. The structure denoted as Z² hereinafter is bonded to (CR³¹ₚ₂R³²_{q2}R³³ᵣ₂) on its right side.

In a preferred embodiment, Z² is a divalent organic group.

Z² is preferably a C₁₋₆ alkylene group, -(CH₂)_{z5}-O-(CH₂)_{z6}-(wherein z5 is an integer of 0 to 6, such as an integer of 1 to 6, and z6 is an integer of 0 to 6, such as an integer of 1 to 6), or -(CH₂)_{z7}-phenylene-(CH₂)_{z8}- (wherein z7 is an integer of 0 to 6, such as an integer of 1 to 6, and z8 is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z² is a C₁₋₆ alkylene group or -(CH₂)_{z7}-phenylene-(CH₂)_{z8}-, preferably -phenylene-(CH₂)_{z8}-. When Z² is such a group, light resistance, in particular ultraviolet resistance, can be further enhanced.

In another preferred embodiment, Z² is a C₁₋₃ alkylene group. In one embodiment, Z² may be -CH₂CH₂CH₂-. In another embodiment, Z² may be -CH₂CH₂-.

R³¹ is each independently -Z^{2'}-CR^{32'}_{q2'}R^{33'}_{r2'}.

Z^{2'} is each independently a single bond, an oxygen atom, or a divalent organic group. The structure denoted as Z^{2'} hereinafter is bonded to (CR^{32'}_{q2'}R^{33'}_{r2'}) on its right side.

Z^{2'} is preferably a C₁₋₆ alkylene group, -(CH₂)_{z5'}-O-(CH₂)_{z6'}- (wherein z5' is an integer of 0 to 6, such as an integer of 1 to 6, and z6' is an integer of 0 to 6, such as an integer of 1 to 6), or -(CH₂)_{z7'}-phenylene-(CH₂)_{z8'}-(wherein z7' is an integer of 0 to 6, such as an integer of 1 to 6, and z8' is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z^{2'} is a C₁₋₆ alkylene group or -(CH₂)_{z7'}-phenylene-(CH₂)_{z8'}-, preferably -phenylene-(CH₂)_{z8'}-. When Z^{2'} is such a group, light resistance, in particular ultraviolet resistance, can be further enhanced.

In another preferred embodiment, Z^{2'} is a C₁₋₃ alkylene group. In one embodiment, Z^{2'} may be -CH₂CH₂CH₂-. In another embodiment, Z^{2'} may be -CH₂CH₂-.

R^{32'} is each independently -Z³-SiR³⁴ₙ₂R³⁵₃₋ₙ₂.

Z³ is each independently a single bond, an oxygen atom, or a divalent organic group. The structure denoted as Z³ hereinafter is bonded to (SiR³⁴ₙ₂R³⁵₃₋ₙ₂) on its right side.

In one embodiment, Z³ is an oxygen atom.

In one embodiment, Z³ is a divalent organic group.

Z³ is preferably a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or -(CH₂)_{z7"}-phenylene-(CH₂)_{z8"}-(wherein z7" is an integer of 0 to 6, such as an integer of 1 to 6, and z8" is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z³ is a C₁₋₆ alkylene group or -(CH₂)_{z7"}-phenylene-(CH₂)_{z8"}-, preferably -phenylene-(CH₂)_{z8"}-. When Z³ is such a group, light resistance, in particular ultraviolet resistance, can be further enhanced.

In another preferred embodiment, Z³ is a C₁₋₃ alkylene group. In one embodiment, Z³ may be -CH₂CH₂CH₂-. In another embodiment, Z³ may be -CH₂CH₂-.

R³⁴ is each independently a hydroxyl group or a hydrolyzable group.

R³⁴ is preferably, each independently, a hydrolyzable group.

Preferably, R³⁴ is each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

R³⁵ is each independently a hydrogen atom or a monovalent organic group. Such a monovalent organic group is a monovalent organic group excluding the above hydrolyzable group.

In R³⁵, the monovalent organic group is preferably a C₁₋₂₀ alkyl group, more preferably a C₁₋₆ alkyl group, and still more preferably a methyl group.

In the above formula, n2 is each independently an integer of 0 to 3 for each (SiR³⁴ₙ₂R³⁵₃₋ₙ₂) unit. However, when R^{Si} is a group represented by the formula (S4), the end moieties of the formula (B1) and the formula (B2) have at least one (SiR³⁴ₙ₂R³⁵₃₋ₙ₂) unit wherein n2 is 1 to 3. That is, in such end moieties, not all n2 are 0 at the same time. In other words, in the end moieties of the formula (B1) and the formula (B2), at least one Si atom to which a hydroxyl group or a hydrolyzable group is bonded is present.

n2 is each independently an integer of preferably 1 to 3, more preferably 2 to 3, and still more preferably 3 for each (SiR³⁴ₙ₂R³⁵₃₋ₙ₂) unit .

R^{33'} is each independently a hydrogen atom, a hydroxyl group, or a monovalent organic group. Such a monovalent organic group is a monovalent organic group excluding the above hydrolyzable group.

In R^{33'}, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

q2' is each independently an integer of 0 to 3, and r2' is each independently an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, and still more preferably 3 for each (CR^{32'}_{q2'}R^{33'}_{r2'}) unit.

R³² is each independently -Z³-SiR³⁴ₙ₂R³⁵₃₋ₙ₂. Such -Z³-SiR³⁴ₙ₂R³⁵₃₋ₙ₂ has the same definition as described for R^{32'}.

R^{33'} is each independently a hydrogen atom, a hydroxyl group, or a monovalent organic group. Such a monovalent organic group is a monovalent organic group excluding the above hydrolyzable group.

In R³³, the monovalent organic group is preferably a C₁₋₂₀ alkyl group or - (CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

p2 is each independently an integer of 0 to 3, q2 is each independently an integer of 0 to 3, and r2 is each independently an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferred embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and still more preferably 3 for each (CR³¹ₚ₂R³²_{q2}R³³ᵣ₂) unit.

R^{e1} is each independently -Z³-SiR³⁴ₙ₂R³⁵₃₋ₙ₂. Such -Z³-SiR³⁴ₙ₂R³⁵₃₋ₙ₂ has the same definition as described for R^{32'}.

R^{f1} is each independently a hydrogen atom, a hydroxyl group, or a monovalent organic group. Such a monovalent organic group is a monovalent organic group excluding the above hydrolyzable group.

In R^{f1}, the monovalent organic group is preferably a C₁₋₂₀ alkyl group or - (CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R^{f1} is a hydroxyl group.

In another embodiment, R^{f1} is a monovalent organic group, preferably a C₁₋₂₀ alkyl group, and more preferably a C₁₋₆ alkyl group.

k2 is each independently an integer 0 to 3, l2 is each independently an integer of 0 to 3, and m2 is each independently an integer of 0 to 3. The sum of k2, l2, and m2 is 3 in the (CR^{d1}ₖ₂R^{e1}ₗ₂R^{f1}ₘ₂) unit.

In the above formulae (B1) and (B2), when R^{Si} is a group represented by the formula (S4), preferably, at least two Si atoms to which a hydroxyl group or a hydrolyzable group is bonded are present in the end moieties of the formula (B1) and the formula (B2).

In one embodiment, when R^{Si} is a group represented by the formula (S4), 2 or more, for example, 2 to 27, preferably 2 to 9, more preferably 2 to 6, still more preferably 2 to 3, and particularly preferably 3 (SiR³⁴ₙ₂R³⁵₃₋ₙ₂) units wherein n2 is 1 to 3, preferably 2 or 3, and more preferably 3 are present in each end moiety of the formula (B1) and the formula (B2).

In a preferred embodiment, when R^{32'} is present in the formula (S4), n2 is an integer of 1 to 3, preferably 2 or 3, and more preferably 3 in at least one, preferably all of R^{32'} groups.

In a preferred embodiment, when R³² is present in the formula (S4), n2 is an integer of 1 to 3, preferably 2 or 3, and more preferably 3 in at least one, preferably all of R³² groups.

In a preferred embodiment, when R^{e1} is present in the formula (S4), n2 is an integer of 1 to 3, preferably 2 or 3, and more preferably 3 in at least one, preferably all of R^{a1} groups.

In a preferred embodiment, in the formula (S4), k2 is 0, l2 is 2 or 3, preferably 3, and n2 is 2 or 3, preferably 3.

R^{g1} and R^{h1} are each independently -Z⁴-SiR²⁵ₙ₁R²⁶₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂. Here, R²⁵, R²⁶, R^{a1}, R^{b2}, R^{c1}, R^{d1}, R^{e1}, R^{f1}, n1, k1, l1, m1, k2, l2, and m2 are the same as defined above.

In a preferred embodiment, R^{g1} and R^{h1} are each independently -Z⁴-SiR²⁵ₙ₁R²⁶₃₋ₙ₁.

Z⁴ is each independently a single bond, an oxygen atom, or a divalent organic group. The structure denoted as Z⁴ hereinafter is bonded to (SiR²⁵ₙ₁R²⁶₃₋ₙ₁) on its right side.

In one embodiment, Z⁴ is an oxygen atom.

In one embodiment, Z⁴ is a divalent organic group.

Z⁴ is preferably a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or -(CH₂)_{z7"}-phenylene-(CH₂)_{z8"}-(wherein z7" is an integer of 0 to 6, such as an integer of 1 to 6, and z8" is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z⁴ is a C₁₋₆ alkylene group or -(CH₂)_{z7"}-phenylene-(CH₂)_{z8"}-, preferably -phenylene-(CH₂)_{z8"}-. When Z³ is such a group, light resistance, in particular ultraviolet resistance, can be further enhanced.

In another preferred embodiment, Z⁴ is a C₁₋₃ alkylene group. In one embodiment, Z⁴ may be -CH₂CH₂CH₂-. In another embodiment, Z⁴ may be -CH₂CH₂-.

In one embodiment, R^{Si} is a group represented by the formula (S2), (S3), (S4), or (S5). These compounds are capable of forming a cured product layer having high surface lubricity.

In one embodiment, R^{Si} is a group represented by the formula (S3), (S4), or (S5). These compounds have a plurality of hydrolyzable groups at one end, and are therefore capable of forming a cured product layer that firmly adheres to a substrate and that has high abrasion durability.

In one embodiment, R^{Si} is a group represented by the formula (S3) or (S4). These compounds can have a plurality of hydrolyzable groups branched from one Si atom or C atom at one end, and are therefore capable of forming a cured product layer having higher abrasion durability.

In one embodiment, R^{Si} is a group represented by the formula (S1).

In one embodiment, R^{Si} is a group represented by the formula (S2).

In one embodiment, R^{Si} is a group represented by the formula (S3).

In one embodiment, R^{Si} is a group represented by the formula (S4).

In one embodiment, R^{Si} is a group represented by the formula (S5).

In the above formulae (B1) and (B2), X^{Z} is interpreted as a linker connecting fluoropolyether moieties (R^{F3} and R^{F4}), which mainly provide water-repellency, surface lubricity, and the like, to a moiety (R^{Si}) providing a binding ability to a substrate. Accordingly, such X^{Z} may be a single bond or any group as long as the compounds represented by the formulae (B1) and (B2) can stably exist.

In the above formula (B1), α is an integer of 1 to 9, and β is an integer of 1 to 9. These α and β may vary depending on the valence of X^{Z}. The sum of α and β is the same as the valence of X^{Z}. For example, when X^{Z} is a decavalent organic group, the sum of α and β is 10; for example, a case where α is 9 and β is 1, α is 5 and β is 5, or α is 1 and β is 9, can be considered. When X^{Z} is a divalent organic group, α and β are 1.

In the above formula (B2), γ is an integer of 1 to 9. γ may vary depending on the valence of X^{Z}. That is, γ is a value obtained by subtracting 1 from the valence of X^{Z}.

X^{Z} is each independently a single bond or a di- to decavalent organic group.

The di- to decavalent organic group in X^{Z} is preferably a di- to octavalent organic group. In one embodiment, such a di- to decavalent organic group is preferably a di- to tetravalent organic group, and more preferably a divalent organic group. In another embodiment, such a di- to decavalent organic group is preferably a tri- to octavalent organic group, and more preferably a tri- to hexavalent organic group.

In one embodiment, X^{Z} is a single bond or a divalent organic group, α is 1, and β is 1.

In one embodiment, X^{Z} is a single bond or a divalent organic group, and γ is 1.

In one embodiment, X^{Z} is a tri- to hexavalent organic group, α is 1, and β is 2 to 5.

In one embodiment, X^{Z} is a tri- to hexavalent organic group, and γ is 2 to 5.

In one embodiment, X^{Z} is a trivalent organic group, α is 1, and β is 2.

In one embodiment, X^{Z} is a trivalent organic group, and γ is 2.

When X^{Z} is a single bond or a divalent organic group, the formulae (B1) and (B2) are represented by the following formulae (B1') and (B2'), respectively.

R^{F3} - X^{Z} - R^{Si} (B1')

R^{Si} - X^{Z} - RF⁴ - X^{Z} - R^{Si} (B2')

In one embodiment, X^{Z} is a single bond.

In another embodiment, X^{Z} is a divalent organic group.

In one embodiment, examples of X^{Z} include a single bond or a divalent organic group represented by the following formula:

-(R⁵¹)ₚ₅-(X⁵¹)_{q5}-

wherein
R⁵¹ represents a single bond, -(CH₂)ₛ₅-, or an o-, m- or p-phenylene group, and is preferably -(CH₂)ₛ₅-,
s5 is an integer of 1 to 20, preferably 1 to 6, more preferably 1 to 3, and still more preferably 1 or 2,
X⁵¹ represents -(X⁵²)ₗ₅-,
X⁵² each independently represents a group selected from the group consisting of -O-, -S-, an o-, m- or p-phenylene group, -C(O)O-, -Si(R⁵³)₂-, -(Si(R⁵³)₂O)ₘ₅-Si(R⁵³)₂-, -CONR⁵⁴-, -O-CONR⁵⁴-, -NR⁵⁴- and -(CH₂)ₙ₅-,
R⁵³ each independently represents a phenyl group, a C₁₋₆ alkyl group, or a C₁₋₆ alkoxy group, is preferably a phenyl group or a C₁₋₆ alkyl group, and is more preferably a methyl group,
R⁵⁴ each independently represents a hydrogen atom, a phenyl group, or a C₁₋₆ alkyl group (preferably a methyl group),
m5 is each independently at each occurrence an integer of 1 to 100, preferably an integer of 1 to 20,
n5 is each independently at each occurrence an integer of 1 to 20, preferably an integer of 1 to 6, and more preferably an integer of 1 to 3,
l5 is an integer of 1 to 10, preferably an integer of 1 to 5, and more preferably an integer of 1 to 3,
p5 is 0 or 1, and
q5 is 0 or 1,
where at least one of p5 and q5 is 1, and the occurrence order of the respective repeating units enclosed in parentheses provided with p5 or q5 is not limited. Here, X^{Z} (typically a hydrogen atom of X^{Z}) is optionally substituted with one or more substituents selected from a fluorine atom, a C₁₋₃ alkyl group, and a C₁₋₃ fluoroalkyl group. In a preferred embodiment, X^{Z} is not substituted with any of these groups.

In a preferred embodiment, X^{Z} is each independently - (R⁵¹)ₚ₅-(X⁵¹)_{q5}-R⁵²-. R⁵² represents a single bond, -(CH₂)ₜ₅-, or an o-, m- or p-phenylene group, and is preferably -(CH₂)ₜ₅-. t5 is an integer of 1 to 20, preferably an integer of 2 to 6, and more preferably an integer of 2 to 3. Here, R⁵² (typically a hydrogen atom of R⁵²) is optionally substituted with one or more substituents selected from a fluorine atom, a C₁₋₃ alkyl group, and a C₁₋₃ fluoroalkyl group. In a preferred embodiment, R⁵⁶ is not substituted with any of these groups.

Preferably, X^{Z} may be each independently
a single bond,
a C₁₋₂₀ alkylene group,
-R⁵¹-X⁵³-R⁵²-, or
-X⁵⁴-R⁵-
wherein R⁵¹ and R⁵² are the same as defined above;
X⁵³ represents
   -O-,
   -S-,
   -C(O)O-,
   -CONR⁵⁴-,
   -O-CONR⁵⁴-,
   -Si(R⁵³)₂-,
   - (Si(R⁵³)₂O)ₘ₅-Si(R⁵³)₂-,
   -O-(CH₂)ᵤ₅-(Si(R⁵³)₂O)ₘ₅-Si(R⁵³)₂-,
   -O-(CH₂)ᵤ₅-Si(R⁵³)₂-O-Si(R⁵³)₂-CH₂CH₂-Si(R⁵³)₂-O-Si(R⁵³)₂-,
   -O-(CH₂)ᵤ₅-Si(OCH₃)₂OSi(OCH₃)₂-,
   -CONR⁵⁴-(CH₂)ᵤ₅-(Si(R⁵³)₂O)ₘ₅-Si(R⁵³)₂-,
   -CONR⁵⁴-(CH₂)ᵤ₅-N(R⁵⁴)-, or
   -CONR⁵⁴-(o-, m- or p-phenylene) -Si(R⁵³)₂-,
wherein R⁵³, R⁵⁴, and m5 are the same as defined above, and
u5 is an integer of 1 to 20, preferably an integer of 2 to 6, and more preferably an integer of 2 to 3; and
X⁵⁴ represents
   -S-,
   -C(O)O-,
   -CONR⁵⁴-,
   -O-CONR⁵⁴-,
   -CONR⁵⁴-(CH₂)ᵤ₅-(Si(R⁵⁴)₂O)ₘ₅-Si(R⁵⁴)₂-,
   -CONR⁵⁴-(CH₂)ᵤ₅-N(R⁵⁴)-, or
   -CONR⁵⁴-(o-, m- or p-phenylene) -Si(R⁵⁴)₂-,
wherein individual reference symbols are the same as defined above.

More preferably, X^{Z} is each independently
a single bond,
a C₁₋₂₀ alkylene group,
   -(CH₂)ₛ₅-X⁵³-,
   -(CH₂)ₛ₅-X⁵³-(CH₂)ₜ₅-,
   -X⁵⁴-, or
   -X⁵⁴-(CH₂)ₜ₅-,
wherein X⁵³, X⁵⁴, s5, and t5 are the same as defined above.

More preferably, X^{Z} may be each independently
a single bond,
a C₁₋₂₀ alkylene group,
-(CH₂)ₛ₅-X⁵³-(CH₂)ₜ₅-, or
-X⁵⁴-(CH₂)ₜ₅-,
wherein individual reference symbols are the same as defined above.

In a preferred embodiment, X^{Z} may be each independently
a single bond,
a C₁₋₂₀ alkylene group,
-(CH₂)ₛ₅-X⁵³-, or
-(CH₂)ₛ₅-X⁵³-(CH₂)ₜ₅-,
wherein
X⁵³ is -O-, -CONR⁵⁴-, or -O-CONR⁵⁴-,
R⁵⁴ each independently represents a hydrogen atom, a phenyl group, or a C₁₋₆ alkyl group,
s5 is an integer of 1 to 20, and
t5 is an integer of 1 to 20.

In a preferred embodiment, X^{Z} may be each independently
-(CH₂)ₛ₅-O-(CH₂)ₜ₅- or
-CONR⁵⁴-(CH₂)ₜ₅-,
wherein
R⁵⁴ each independently represents a hydrogen atom, a phenyl group, or a C₁₋₆ alkyl group,
s5 is an integer of 1 to 20, and
t5 is an integer of 1 to 20.

In one embodiment, X^{Z} is each independently
a single bond,
a C₁₋₂₀ alkylene group,
-(CH₂)ₛ₅-O-(CH₂)ₜ₅-,
-(CH₂)ₛ₅-(Si(R⁵³)₂O)ₘ₅-Si(R⁵³)₂-(CH₂)ₜ₅-,
-(CH₂)ₛ₅-O-(CH₂)ᵤ₅-(Si(R⁵³)₂O)ₘ₅-Si(R⁵³)₂-(CH₂)ₜ₅-, or
-(CH₂)ₛ₅-O-(CH₂)ₜ₅-Si(R⁵³)₂-(CH₂)ᵤ₅-Si(R⁵³)₂-(CᵥH₂ᵥ)-,
wherein R⁵³, m5, s5, t5, and u5 are the same as defined above, and v5 is an integer of 1 to 20, preferably an integer of 2 to 6, and more preferably an integer of 2 to 3.

In the above formula, -(CᵥH₂ᵥ)- may be linear or branched, and it may be, for example, -CH₂CH₂-, -CH₂CH₂CH₂-, -CH(CH₃)-, or -CH(CH₃)CH₂-.

X^{Z} is each independently optionally substituted with one or more substituents selected from a fluorine atom, a C₁₋₃ alkyl group, and a C₁₋₃ fluoroalkyl group (preferably a C₁₋₃ perfluoroalkyl group). In one embodiment, X^{Z} is unsubstituted.

In each formula, X^{Z} is bonded to R^{F3} or R^{F4} on its left side, and bonded to R^{Si} on its right side.

In one embodiment, X^{Z} may be each independently a group other than an -O-C₁₋₆ alkylene group.

In another embodiment, examples of X^{Z} include the following groups: 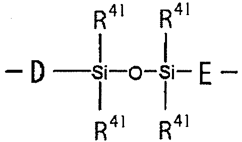 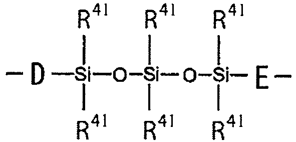 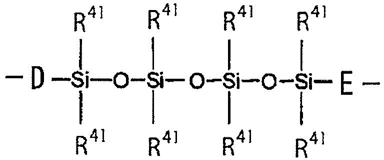 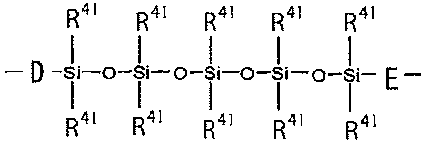 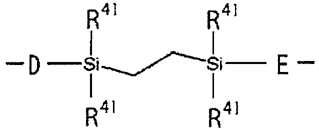 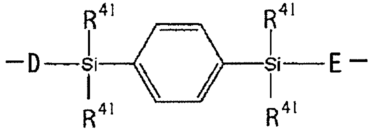 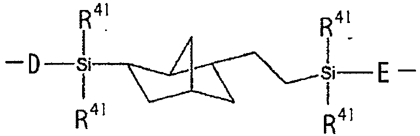
wherein R⁴¹ is each independently a hydrogen atom, a phenyl group, an alkyl group having 1 to 6 carbon atoms, or a C₁₋₆ alkoxy group, preferably a methyl group;
D is a group selected from

   -CH₂O(CH₂)₂-,

   -CH₂O(CH₂)₃-,

   -CF₂O(CH₂)₃-,

   -(CH₂)₂-,

   -(CH₂)₃-,

   -(CH₂)₄-,

   -CONH-(CH₂)₃-,

   -CON(CH₃)-(CH₂)₃-,

   -CON(Ph)-(CH₂)₃- (wherein Ph means phenyl), and 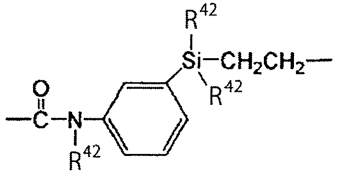
wherein R⁴² each independently represents a hydrogen atom, a C₁₋₆ alkyl group, or a C₁₋₆ alkoxy group, preferably a methyl group or a methoxy group, and more preferably a methyl group;
E is -(CH₂)ₙ- (n is an integer of 2 to 6); and
D is bonded to R^{F3} or R^{F4} of the molecular backbone, and E is bonded to R^{Si}.

Specific examples of X^{Z} include:
a single bond,

-CH₂OCH₂-,

-CH₂O(CH₂)₂-,

-CH₂O(CH₂)₃-,

-CH₂O(CH₂)₄-,

-CH₂O(CH₂)₅-,

-CH₂O(CH₂)₆-,

-CH₂O(CH₂)₃Si(CH₃)₂OSi(CH₃)₂(CH₂)₂-,

-CH₂O(CH₂)₃Si(CH₃)₂OSi(CH₃)₂OSi(CH₃)₂(CH₂)₂-,

-CH₂O(CH₂)₃Si(CH₃)₂O(Si(CH₃)₂O)₂Si(CH₃)₂(CH₂)₂-,

-CH₂O(CH₂)₃Si(CH₃)₂O(Si(CH₃)₂O)₃Si(CH₃)₂(CH₂)₂-,

-CH₂O(CH₂)₃Si(CH₃)₂O(Si(CH₃)₂O)₁₀Si(CH₃)₂(CH₂)₂-,

-CH₂O(CH₂)₃Si(CH₃)₂O(Si(CH₃)₂O)₂₀Si(CH₃)₂(CH₂)₂-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-

CH₂OCH₂(CH₂)₇CH₂Si(OCH₃)₂OSi(OCH₃)₂(CH₂)₂Si(OCH₃)₂OSi(OCH₃)₂(CH₂) ₂-,

-CH₂OCH₂CH₂CH₂Si(OCH₃)₂OSi(OCH₃)₂(CH₂)₃-,

-CH₂OCH₂CH₂CH₂Si(OCH₂CH₃)₂OSi(OCH₂CH₃)₂(CH₂)₃-,

-CH₂OCH₂CH₂CH₂Si(OCH₃)₂OSi(OCH₃)₂(CH₂)₂-,

-CH₂OCH₂CH₂CH₂Si(OCH₂CH₃)₂OSi(OCH₂CH₃)₂(CH₂)₂-,

-(CH₂)₂-Si(CH₃)₂-(CH₂)₂-,

-CH₂-,

- (CH₂)₂-,

- (CH₂)₃-,

-(CH₂)₄-,

- (CH₂)₅-,

- (CH₂)₆-,

-CO-,

-CONH-,

-CONH-CH₂-,

-CONH-(CH₂)₂-,

-CONH-(CH₂)₃-,

-CONH-(CH₂)₄-,

-CONH-(CH₂)₅-,

-CONH-(CH₂)₆-,

-CON(CH₃)-CH₂-,

-CON(CH₃)-(CH₂)₂-,

-CON(CH₃)-(CH₂)₃-,

-CON(CH₃)-(CH₂)₄-,

-CON(CH₃)-(CH₂)₅-,

-CON(CH₃)-(CH₂)₆-,

-CON(Ph)-CH₂- (wherein Ph means phenyl),

-CON(Ph)-(CH₂)₂- (wherein Ph means phenyl),

-CON(Ph)-(CH₂)₃- (wherein Ph means phenyl),

-CON(Ph)-(CH₂)₄- (wherein Ph means phenyl),

-CON(Ph)-(CH₂)₅- (wherein Ph means phenyl),

-CON(Ph)-(CH₂)₆- (wherein Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-S-(CH₂)₃-,

-(CH₂)₂S(CH₂)₃-,

-CONH-(CH₂)₃Si(CH₃)₂OSi(CH₃)₂(CH₂)₂-,

-CONH-(CH₂)₃Si(CH₃)₂OSi(CH₃)₂OSi(CH₃)₂(CH₂)₂-,

-CONH-(CH₂)₃Si(CH₃)₂O(Si(CH₃)₂O)₂Si(CH₃)₂(CH₂)₂-,

-CONH-(CH₂)₃Si(CH₃)₂O(Si(CH₃)₂O)₃Si(CH₃)₂(CH₂)₂-,

-CONH-(CH₂)₃Si(CH₃)₂O(Si(CH₃)₂O)₁₀Si(CH₃)₂(CH₂)₂-,

-CONH-(CH₂)₃Si(CH₃)₂O(Si(CH₃)₂O)₂₀Si(CH₃)₂(CH₂)₂-,

-C(O)O-(CH₂)₃-,

-C(O)O-(CH₂)₆-,

-CH₂-O-(CH₂)₃-Si(CH₃)₂-(CH₂)₂-Si(CH₃)₂-(CH₂)₂-,

-CH₂-O-(CH₂)₃-Si(CH₃)₂-(CH₂)₂-Si(CH₃)₂-CH(CH₃)-,

-CH₂-O-(CH₂)₃-Si(CH₃)₂-(CH₂)₂-Si(CH₃)₂-(CH₂)₃-,

-CH₂-O-(CH₂)₃-Si(CH₃)₂-(CH₂)₂-Si(CH₃)₂-CH(CH₃)-CH₂-,

-OCH₂-,

-O(CH₂)₃-,

-OCFHCF₂-,

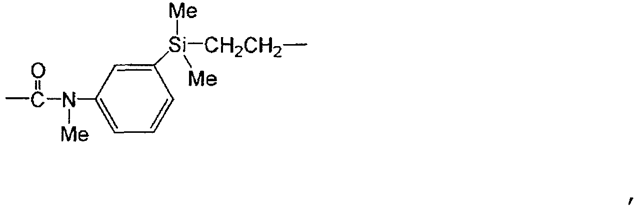

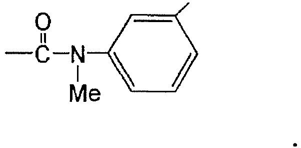

In still another embodiment, X^{Z} is each independently a group represented by the formula: -(R¹⁶)ₓ₁-(CFR¹⁷)_{y1}-(CH₂)_{z1}-. In the formula, x1, y1, and z1 are each independently an integer of 0 to 10, the sum of x1, y1, and z1 is 1 or more, and the occurrence order of the respective repeating units enclosed in parentheses is not limited in the formula.

In the above formula, R¹⁶ is each independently an oxygen atom, phenylene, carbazolylene, -NR¹⁸- (in the formula, R¹⁸ represents a hydrogen atom or an organic group), or a divalent organic group. Preferably, R¹⁸ is an oxygen atom or a divalent polar group.

Examples of the "divalent polar group" include, but are not limited to, -C(O)-, -C(=NR¹⁹)-, and -C(O)NR¹⁹- (in these formulae, R¹⁹ represents a hydrogen atom or a lower alkyl group). The "lower alkyl group" is, for example, an alkyl group having 1 to 6 carbon atoms, such as methyl, ethyl, or n-propyl, that is optionally substituted with one or more fluorine atoms.

In the above formula, R¹⁷ is each independently a hydrogen atom, a fluorine atom, or a lower fluoroalkyl group, and is preferably a fluorine atom. The "lower fluoroalkyl group" is, for example, a fluoroalkyl group having 1 to 6 carbon atoms, preferably 1 to 3 carbon atoms, preferably a perfluoroalkyl group having 1 to 3 carbon atoms, more preferably a trifluoromethyl group or a pentafluoroethyl group, and still more preferably a trifluoromethyl group.

In still another embodiment, examples of X^{Z} include the following groups: 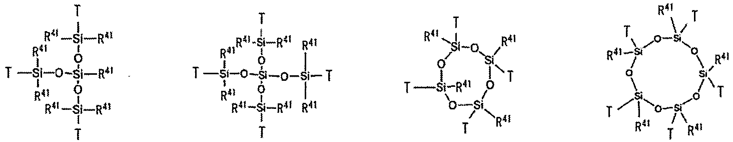 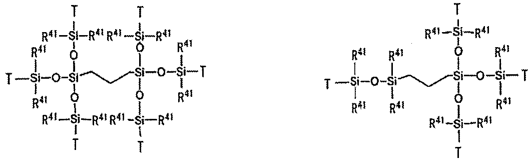 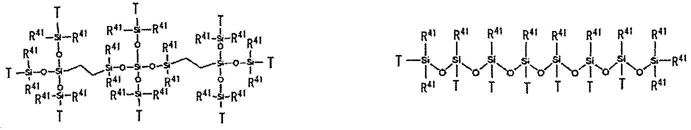 wherein
R⁴¹ is each independently a hydrogen atom, a phenyl group, an alkyl group having 1 to 6 carbon atoms, or a C₁₋₆ alkoxy group, and is preferably a methyl group;
some of the groups of T in each X^{Z} group are the following groups bonded to R^{F3} or R^{F4} of the molecular backbone:

   -CH₂O(CH₂)₂-,

   -CH₂O(CH₂)₃-,

   -CF₂O(CH₂)₃-,

   -(CH₂)₂-,

   -(CH₂)₃-,

   -(CH₂)₄-,

   -CONH-(CH₂)₃-,

   -CON(CH₃)-(CH₂)₃-,

   -CON(Ph)-(CH₂)₃-

   (wherein Ph means phenyl), or

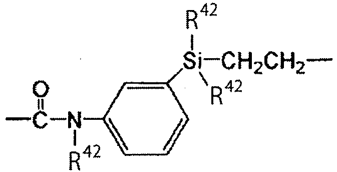

wherein R⁴² each independently represents a hydrogen atom, a C₁₋₆ alkyl group, or a C₁₋₆ alkoxy group, preferably a methyl group or a methoxy group, and more preferably a methyl group; and
some other groups of T are bonded to R^{Si} of the molecular backbone, and the remaining groups of T, if present, are each independently a methyl group, a phenyl group, a C₁₋₆ alkoxy group, or a radical scavenging group or an UV absorbing group.

The radical scavenging group is not limited as long as it can scavenge a radical generated by light irradiation, and examples thereof include residues of benzophenones, benzotriazoles, benzoates, phenyl salicylates, crotonic acids, malonates, organoacrylates, hindered amines, hindered phenols, and triazines.

The UV absorbing group is not limited as long as it can absorb ultraviolet rays, and examples thereof include residues of benzotriazoles, hydroxybenzophenones, esters of substituted and unsubstituted benzoic acid or salicylic acid compounds, acrylates or alkoxy cinnamates, oxamides, oxanilides, benzoxazinones, and benzoxazoles.

In a preferred embodiment, examples of the preferred radical scavenging group or UV absorbing group include:

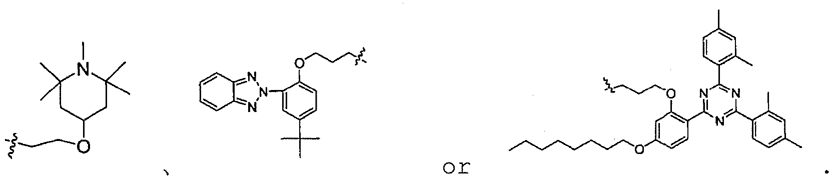

In this embodiment, X^{Z} may be each independently a tri-to decavalent organic group.

In still another embodiment, examples of X^{Z} include the following group: 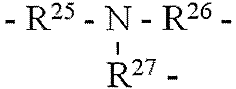
wherein R²⁵, R²⁶, and R²⁷ are each independently a di- to hexavalent organic group; and
R²⁵ is bonded to at least one R^{F3}, and R²⁶ and R²⁷ are each bonded to at least one R^{Si}.

In one embodiment, R²⁵ is a single bond, a C₁₋₂₀ alkylene group, a C₃₋₂₀ cycloalkylene group, a C₅₋₂₀ arylene group, - R⁵⁷-X⁵⁸-R⁵⁹-, -X⁵⁸-R⁵⁹-, or -R⁵⁷-X⁵⁸-. R⁵⁷ and R⁵⁹ are each independently a single bond, a C₁₋₂₀ alkylene group, a C₃₋₂₀ cycloalkylene group, or a C₅₋₂₀ arylene group. X⁵⁸ is -O-, - S-, -CO-, -O-CO-, or -COO-.

In one embodiment, R²⁶ and R²⁷ are each independently a hydrocarbon, or a group having at least one atom selected from N, O, and S at a terminal or in the main chain of a hydrocarbon, and preferred examples thereof include a C₁₋₆ alkyl group, -R³⁶-R³⁷-R³⁶, and -R³⁶-CHR³⁸₂-. Here, R³⁶ is each independently a single bond or an alkyl group having 1 to 6 carbon atoms, preferably an alkyl group having 1 to 6 carbon atoms. R³⁷ is N, O, or S, preferably N or O. R³⁸ is -R⁴⁵-R⁴⁶-R⁴⁵-, -R⁴⁶-R⁴⁵-, or -R⁴⁵-R⁴⁶-. Here, R⁴⁵ is each independently an alkyl group having 1 to 6 carbon atoms. R⁴⁶ is N, O, or S, preferably O.

In this embodiment, X^{Z} may be each independently a tri-to decavalent organic group.

In still another embodiment, examples of X^{Z} include a group represented by the following: 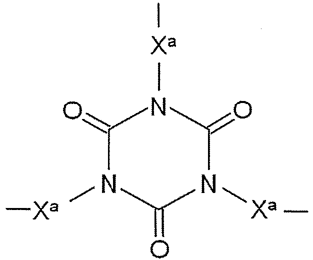 wherein X^{a} is a single bond or a divalent organic group.

X^{a} is a single bond or divalent linking group directly bonded to the isocyanuric ring. X^{a} is preferably a single bond, an alkylene group, or a divalent group containing at least one bond selected from the group consisting of an ether bond, an ester bond, an amide bond, and a sulfide bond, and more preferably a single bond, an alkylene group having 1 to 10 carbon atoms, or a divalent hydrocarbon group having 1 to 10 carbon atoms and containing at least one bond selected from the group consisting of an ether bond, an ester bond, an amide bond, and a sulfide bond.

X^{a} is still more preferably a group represented by the following formula:

-(CX¹²¹X¹²²)ₓ₁-(X^{a1})_{y1}-(CX¹²³X¹²⁴)_{z1}-

wherein X¹²¹ to X¹²⁴ are each independently H, F, OH, or -OSi(OR¹²¹ )₃, where three R¹²¹ are each independently an alkyl group having 1 to 4 carbon atoms,
X^{a1} is -C(=O)NH-, -NHC(=O)-, -O-, -C(=O)O-, -OC(=O)-, - OC(=O)O-, or -NHC(=O)NH- (each bond is bonded to CX¹²¹X¹²² on its left side), and
x1 is an integer of 0 to 10, y1 is 0 or 1, and z1 is an integer of 1 to 10.

X^{a1} is preferably -O- or -C(=O)O-.

X^{a} is particularly preferably
a group represented by the following formula:

   -(CF₂)ₘ₁₁-(CH₂)ₘ₁₂-O-(CH₂)ₘ₁₃-

   wherein m11 is an integer of 1 to 3, m12 is an integer of 1 to 3, and m13 is an integer of 1 to 3,
a group represented by the following formula:

   -(CF₂)ₘ₁₄-(CH₂)ₘ₁₅-O-CH₂CH(OH)-(CH₂)ₘ₁₆-

   wherein m14 is an integer of 1 to 3, m15 is an integer of 1 to 3, and m16 is an integer of 1 to 3,
a group represented by the following formula:

   -(CF₂)ₘ₁₇-(CH₂)ₘ₁₈-

   wherein m17 is an integer of 1 to 3, and m18 is an integer of 1 to 3,
a group represented by the following formula:

   -(CF₂)ₘ₁₉-(CH₂)ₘ₂₀-O-CH₂CH(OSi(OCH₃)₃)-(CH₂)ₘ₂₁-

   wherein m19 is an integer of 1 to 3, m20 is an integer of 1 to 3, and m21 is an integer of 1 to 3, or
a group represented by the following formula:

   -(CH₂)ₘ₂₂-

   wherein m22 is an integer of 1 to 3.

X^{a} is not limited, and specific examples thereof include -CH₂-, -C₂H₄-, -C₃H₆-, -C₄H₈-, -C₄H₃-O-CH₂-, -CO-O-CH₂-CH(OH)-CH₂-, -(CF₂)ₙ₅- (n5 is an integer of 0 to 4), -(CF₂)ₙ₅-(CH₂)ₘ₅-(n5 and m5 are each independently an integer of 0 to 4), - CF₂CF₂CH₂OCH₂CH(OH)CH₂-, and -CF₂CF₂CH₂OCH₂CH(OSi(OCH₃)₃)CH₂-.

In this embodiment, X^{Z} may be each independently a di- or trivalent organic group.

The average molecular weight of the fluoropolyether group-containing silane compound represented by the above formula (B1) or formula (B2) may be, but is not limited to, 5 × 10² to 1 × 10⁵. In such a range, having an average molecular weight of 1,000 to 32,000, more preferably 1,500 to 8,000, is, more preferred since it provides a good balance among the viscosity of the composition, the solubility of each component, and the physical properties of the cured product. The "average molecular weight" refers to a number average molecular weight, and the "average molecular weight" is a value obtained by ¹⁹F-NMR measurement.

The fluoropolyether group-containing silane compound represented by the above formula (B1) or formula (B2) can be obtained by, for example, methods known per se, such as the methods described in WO 97/07155 A, JP 2008-534696 A, JP 2014-218639 A, JP 2017-82194 A, and others.

In another preferred embodiment, the fluoropolyether group-containing silane compound is a compound represented by the following formula (B3):

R³⁹ⱼ-R³⁸-NR³⁷CO-(R^{F4}-CONR³⁷-R³⁶-NR³⁷CO)ᵣ-R^{F4}-CONR³⁷-R³⁸-R³⁹ⱼ (B3)

wherein
R^{F4} is -Rf⁴ₚ₃-R^{FB}-O_{q3}-,
Rf⁴ is a C₁₋₆ alkylene group optionally substituted with one or more fluorine atoms,
R^{FB} is each independently a divalent fluoropolyether group,
p3 is 0 or 1,
q3 is 0 or 1,
R³⁶ is each independently a divalent organic group,
R³⁷ is each independently a hydrogen atom or a monovalent organic group having 1 to 8 carbon atoms,
R³⁸ is each independently a (j + 1)-valent organic group,
R³⁹ is each independently -SiR²⁵ₙ₁R²⁶₃₋ₙ₁,
R²⁵ is each independently a hydroxyl group or a hydrolyzable group,
R²⁶ is each independently a hydrogen atom or a monovalent organic group,
n1 is each independently an integer of 0 to 3 for each (SiR²⁵ₙ₁R²⁶₃₋ₙ₁) unit,
j is each independently an integer of 1 to 9, and
r is an integer of 1 or more.

In the formula (B3), R^{F4}, Rf⁴, R^{FB}, R²⁵, R²⁶, n1, p3, and q3 are the same as described with respect to the above formulae (B1) and (B2), and include the same embodiments.

In the above formula (B3), R³⁸ is each independently a (j + 1)-valent organic group.

R³⁸ is a group that acts as a linker connecting R³⁹ to the amide bond (CONR³²). R³⁸ each independently at each occurrence represents a (j + 1)-valent organic group. Here, the value of j represents the number of groups containing silicon atoms present at the ends of the above fluoropolyether group-containing silane compound (B3), and the value is in the range of 1 to 9. Thus, R³⁸ independently at each occurrence represents a di- to decavalent organic group. Accordingly, R³⁸ may be any group as long as it is a di- to decavalent organic group that allows the above fluoropolyether group-containing silane compound (B3) to stably exist. Specific examples of R³⁸ are the same as X^{Z} in the above formulae (B1) and (B2), and may include the same embodiments. R³⁸ is preferably a di- to heptavalent, more preferably a di- to tetravalent, and still more preferably a divalent organic group.

It is preferable that R³⁸ does not have a heteroatom or aromatic structure on the molecular chain directly connecting R³⁹ and the amide bond, and it is more preferable that R³⁸ does not have an aromatic structure. R³⁸ is preferably an aliphatic hydrocarbon group that optionally has a heteroatom in some cases, more preferably an unsubstituted aliphatic hydrocarbon, and still more preferably a divalent alkylene group. R³⁸ is more preferably a C₁₋₂₀ alkylene group, still more preferably a C₁₋₆ alkylene group, and particularly specifically a methylene group, an ethylene group, a propylene group, a methylethylene group, a butylene group, a hexamethylene group, or the like. Two R³⁸ present in the above fluoropolyether group-containing silane compound (B3) may be the same as or different from each other, but it is preferable that they are the same since it makes preparation of the compound easier. In addition, while R³⁸ has (j + 1) bonds, it does not matter which of the bonds is used to be bonded to the -C(=O)-NR³⁷ - moiety.

In the above formula (B3), j is each independently an integer of 1 to 9, preferably an integer of 1 to 6, more preferably an integer of 1 to 3, and still more preferably 1.

In the above formula (B3), R³⁶ is each independently a divalent organic group.

R³⁶ is a divalent organic group that connects the structures represented by -C(=O)NR³⁷- positioned at both terminals thereof. The definition of "divalent organic group" is the same as that for the case where R³⁸ is a divalent organic group, and R³⁶ is preferably a divalent alkylene group, more preferably a C₁₋₂₀ alkylene group, still more preferably a C₁₋₆ alkylene group, and particularly specifically a methylene group, an ethylene group, a propylene group, a methylethylene group, a butylene group, a hexamethylene group, or the like. Also, R³⁶ is a group that connects two -C(=O)NR³⁷- moieties, and the two bonds that R³⁶ has, as long as they can prepare a stable compound, may be bonded to either of the -C(=O)NR³⁷- moieties on both sides thereof. For example, when R³⁶ is a methylethylene group (-CH(CH₃)CH₂-) in the formula (B3), the CH₂- portion of the methylethylene group may be bonded to the -C(=O)NR³⁷-moiety on the right side in the formula (B3) or to the - C(=O)NR³⁷- moiety on the left side. The R³⁶ moiety can be introduced by, for example, allowing a diamine to act on a compound having reactive functional groups at both ends of R^{F4} that can form a bond with R³⁸ or R³⁶ via an amide bond. The number of R³⁶ moieties in the molecular chain (in other words, the value of r) can be manipulated by adjusting the quantity relationship of the reactants.

In a preferred embodiment, R³⁸ and R³⁶ are both divalent alkylene groups.

In the above formula (B3), R³⁷ is each independently a hydrogen atom or a monovalent organic group having 1 to 8 carbon atoms.

The monovalent organic group having 1 to 8 carbon atoms in R³⁷ is preferably a C₁₋₈ alkyl group, a C₃₋₈ cycloalkyl group, or a C₅₋₈ aryl group, more preferably a C₁₋₆ alkyl group or a phenyl group, still more preferably a C₁₋₃ alkyl group, and particularly preferably a methyl group.

In one embodiment, R³⁷ is a hydrogen atom.

In one embodiment, R³⁷ is a C₁₋₈ alkyl group, preferably a methyl group.

In the above formula (B3), r is an integer of 1 or more.

In one embodiment, r is preferably an integer of 1 to 100, more preferably an integer of 1 to 10, still more preferably an integer of 1 to 5, such as an integer of 2 to 10, and still more preferably an integer of 2 to 5.

The average molecular weight of the fluoropolyether group-containing silane compound represented by the above formula (B3) may be, but is not limited to, 5 × 10² to 1 × 10⁵. In such a range, having an average molecular weight of 1,000 to 32,000, more preferably 1,500 to 8,000, is more preferred since it provides a good balance among the viscosity of the composition, the solubility of each component, and the physical properties of the cured product. The "average molecular weight" refers to a number average molecular weight, and the "average molecular weight" is a value obtained by ¹⁹F-NMR measurement.

The fluoropolyether group-containing silane compound represented by the above formula (B3) can be produced by, for example, the method described in WO 2021/125058 A or the like.

In one embodiment, the fluoropolyether group-containing silane compound includes a compound represented by the formula (B1) or (B2). For example, the fluoropolyether group-containing silane compound is a compound represented by the formula (B1) or (B2).

In one embodiment, the fluoropolyether group-containing silane compound includes a compound represented by the formula (B1). For example, the fluoropolyether group-containing silane compound is a compound represented by the formula (B1).

In one embodiment, the fluoropolyether group-containing silane compound includes a compound represented by the formula (B2). For example, the fluoropolyether group-containing silane compound is a compound represented by the formula (B2).

In one embodiment, the fluoropolyether group-containing silane compound includes a compound represented by the formula (B3). For example, the fluoropolyether group-containing silane compound is a compound represented by the formula (B3).

In a preferred embodiment, the fluoropolyether group-containing silane compound includes a compound represented by the formula (B2) and/or a compound represented by the formula (B3). For example, the fluoropolyether group-containing silane compound is a compound represented by the formula (B2) and/or a compound represented by the formula (B3).

In another preferred embodiment, the fluoropolyether group-containing silane compound includes a compound represented by the formula (B2) and a compound represented by the formula (B3). For example, the fluoropolyether group-containing silane compound is a compound represented by the formula (B2) and a compound represented by the formula (B3).

The molar ratio of a compound having hydrolyzable silyl groups at both ends (for example, a compound represented by the formula (B2) and a compound represented by the formula (B3)) to a compound having hydrolyzable silyl groups at one end (for example, a compound represented by the formula (B1)) (both-end compound/one-end compound) may be preferably 50/50 to 100/0, more preferably 60/40 to 100/0, and still more preferably 90/10 to 100/0.

In the curable composition of the present disclosure, the content of the component (A) may be preferably 10 to 90% by mass, more preferably 20 to 80% by mass, and still more preferably 30 to 70% by mass based on the total amount of the component (A) and the component (B). By setting the content of the fluoropolyether group-containing acrylic compound in the above range, the UV curability and flexibility of the resulting cured product can be further improved, and bleedout can be further reduced.

### Component (C): a cross-linking agent

The cross-linking agent is not limited, and it may be, for example, an alkoxysilane compound.

In a preferred embodiment, the cross-linking agent is preferably a compound represented by the formula (C1):

(RE¹-O)_{δ}-Si-R^{g2}_{4-δ} (C1)

wherein
R^{g1} is each independently at each occurrence a hydrogen atom or a monovalent organic group,
R^{g2} is each independently a monovalent organic group, and
δ is an integer of 2 to 4.

R^{g1} may be each independently preferably a monovalent organic group, more preferably a C₁₋₆ alkyl group, and still more preferably a methyl group or an ethyl group.

R^{g2} may be each independently preferably a C₁₋₁₆ alkyl group, a C₃₋₁₆ cycloalkyl group, a C₆₋₁₆ aryl group, or a C₁₋₁₆ alkenyl group, more preferably a C₁₋₁₆ alkyl group, still more preferably a C₁₋₁₀ alkyl group, and even more preferably a C₁₋₃ alkyl group.

Examples of R^{g2} include alkyl groups such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, and a decyl group; cycloalkyl groups such as a cyclopentyl group, a cyclohexyl group, and a cycloheptyl group; aryl groups such as a phenyl group, a tolyl group, a xylyl group, and a naphthyl group; aralkyl groups such as a benzyl group, a phenylethyl group, and a phenylpropyl group; and alkenyl groups such as a vinyl group, an allyl group, a propenyl group, and a butenyl group.

δ is preferably 3 or 4. In one embodiment, δ is 3. In another embodiment, δ is 4.

The cross-linking agent is preferably tetraethoxysilane, tetramethoxysilane, methyltriethoxysilane, methyltrimethoxysilane, dimethyldimethoxysilane, dimethyltrimethoxysilane, aminopropyltriethoxysilane, aminopropyltrimethoxysilane, tridecafluoro-n-octyltriethoxysilane, or tridecafluoro-n-octyltrimethoxysilane.

The component (C) is contained in an amount of preferably 0.1 to 20 parts by mass, more preferably 1 to 10 parts by mass, and still more preferably 1 to 5 parts by mass, based on 100 parts by mass in total of the component (A) and the component (B).

### Component (D): a catalyst

The catalyst is not limited, and it may be, for example, an acid (for example, acetic acid, trifluoroacetic acid, or the like), a base (for example, ammonia, triethylamine, diethylamine, or the like), a transition metal (for example, Ti, Ni, Sn, or the like), a metal complex, such as a tin-based catalyst, a titanium-based catalyst, a zirconia-based catalyst, a bismuth-based catalyst, or an organic amine-based catalyst.

Examples of the tin-based catalyst include di-n-butyltin(IV) dilaurate.

Examples of the titanium-based catalyst include titanium diisopropoxy bis(ethylacetoacetate), titanium tetra-n-butoxide, titanium tetra-2-ethylhexoxide, and titanium tetraacetylacetonate.

Examples of the zirconium-based catalyst include zirconium tetraacetylacetonate, zirconium tetra-n-butoxide, and zirconium dibutoxy bis(ethylacetoacetate).

Examples of the bismuth-based catalyst include bismuth tris(2-ethylhexanoate).

Examples of the organic amine-based catalyst include diazabicycloundecene.

The catalyst may be added to the curable composition immediately prior to use.

The catalyst may be additionally added to the curable composition immediately prior to use, depending on the method of use.

The component (D) is contained in an amount of preferably 0.1 to 20 parts by mass, more preferably 0.2 to 10 parts by mass, and still more preferably 0.5 to 5 parts by mass, based on 100 parts by mass in total of the component (A) and the component (B).

### Component (E): a radical polymerization initiator

The radical polymerization initiator may be preferably a radical photopolymerization initiator. Examples of the radical photopolymerization initiator include diketones such as benzyl and diacetyl; acyloins such as benzoin; acyloin ethers such as benzoin methyl ether, benzoin ethyl ether, and benzoin isopropyl ether; thioxanthones such as thioxanthone, 2,4-diethylthioxanthone, and thioxanthone-4-sulfonic acid; benzophenones such as benzophenone, 4,4'-bis(dimethylamino)benzophenone, and 4,4'-bis(diethylamino)benzophenone; acetophenones such as acetophenone, 2-(4-toluenesulfonyloxy)-2-phenylacetophenone, p-dimethylaminoacetophenone, 2,2'-dimethoxy-2-phenylacetophenone, p-methoxyacetophenone, 2-methyl[4-(methylthio)phenyl]-2-morpholino-1-propanone, and 2-benzyl-2-dimethylamino-1-(4-morpholinophenyl)-butan-1-one; quinones such as anthraquinone and 1,4-naphthoquinone; aminobenzoic acids such as ethyl 2-dimethylaminobenzoate, ethyl 4-dimethylaminobenzoate, (n-butoxy)ethyl 4-dimethylaminobenzoate, isoamyl 4-dimethylaminobenzoate, and 2-ethylhexyl 4-dimethylaminobenzoate; halogen compounds such as phenacyl chloride and trihalomethylphenylsulfone; acylphosphine oxides; and peroxides such as di-t-butyl peroxide.

In a preferred embodiment, the radical polymerization initiator is benzoin, benzoin methyl ether, benzoin ethyl ether, benzoin isopropyl ether, thioxanthone, 2,4-diethylthioxanthone, thioxanthone-4-sulfonic acid, benzophenone, 4,4'-bis(dimethylamino)benzophenone, 4,4'-bis(diethylamino)benzophenone, acetophenone, 2-(4-toluenesulfonyloxy)-2-phenylacetophenone, p-dimethylaminoacetophenone, 2,2'-dimethoxy-2-phenylacetophenone, p-methoxyacetophenone, 2-methyl[4-(methylthio)phenyl]-2-morpholino-1-propanone, 2-benzyl-2-dimethylamino-1-(4-morpholinophenyl)-butan-1-one, anthraquinone, 1,4-naphthoquinone, ethyl 2-dimethylaminobenzoate, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, phenacyl chloride, trihalomethylphenylsulfone, acylphosphine oxide, or di-t-butyl peroxide, methyl benzoylformate, 1-hydroxy-cyclohexyl-phenyl-ketone, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]phenyl}-2-methyl-propan-1-one, 2-methyl-1-(4-methylthiophenyl)-2-morpholinopropan-1-one, 2-benzyl-2-dimethylamino-1-(4-morpholinophenyl)-1-butanone, 2-(dimethylamino)-2-[(4-methylphenyl)methyl]-1-[4-(4-morpholinyl)phenyl]-1-butanone, bis(2,4,6-trimethylbenzoyl)-phenylphosphine oxide, bis(η5-2,4-cyclopentadien-1-yl)-bis(2,6-difluoro-3-(1H-pyrrol-1-yl)-phenyl) titanium, 1,2-octanedione, 1-[4-(phenylthio)-, 2-(O-benzoyloxime)], ethanone, 1-[9-ethyl-6-(2-methylbenzoyl)-9H-carbazol-3-yl]-, 1-(0-acetyloxime), 2-hydroxy-2-methyl-1-phenyl-propan-1-one, 2,4,6-trimethylbenzoyl-diphenylphosphine oxide, t-butyl hydroperoxide, cumene hydroperoxide, diisopropylbenzene hydroperoxide, paramenthane hydroperoxide, or t-methylbutyl hydroperoxide.

Examples of commercial products of the radical photopolymerization initiator include the following:
OMNIRAD 651: 2,2-dimethoxy-1,2-diphenylethan-1-one,
OMNIRAD 184: 1-hydroxy-cyclohexyl-phenyl-ketone,
OMNIRAD 2959: 1-[4-(2-hydroxyethoxy)-phenyl]-2-hydroxy-2-methyl-1-propan-1-one,
OMNIRAD 127: 2-hydroxy-1-{4-[4-(2-hydroxy-2-methyl-propionyl)-benzyl]phenyl}-2-methyl-propan-1-one,
OMNIRAD 907: 2-methyl-1-(4-methylthiophenyl)-2-morpholinopropan-1-one,
OMNIRAD 369: 2-benzyl-2-dimethylamino-1-(4-morpholinophenyl)-butanone-1,
OMNIRAD 379: 2-(dimethylamino)-2-[(4-methylphenyl)methyl]-1-[4-(4-morpholinyl)phenyl]-1-butanone,
OMNIRAD 819: bis(2,4,6-trimethylbenzoyl)-phenylphosphine oxide,
OMNIRAD 784: bis(η5-2,4-cyclopentadien-1-yl)-bis(2,6-difluoro-3-(1H-pyrrol-1-yl)-phenyl)titanium,
OMNIRAD OXE 01: 1,2-octanedione, 1-[4-(phenylthio)-, 2-(O-benzoyloxime)],
OMNIRAD OXE 02: ethanone, 1-[9-ethyl-6-(2-methylbenzoyl)-9H-carbazol-3-yl]-, 1-(0-acetyloxime),
OMNIRAD261, OMNIRAD369, and OMNIRAD500,
DAROCUR 1173: 2-hydroxy-2-methyl-1-phenyl-propan-1-one,
DAROCUR TPO: 2,4,6-trimethylbenzoyl-diphenylphosphine oxide,
DAROCUR 1116, DAROCUR 2959, DAROCUR 1664, and DAROCUR 4043,
OMNIRAD 754 oxyphenylacetic acid: a mixture of 2-[2-oxo-2-phenylacetoxyethoxy]ethyl ester and oxyphenylacetic acid, 2-(2-hydroxyethoxy)ethyl ester,
OMNIRAD 500: a mixture of OMNIRAD 184 and benzophenone (1:1),
OMNIRAD 1300: a mixture of OMNIRAD 369 and OMNIRAD 651 (3:7),
OMNIRAD 1800: a mixture of CGI 403 and OMNIRAD 184 (1:3),
OMNIRAD 1870: a mixture of CGI 403 and OMNIRAD 184 (7:3), and
DAROCUR 4265: a mixture of DAROCUR TPO and DAROCUR 1173 (1:1).
OMNIRAD is manufactured by BASF SE, and DAROCUR is manufactured by Merck Japan Ltd.

The component (E) is contained in an amount of preferably 0.1 to 20 parts by mass, more preferably 1 to 10 parts by mass, and still more preferably 1 to 5 parts by mass, based on 100 parts by mass in total of the component (A) and the component (B).

The curable composition of the present disclosure may contain a solvent.

The solvent may be preferably an aliphatic hydrocarbon, an aromatic hydrocarbon, an ester, a ketone, a glycol ether, an alcohol, a glycol, a cyclic ether, an amide, an ether alcohol, a perfluoroaliphatic hydrocarbon having 5 to 12 carbon atoms, a polyfluoroaromatic hydrocarbon, a polyfluoroaliphatic hydrocarbon, a hydrofluorocarbon, a hydrochlorofluorocarbon, or a hydrofluoroether. The solvent may be a mixed solvent of two or more of these.

In a preferred embodiment, the solvent is an alcohol or a hydrofluoroether, or a mixed solvent of two or more of these.

Examples of the aliphatic hydrocarbon include hexane, cyclohexane, heptane, octane, nonane, decane, undecane, dodecane, and mineral spirit.

Examples of the aromatic hydrocarbon include benzene, toluene, xylene, naphthalene, and solvent naphtha.

Examples of the ester include methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate.

Examples of the ketone include acetone, methyl ethyl ketone, methyl isobutyl ketone, 2-hexanone, cyclohexanone, methyl amino ketone, and 2-heptanone.

Examples of the glycol ether include ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and diethylene glycol monoethyl ether acetate.

Examples of the alcohol include methanol, ethanol, iso-propanol, n-butanol, isobutanol, tert-butanol, sec-butanol, 3-pentanol, octyl alcohol, 3-methyl-3-methoxybutanol, and tert-amyl alcohol. The alcohol is preferably methanol, ethanol, or iso-propanol.

Examples of the glycol include ethylene glycol and propylene glycol.

Examples of the cyclic ether include tetrahydrofuran, tetrahydropyran, and dioxane.

Examples of the amide include N,N-dimethylformamide and N,N-dimethylacetamide.

Examples of the ether alcohol include methyl cellosolve, cellosolve, isopropyl cellosolve, butyl cellosolve, and diethylene glycol monomethyl ether.

Examples of the perfluoroaliphatic hydrocarbon having 5 to 12 carbon atoms include perfluorohexane, perfluoromethylcyclohexane, and perfluoro-1,3-dimethylcyclohexane.

Examples of the polyfluoroaromatic hydrocarbon include bis(trifluoromethyl)benzene.

Examples of the polyfluoroaliphatic hydrocarbon include C₆F₁₃CH₂CH₃ (for example, Asahiklin (R) AC-6000 manufactured by Asahi Glass Co., Ltd.) and 1,1,2,2,3,3,4-heptafluorocyclopentane (for example, Zeorora (R) H manufactured by ZEON Corporation).

Examples of the hydrofluorocarbon (HFC) include 1,1,1,3,3-pentafluorobutane (HFC-365mfc).

Examples of the hydrochlorofluorocarbon (HCFC) include 1,1,2-trichloro-1,2,2-trifluoroethane, 1,2-dichloro-1,1,2,2-tetrafluoroethane, and 1,1-dichloro-1,2,2,3,3-pentafluoropropane (HCFC 225) (for example, Asahiklin (R) AK 225).

Examples of the hydrofluoroether (HFE) include an alkyl perfluoroalkyl ether (the perfluoroalkyl group and the alkyl group may be linear or branched) such as perfluoropropyl methyl ether (C₃F₇OCH₃) (for example, Novec (TM) 7000 manufactured by Sumitomo 3M Limited), perfluorobutyl methyl ether (C₄F₉OCH₃) (for example, Novec (TM) 7100 manufactured by Sumitomo 3M Limited), perfluorobutyl ethyl ether (C₄F₉OC₂H₅) (for example, Novec (TM) 7200 manufactured by Sumitomo 3M Limited), and perfluorohexyl methyl ether (C₂F₅CF(OCH₃)C₃F₇) (for example, Novec (TM) 7300 manufactured by Sumitomo 3M Limited); and CF₃CH₂OCF₂CHF₂ (for example, Asahiklin (R) AE-3000 manufactured by Asahi Glass Co., Ltd.).

In a preferred embodiment, the solvent is methanol, ethanol, iso-propanol, perfluoropropyl methyl ether, perfluorobutyl methyl ether, perfluorobutyl ethyl ether, perfluorohexyl methyl ether, or CF₃CH₂OCF₂CHF₂, or a mixed solvent of two or more of these.

The content of the solvent is 20 to 90% by mass, preferably 40 to 90% by mass, based on the total amount of the component (A) to the component (E).

The curable composition of the present disclosure may contain an (unreactive) fluoropolyether compound that can be understood as a fluorine-containing oil, preferably a perfluoro(poly)ether compound (hereinafter, collectively referred to as a "fluorine-containing oil"), an (unreactive) silicone compound that can be understood as a silicone oil (hereinafter, referred to as a "silicone oil"), an alcohol, a surfactant, a polymerization inhibitor, a sensitizer, and the like.

Examples of the fluorine-containing oil include, but are not limited to, a compound (perfluoro(poly)ether compound) represented by the following general formula (3):

Rf⁵-(OC₄F₈)_{a'}-(OC₃F₆)_{b'}-(OC₂F₄)_{c'}-(OCF₂)_{d'}-Rf⁶ ... (3)

wherein Rf⁵ represents a C₁₋₁₆ alkyl group optionally substituted with one or more fluorine atoms (preferably, a C₁₋₁₆ perfluoroalkyl group), Rf⁶ represents a C₁₋₁₆ alkyl group optionally substituted with one or more fluorine atoms (preferably, a C₁₋₁₆ perfluoroalkyl group), a fluorine atom, or a hydrogen atom, and Rf⁵ and Rf⁶ more preferably are each independently a C₁₋₃ perfluoroalkyl group.
a', b', c', and d' represent the respective four numbers of repeating units in perfluoro(poly)ether constituting the main backbone of the polymer and are mutually independently an integer of 0 or more and 300 or less, and the sum of a', b', c', and d' is at least 1, preferably 1 to 300, and more preferably 20 to 300. The occurrence order of the respective repeating units enclosed in parentheses provided with the subscript a', b', c', or d' is not limited in the formula. These repeating units may be linear or branched, or they may contain a ring structure. For example, -(OC₄F₈)- may be any of -(OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and (OCF₂CF(C₂F₅))-, and is preferably -(OCF₂CF₂CF₂CF₂)-. -(OC₃F₆)- may be any of - (OCF₂CF₂CF₂)-, -(OCF(CF₃)CF₂)-, and (OCF₂CF(CF₃))-, and is preferably -(OCF₂CF₂CF₂)-. -(OC₂F₄)- may be any of -(OCF₂CF₂)- and (OCF(CF₃))-, and is preferably -(OCF₂CF₂)-.

The ring structure may be any of the following 3-membered ring or 4-membered rings: 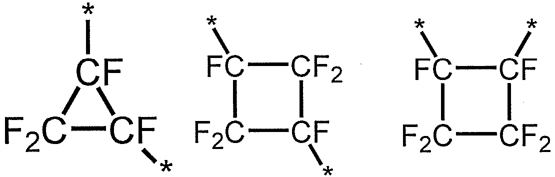 wherein * represents a bond position.

For example, (OC₄F₈) may be the following: 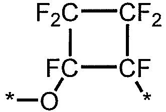 wherein * represents a bond position.

Examples of the perfluoro(poly)ether compound represented by the general formula (3) include compounds represented by any of the following general formulae (3a) and (3b) (one of which may be used singly, or two or more may be used as a mixture):

Rf⁵-(OCF₂CF₂CF₂)_{b"}-Rf⁶ ... (3a)

Rf⁵-(OCF₂CF₂CF₂CF₂)_{a"}-(OCF₂CF₂CF₂)_{b"}-(OCF₂CF₂)_{c"}-(OCF₂)_{d"}- Rf⁶ ... (3b)

wherein Rf⁵ and Rf⁶ are as described above; in the formula (3a), b" is an integer of 1 or more and 100 or less; and in the formula (3b), a" and b" are each independently an integer of 0 or more and 30 or less, and c'' and d" are each independently an integer of 1 or more and 300 or less. The occurrence order of the respective repeating units enclosed in parentheses provided with the subscript a", b", c", or d" is not limited in the formula.

From another viewpoint, the fluorine-containing oil may be a compound represented by the general formula Rf³-F, wherein Rf³ is a C₅₋₁₆ perfluoroalkyl group. The fluorine-containing oil may be a chlorotrifluoroethylene oligomer.

The fluorine-containing oil may have an average molecular weight of 500 to 10,000. The molecular weight of the fluorine-containing oil may be measured using GPC.

The fluorine-containing oil may be contained in an amount of, for example, 0 to 50% by mass, preferably 0 to 30% by mass, and more preferably 0 to 5% by mass, based on the curable composition of the present disclosure. In one embodiment, the curable composition of the present disclosure is substantially free from the fluorine-containing oil. Being substantially free from the fluorine-containing oil means that the fluorine-containing oil is not contained at all, or an extremely small amount of the fluorine-containing oil may be contained.

For example, as the silicone oil, a linear or cyclic silicone oil having 2,000 or less siloxane bonds may be used. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

In the curable composition of the present disclosure, such a silicone oil may be contained in an amount of, for example, 0 to 300 parts by mass, preferably 50 to 200 parts by mass, based on 100 parts by mass in total of the fluoropolyether group-containing acrylic compound and fluoropolyether group-containing silane compound of the present disclosure (in the case of two or more kinds, the total thereof, and the same applies below).

Examples of the alcohol include an alcohol having 1 to 6 carbon atoms and optionally substituted with. one or more fluorine atoms, such as methanol, ethanol, iso-propanol, tert-butanol, CF₃CH₂OH, CF₃CF₂CH₂OH, and (CF₃)₂CHOH. Such an alcohol added to the curable composition improves the stability of the curable composition, and improves the miscibility between the perfluoropolyether group-containing acrylic compound and fluoropolyether group-containing silane compound and the solvent.

The alcohol is preferably methanol, ethanol, 2,2,3,3,3-pentafluoro-1-propanol, or 2,2,2-trifluoroethanol.

The curable composition of the present disclosure may contain, in addition to the components described above, trace amounts of Pt, Rh, Ru, 1,3-divinyltetramethyldisiloxane, triphenylphosphine, NaCl, KCl, silane condensation product, and the like as impurities.

The viscosity of the curable composition of the present disclosure may be preferably 5,000 mPa·s or less, more preferably 3,000 mPa·s or less, and still more preferably 2,000 mPa·s or less. By reducing the viscosity of the curable composition, the curable composition can be applied to locations with finer shapes. The viscosity of the curable composition of the present disclosure may be preferably 100 mPa·s or more, more preferably 500 mPa·s or more, and still more preferably 1,000 mPa·s or more. By increasing the viscosity of the curable composition, it becomes easier to form films with large thickness and to control wetting and spreading.

In one embodiment, the viscosity of the curable composition of the present disclosure may be preferably 100 to 5,000 mPa·s, more preferably 500 to 3,000 mPa·s, and still more preferably 1,000 to 2,000 mPa·s.

### (Applications)

A cured product of the curable composition of the present disclosure can be used for, for example, potting materials, sealing materials, and the like. A cured product of the curable composition of the present disclosure can be used by, for example, filling it into a void of an electronic member (for example, a part where a housing and a printed circuit board are pasted together, or a gap between a resin-molded metal terminal part and a mold resin, etc.) and curing it.

In order to form a cured product with higher abrasion resistance (for example, a potting material, a sealing material), it is preferable to wash the object to be treated with acetone, hydrofluoroether, or the like for removing oil from the walls of the void prior to the treatment with the curable composition of the present disclosure, and then to dry the object. Furthermore, in addition to the above washing, a pretreatment with UV ozone, oxygen plasma, or the like can further improve the abrasion resistance of the cured product.

Prior to the treatment with the curable composition of the present disclosure, if necessary, a primer treatment can be performed on the walls of the void and the like, thereby improving the adhesion of the potting material formed from the curable composition and further improving the abrasion resistance. The primer treatment may be performed under the same conditions as the primer treatment when a silane coupling agent is used, in accordance with conventional methods.

When a cured product obtained from the curable composition of the present disclosure is adhered to various substrates, various primers can also be used in combination.

In one embodiment, the curable composition may be cured at room temperature. Such a curable composition is particularly useful as a composition for potting material formation.

In one embodiment, upon using the curable composition of the present disclosure, the composition may be further diluted using a solvent for use, depending on the application and purpose thereof. As the solvent used for dilution, the fluorinated solvents exemplified above can be used. For example, the composition may be dissolved in 1,3-bis(trifluoromethyl)benzene, Fluorinert (manufactured by 3M Company), perfluorobutyl methyl ether, perfluorobutyl ethyl ether, or the like as a solvent to the desired concentration for use. In particular, it is preferable to use the solvent for a thin film coating application.

The curable composition of the present disclosure can form a cured product having good adhesion to a metal or plastic substrate, and therefore can be useful as an adhesive or sealing material, in particular, for applications around electrical and electronic components and around automotive components. The curable composition of the present disclosure has a good elastic modulus, especially at a low temperature, and therefore can be usefully used for automobile members (for example, a sealing material, specifically a gasket) and the like, in particular for automobile members that can be used in cold regions (for example, -50°C or lower). Furthermore, a cured product of the curable composition of the present disclosure can also be useful as a nano-imprinting resin mold (replica mold).

A cured product of the curable composition of the present disclosure has good chemical resistance, acid resistance, and base resistance. Such a cured product of the curable composition of the present disclosure can also be used in chemical plants, semiconductor manufacturing devices, and the like.

The present disclosure provides a cured product obtained from the curable composition of the present disclosure. The curable composition of the present disclosure is excellent in curability and applicability, and therefore can be a cured product used for a variety of applications.

The present disclosure includes an article containing a substrate and a cured product layer on the substrate, formed by curing the curable composition of the present disclosure.

The substrate usable in the present disclosure may be composed of any suitable material such as glass, resin (which may be natural or synthetic resin such as a commonly used plastic material), OCA (optical clear adhesive), polarizing plate metal, ceramics, semiconductors (such as silicon and germanium), electronic equipment, fiber (such as woven fabric and nonwoven fabric), fur, leather, wood, pottery, stone, building materials, and sanitary articles.

In a preferred embodiment, the substrate is glass, resin, polarizing plate, OCA (optical clear adhesive), or metal, and is preferably glass, resin, polarizing plate, or OCA (optical clear adhesive).

As the glass, sapphire glass, soda-lime glass, alkali aluminosilicate glass, borosilicate glass, alkali-free glass, crystal glass, and quartz glass are preferred, and chemically tempered soda-lime glass, chemically tempered alkali aluminosilicate glass, and chemically bonded borosilicate glass are particularly preferred.

The shape of the substrate is not limited, and may be, for example, in the form of a plate, a film, or the like. The surface region of the substrate on which the cured product layer is to be formed may be at least part of the substrate surface, and may be suitably determined according to the application, specific configuration, and the like of an article to be produced.

The article of the present disclosure can be produced by forming a layer of the curable composition of the present disclosure on the surface of the substrate and post-treating this layer as necessary, thereby forming a layer from the curable composition of the present disclosure.

The layer of the curable composition of the present disclosure can be formed by applying the curable composition on the surface of the substrate such that the composition coats the surface. The coating method is not limited. For example, a wet coating method and a dry coating method can be used.

Examples of the wet coating method include dip coating, bar coating, spin coating, flow coating, spray coating, roll coating, gravure coating, needle dispensing, jet dispensing, and similar methods. The wet coating method is preferably bar coating, spin coating, flow coating, roll coating, needle dispensing, or jet dispensing.

In a preferred embodiment, the article of the present disclosure may be an electrical and electronic component, an automobile component, an automotive member (for example, a sealing material, specifically a gasket), a chemical plant, a semiconductor manufacturing device, and the like.

Alternatively, the article of the present disclosure may be medical equipment or a medical material.

The thickness of the layer is not limited, and it may be, for example, 1 µm or more, 10 µm or more, or 100 µm or more. Also, the thickness of the layer above is not limited, and it may be 1000 µm or less, 500 µm or less, or 100 µm or less.

Up to now, the curable composition, cured product, article, and the like of the present disclosure have been described in detail. These of the present disclosure are not limited to those exemplified above.

### Examples

Hereinafter, the compound of the present disclosure will now be described in Examples, but the present disclosure is not limited to the following Examples. In the Examples, the occurrence order of the repeating units constituting fluoropolyether is not limited, and all chemical formulae shown below indicate average compositional features.

### Component (A): Synthesis of fluoropolyether group-containing acrylic compound

### Synthetic Example 1

10.0 g of a perfluoropolyether-modified ester, represented by average compositional features of CH₃OCOCF₂O(CF₂O)₁₂(CF₂CF₂O)₁₂CF₂COOCH₃, 5.0 g of 1,3-bis(trifluoromethyl)benzene, and 1.69 g of 3-(2-aminoethylamino)propyltrimethoxysilane were added into a 100 mL three-neck flask equipped with a reflux condenser, a thermometer, and a stirrer, and the mixture was stirred at 25°C for 1 hour under nitrogen gas stream. Thereafter, by removing the volatile substances under reduced pressure, a silane compound (A) represented by the following formula was obtained.

(CH₃O)₃SiCH₂CH₂CH₂NHCH₂CH₂NHCOCF₂O(CF₂CF₂O)₁₂(CF₂O)₁₂CF₂CONHCH₂C H₂NHCH₂CH₂CH₂Si(OCH₃)₃

### Synthetic Example 2

10.0 g of the perfluoropolyether group-containing silane compound (A) obtained in Synthetic Example 1 and 1.08 g of 2-isocyanatoethyl acrylate (Karenz (R) AOI manufactured by Showa Denko K.K.) were added into a 100 mL three-neck flask equipped with a reflux condenser, a thermometer, and a stirrer, and the mixture was stirred at 25°C for 1 hour under nitrogen gas stream, thereby obtaining a fluoropolyether group-containing acrylic compound (B) represented by the following formula.

(CH₃O)₃SiCH₂CH₂CH₂N(X)CH₂CH₂NHCOCF₂O(CF₂CF₂O)₁₂(CF₂O)₁₂CF₂CONHCH ₂CH₂N(X)CH₂CH₂CH₂Si(OCH₃)₃

X = -CONHCH₂CH₂OCOCH=CH₂

### Synthetic Example 3

10.0 g of a perfluoropolyether-modified ester, represented by average compositional features of CH₃OCOCF₂O(CF₂O)₁₂(CF₂CF₂O)₁₂CF₂COOCH₃, 5.0 g of 1,3-bis(trifluoromethyl)benzene, and 1.37 g of 3-aminopropyltrimethoxysilane were added into a 100 mL three-neck flask equipped with a reflux condenser, a thermometer, and a stirrer, and the mixture was stirred at 25°C for 1 hour, thereby obtaining a silane compound (C) represented by the following formula.

(CH₃O)₃SiCH₂CH₂CH₂NHCOCF₂O(CF₂CF₂O)₁₂(CF₂O)₁₂CF₂CONHCH₂CH₂C H₂Si(OCH₃)₃

Next, 4.40 g of CH₂=CHCOOCH₂Si(CH₃)₂OH was added. Thereafter, after stirring at 50°C for 3 hours, the solvent and low boiling components were completely distilled off to obtain a fluoropolyether group-containing acrylic compound (D) represented by the following formula.

Xₙ(CH₃O)₃-

ₙ₃SiCH₂CH₂CH₂NHCOCF₂O(CF₂CF₂O)₁₂(CF₂O)₁₂CF₂CONHCH₂CH₂CH₂Si(OCH₃)₃ -ₙXₙ

X = (OSi(CH₃)₂CH₂OOCCH=CH₂)ₙ

$n = 1.9$

### Synthesis of component (B): fluoropolyether group-containing silane compound

### Synthetic Example 4

10.0 g of a perfluoropolyether-modified ester, represented by average compositional features of CH₃OCOCF₂O(CF₂O)₁₂(CF₂CF₂O)₁₂CF₂COOCH₃, 5.0 g of 1,3-bis(trifluoromethyl)benzene, and 0.40 g of 4,4-methylenebis-cyclohexylamine were added into a 100 mL three-neck flask equipped with a reflux condenser, a thermometer, and a stirrer, and the mixture was stirred at 25°C for 1 hour under nitrogen gas stream. Subsequently, 0.62 g of 3-aminopropylmethyldimethoxysilane was added, and the mixture was stirred at 25°C for 1 hour. Thereafter, by removing the volatile substances under reduced pressure, a perfluoropolyether group-containing silane compound (E) represented by the following formula was obtained.

(CH₃O)₂CH₃SiCH₂CH₂CH₂NHCOCF₂O(CF₂CF₂O)₁₂(CF₂O)₁₂CF₂CONHC₆H₁₂-CH₂- C₆H₁₂-NHCOCF₂O(CF₂CF₂O)₁₂(CF₂O)₁₂CF₂CONHCH₂CH₂CH₂SiCH₃(OCH₃)₂

### Synthetic Example 5

10.0 g of a perfluoropolyether-modified ester, represented by average compositional features of CH₃OCOCF(CF₃){OCF₂CF(CF₃)}ₘOCF₂CF₂O{CF(CF₃)CF₂O}ₙCF(CF₃)COOCH₃ (m + n ≈ 34), 5.0 g of hexafluorobenzene, and 0.58 g of 3-aminopropyltrimethoxysilane were added into a 100 mL three-neck flask equipped with a reflux condenser, a thermometer, and a stirrer, and the mixture was stirred at 70°C for 12 hours. Thereafter, by removing the volatile substances under reduced pressure, a perfluoropolyether group-containing silane compound (F) represented by the following formula was obtained.

(CH₃O)₃SiCH₂CH₂CH₂NHCOCF(CF₃){OCF₂CF(CF₃)}ₘOCF₂CF₂O{CF(CF₃)CF₂O }ₙCF(CF₃)CONHCH₂CH₂NHCH₂CH₂NHCOCF(CF₃){OCF₂CF(CF₃)}ₘOCF₂CF₂O{CF (CF₃)CF₂O}ₙCF(CF₃)CONHCH₂CH₂CH₂Si(OCH₃)₃

### (Synthesis of control compound)

### Synthetic Example 6

10.0 g of a perfluoropolyether-modified alcohol, represented by average compositional features of HOCH₂CF₂O(CF₂O)₁₀(CF₂CF₂O)₁₃CF₂CH₂OH, 5.0 g of 1,3-bis(trifluoromethyl)benzene, and 1.26 g of 2-isocyanatoethyl acrylate (Karenz (R) AOI manufactured by Showa Denko K.K.) were added into a 100 mL three-neck flask equipped with a reflux condenser, a thermometer, and a stirrer. After stirring, a few drops of di-n-butyltin dilaurate were added dropwise, and the mixture was stirred at 25°C for 24 hours, thereby obtaining an acrylic compound (G) represented by the following formula.

CH₂=CH₂COOCH₂CH₂NHCOOCH₂CF₂O(CF₂CF₂O)₁₀(CF₂O)₁₃CF₂CH₂OCONHCH₂CH₂ OOCCH₂=CH₂

### Synthetic Example 7

10.0 g of a perfluoropolyether-modified ester, represented by average compositional features of CH₃OCOCF₂O(CF₂O)₁₂(CF₂CF₂O)₁₂CF₂COOCH₃, 5.0 g of 1,3-bis(trifluoromethyl)benzene, and 1.37 g of 3-aminopropyltrimethoxysilane were added into a 100 mL three-neck flask equipped with a reflux condenser, a thermometer, and a stirrer, and the mixture was stirred at 25°C for 1 hour, thereby obtaining a perfluoropolyether group-containing silane compound (H) represented by the following formula.

(CH₃O)₃SiCH₂CH₂CH₂NHCOCF₂O(CF₂CF₂O)₁₂(CF₂O)₁₂CF₂CONHCH₂CH₂CH₂Si( OCH₃)₃

Next, 4.70 g of CH₂=CHCOOCH₂Si(CH₃)₂OH and 0.1 g of titanium diisopropoxy bis(ethylacetoacetate) as the condensation catalyst were added. Thereafter, the mixture was stirred at 50°C for 3 hours, and further allowed to react at room temperature for 24 hours, and it was confirmed that the alkoxysilane groups of the compound (H) had been completely dehydrated and condensed. The solvent and low boiling components were completely distilled off to obtain an acrylic compound (J) represented by the following formula. X₃SiCH₂CH₂CH₂NHCOCF₂O(CF₂CF₂O)₁₂(CF₂O)₁₂CF₂CONHCH₂CH₂CH₂SiX₃

X = (OSi(CH₃)₂CH₂OOCCH=CH₂)

### Component (C): cross-linking agent

(C-1) methyltrimethoxysilane
(C-2) tetraethoxysilane

### Component (D): catalyst

(D-1) titanium diisopropoxy bis(ethylacetoacetate) (ORGATIX TC750, manufactured by Matsumoto Fine Chemical Co., Ltd.)

### Component (E): radical polymerization initiator

(E-1) Omnirad 184
(E-2) methyl benzoylformate

### Examples and Comparative Examples

The components (A) to (E) were mixed in the ratios (weight ratio) shown in the tables below to prepare curable compositions. The following evaluations were performed on the obtained curable compositions.

### UV curability test

After forming a 200 µm film on a glass plate using an applicator, UV irradiation was performed with a high pressure mercury lamp under the atmosphere at an integrated light quantity of 1,000 mJ. Thereafter, the cured state of the coating film was evaluated.
⊚: The surface and interior have both been cured and flowability has been lost.
○: The surface has been cured but the interior is liquid, or the film has lost its flowability but remains tackiness on the surface and has not been cured sufficiently.
×: Both interior and surface remain liquid due to insufficient curing.

### Bleedout property test

After heating the cured film in an electric furnace at 80°C for 2 hours, the film was evaluated for the presence of unreacted material bleeding out in the form of oil droplets on the surface.
⊚: No bleedout
○: Oil slightly oozes on the surface
×: There are agglomerates in the form of oil droplets and bleedout is confirmed

### Chemical resistance test

The cured film was immersed in a toluene solution at room temperature for 3 days, and the weight swelling rate was calculated.
⊚: The weight swelling rate is less than 3%
○: The weight swelling rate is 3% or more and less than 10%
×: The weight swelling rate is 10% or more

### Tensile elongation / elastic modulus

A film with a film thickness of 200 µm was formed using an applicator on a 7 × 10 cm area of glass treated with a mold release agent, and UV irradiation was performed with a high pressure mercury lamp at an integrated light quantity of 1,000 mJ/cm². Next, the film was allowed to stand still at room temperature for 3 days to prepare a film for tensile test. The resultant film was cut into 1 cm × 7 cm strips, and a tensile test was performed with a tensile tester under the conditions of a distance between chucks of 20 mm and a tensile speed of 10 mm/min to measure the elastic modulus and the coefficient of elongation.

**[Table 1]**

| Composition component | Compound | Example | | | | | | | Comparative Example | | | |
|---|---|---|---|---|---|---|---|---|---|---|---|---|
| | | 1-1 | 1-2 | 1-3 | 1-4 | 1-5 | 1-6 | 1-7 | 1-1 | 1-2 | 1-3 | 1-4 |
| Component A | Compound B | 90 | 80 | 70 | 50 | 30 | 20 | 10 | 0 | 0 | 0 | 0 |
| Component B | Compound E | 10 | 20 | 30 | 50 | 70 | 80 | 90 | 80 | 50 | 20 | 100 |
| Component C | C-1 | 3 | 3 | 3 | 3 | 3 | 3 | 3 | 3 | 3 | 3 | 3 |
| Component D | D-1 | 2 | 2 | 2 | 2 | 2 | 2 | 2 | 2 | 2 | 2 | 2 |
| Component E | E-1 | 2 | 2 | 2 | 2 | 2 | 2 | 2 | 2 | 2 | 2 | 2 |
| Component F | Compound G | 0 | 0 | 0 | 0 | 0 | 0 | 0 | 20 | 50 | 80 | 0 |
| Evaluation | UV curability | ⊚ | ⊚ | ⊚ | ⊚ | ⊚ | ○ | ○ | × | ○ | ○ | × |
| | Bleedout | @ | ⊚ | ⊚ | ⊚ | ⊚ | ⊚ | ⊚ | × | × | × | ⊚ |
| | Chemical resistance | ⊚ | ⊚ | ⊚ | ⊚ | ⊚ | ⊚ | ⊚ | ⊚ | ⊚ | ⊚ | ⊚ |
| | Tensile elongation | 50% | 110% | 150% | 155% | 172% | 180% | 180% | 150% | 110% | 50% | 180% |
| | Tensile elastic modulus | 40MPa | 20MPa | 15MPa | 10MPa | 8MPa | 7MPa | 6Mpa | 8 MPa | 12MPa | 25MPa | 6MPa |

**[Table 2]**

| Composition component | Compound | Example | | | | | | | Comparative Example | | | |
|---|---|---|---|---|---|---|---|---|---|---|---|---|
| | | 2-1 | 2-2 | 2-3 | 2-4 | 2-5 | 2-6 | 2-7 | 2-1 | 2-2 | 2-3 | 2-4 |
| Component A | Compound D | 90 | 80 | 70 | 50 | 30 | 20 | 10 | 0 | 0 | 0 | 0 |
| Component B | Compound F | 10 | 20 | 30 | 50 | 70 | 80 | 90 | 80 | 50 | 20 | 100 |
| Component C | C-2 | 2 | 2 | 2 | 2 | 2 | 2 | 2 | 2 | 2 | 2 | 2 |
| Component D | D-1 | 2 | 2 | 2 | 2 | 2 | 2 | 2 | 2 | 2 | 2 | 2 |
| Component E | E-2 | 2 | 2 | 2 | 2 | 2 | 2 | 2 | 2 | 2 | 2 | 2 |
| Component F | Compound J | 0 | 0 | 0 | 0 | 0 | 0 | 0 | 20 | 50 | 80 | 0 |
| Evaluation | UV curability | ⊚ | ⊚ | ⊚ | ⊚ | ○ | ○ | ○ | × | ○ | ⊚ | × |
| | Bleedout | ⊚ | ⊚ | ⊚ | ⊚ | ⊚ | ⊚ | ⊚ | × | × | ⊚ | ⊚ |
| | Chemical resistance | ⊚ | ⊚ | ⊚ | ⊚ | ⊚ | ⊚ | ⊚ | ⊚ | ⊚ | ⊚ | ⊚ |
| | Tensile elongation | 35% | 100% | 110% | 105% | 120% | 125% | 140% | 100% | 75% | 30% | 130% |
| | Tensile elastic modulus | 52MPa | 23MPa | 18MPa | 15MPa | 15MPa | 12MPa | 11Mpa | 12MPa | 18MPa | 30MPa | 10MPa |

### Industrial Applicability

The curable composition of the present disclosure can be suitably utilized for forming a cured product layer on a large variety of substrates.

## Claims

1. A composition, which is a curable composition comprising the following components (A)-(E):
(A) a fluoropolyether group-containing acrylic compound containing a (meth)acrylic group, a hydrolyzable silane group, and a fluoropolyether group;
(B) a fluoropolyether group-containing silane compound containing a fluoropolyether group and a hydrolyzable silyl group;
(C) a cross-linking agent;
(D) a catalyst; and
(E) a radical polymerization initiator.

2. The composition of claim 1, which contains 10-80 mass%, preferably 30-70 mass%, of component (A), based on the total components (A) and (B).

3. The composition of claim 1 or 2, wherein component (A) comprises a compound of any of formulae (A1)-(A3):
R^{F1}-X^{A}-X^{B}RA^{c}ₘ (A1)
R^{Ac}ₘX^{B}-X^{A}-R^{F2}-X^{A}-X^{B}R^{Ac}ₘ (A2)
R^{Ac}ₘX^{B}-X^{A}-[R^{F2}-R^{g}-R^{a}(R^{Ac})ₘ₃-R^{g})ₓ-R^{F2}-X^{A}-X^{B}R^{Ac}ₘ (A3)
wherein, each independently at each occurrence,
R^{F1} is Rf¹-R^{F}-O_{q}-,
R^{F2} is -Rf² ₚ-R^{F}-O_{q}-,
Rf¹ is C₁₋₁₆-alkyl optionally substituted with F,
Rf² is C₁₋₆-alkylene optionally substituted with F,
R^{F} is a divalent fluoropolyether group;
preferably a group of the formula:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
wherein
R^{Fa} each independently is H, F or Cl, and
a-f each independently are an integer of 0-200, with (a+b+c+d+e+f) ≥ 1, and the order of the repeating units in parentheses provided with a-f is not limited,
provided that when all R^{Fa} groups are H or Cl, at least one of a-c, e and f is ≥ 1; and
more preferably a group of any of the formulae (f1)-(f6):
- (OC₃F₅)_{d}-(OC₂F₄)ₑ- (f1)
wherein d is an integer of 1-200 and e is 0 or 1,
-(OC₄F₈)_{c}-(OC₃F₆)_{d}-(OC₂F₄)ₑ-(OCF₂)_{f}- (f2)
wherein c and d each independently are an integer of 0-30; e and f each independently are an integer of 1-200; (c+d+e+f) is an integer of 10-200; and the order of the repeating units in parentheses provided with the subscripts c-f is not limited,
-(R⁶-R⁷)_{g}- (f3)
-(R⁶-R⁷)_{g}-R^{r}-(R^{7'}-R^{6'})_{g}- (f4)
wherein
R⁶ is OCF₂ or OC₂F₄;
R⁷ is a group selected from OC₂F₄, OC₃F₆, OC₄F₈, OC₅F₁₀, OC₆F₁₂, and combinations of two or three groups selected from these groups;
g is an integer of 2-100,
R^{6'} is OCF₂ or OC₂F₄;
R^{7'} is a group selected from OC₂F₄, OC₃F₆, OC₄F₈, OC₅F₁₀, OC₆F₁₂, and combinations of two or three groups selected from these groups;
g' is an integer of 2-100; and
R^{r} is any of the following groups wherein* represents a bond position: 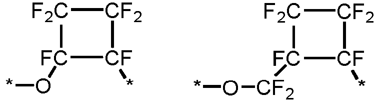 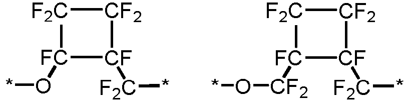 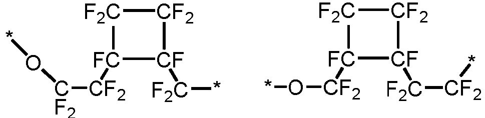 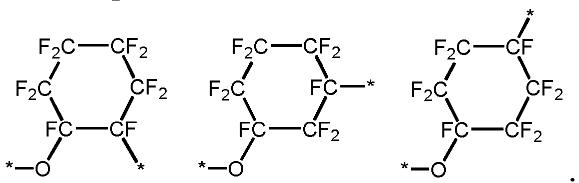
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein e is an integer of 1-200; a-d and f each independently are an integer of 0-200; (a+b+c+d+e+f) is ≥ 1; and the order of the repeating units in parentheses provided with a-f is not limited, and
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)
wherein f is an integer of 1-200; a-e each independently are an integer of 0-200; (a+b+c+d+e+f) is ≥ 1; and the order of the repeating units in parentheses provided with a-f is not limited,
p is 0 or 1,
q is 0 or 1,
X^{A} is a single bond or a divalent organic group,
X^{B} is an (m+1)-valent group,
provided that, in each formula, at least one X^{B} is an (m+1)-valent group containing a hydrolyzable silyl group,
R^{Ac} is X^{D}
-X^{D}-X^{E}(-X^{F}-OCO-CR⁵=CH₂)_{m'},
is a single bond or a divalent group,
X^{E} is a single bond or an (m'+1)-valent group,
X^{F} is a single bond or a divalent group,
R⁵ is H, halogen, or a monovalent C₁₋₈-organic group,
m' is an integer of 1-10,
m is an integer of 0-10,
R^{a} is an (m3+2)-valent organic group,
m3 is an integer of 0-4,
provided that at least one of m and m3 is ≥ 1,
R^{g} is -NR^{c}CO-R^{e}-, -NR^{c}COO-R^{e}-, or -NR^{c}CONR^{c}-R^{e}-, where these groups are bonded to R^{a} on their left side,
R^{c} is H, C₁₋₆-alkyl or C₆₋₁₆-aryl, preferably H or C₁₋₆-alkyl,
R^{e} is a single bond or a divalent organic group, and
X is an integer of ≥ 1, preferably 1-5.

4. The composition of claims 3, wherein
(1) X^{E} is (i) a single bond, or (ii) is -X^{G}-X^{H}, wherein
X^{G} is a single bond; C₁₋₆-alkylene; -(CH₂)_{z9}-O-(CH₂)_{z10}- wherein z9 and z10 each independently are an integer of 0-6; or -(CH₂)_{z11}-phenylene-(CH₂)_{z12}-, wherein z11 and z12 each independently are an integer of 0-6, and
X^{H} is any of the following: >N-, >C< or >C(R⁸)-wherein R⁸ is H or C₁₋₆-alkyl; and/or
(2) X^{D} is -O-, -CO-, -COO-, -OCO-, -CONH-, -NHCO-, -OCONH-, -NHCOO-, -NH-CO-NH-, -CH₂CH(OH)CH₂-, -CH(CH₂OH)CH₂-, -(OSiR¹⁴₂)_{d5}- 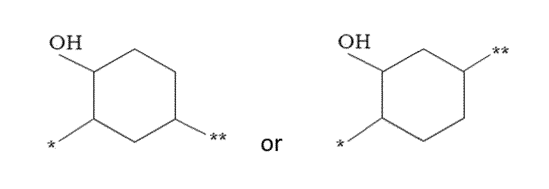 wherein * and ** represent bond positions, and * is bonded to X^{B} and ** is bonded to X^{E}, R¹⁴ is C₁₋₆-alkyl or C₆₋₁₆-aryl, and d5 is an integer of 1-10; and/or
(3) X^{F} is a single bond; C₁₋₆-alkylene; -(CH₂)_{z5}-O-(CH₂)_{z6}-wherein z5 and z6 each independently are an integer of 0-6; or -(CH₂)_{z7}-phenylene-(CH₂)_{z8}-, wherein z7 and z8 each independently are an integer of 0-6; and/or
(4) R⁵ is H or methyl.

5. The composition of claim 3 or 4, wherein X^{A} each independently is a single bond or a group of the formula:
- (C_{α}R¹¹_{2α})ₛ₁-R¹²ₜ₁-
wherein
R¹¹ each independently is H or F,
α each independently is an integer of 1-10,
R¹² is each independently -O-, -CO-, -NR¹⁰-, -CONR¹⁰-, - NR¹⁰CO-, -COO-, -OCO-, or -OCONH-,
R¹⁰ is H or C₁₋₆-alkyl, and
s1 and t1 each independently are an integer of 0-3, and (s1+t1) is ≥ 1,
and the order of the repeating units in parentheses provided with s1 or t1 is not limited;
and preferably X^{A} is
-CONR¹⁰-C_{α1}H_{2α1}-, -(C_{α2}H_{2α2})-OCONR¹⁰-, -(C_{α3}H_{2α3})-,
or
-(C_{α4}H_{2α4})-O-(C_{α5}H_{2α5}), wherein
R¹⁰ is H or C₁₋₆-alkyl,
α1-α3 each independently are an integer of 1-10, and
α4, α5 each independently are an integer of 0-6.

6. The composition of any of claims 3-5, wherein X^{B} each independently is
(1) a group containing a group of the formula:
SiR¹_{nb}R^{sb}_{4-nb}
wherein R¹ is OH or a hydrolyzable group, R^{sb} is a single bond, and nb is 1 or 2; or
(2) a group represented by X^{Ba}(R^{Si})ₙₐ, wherein, each independently
X^{Ba} is an (m+na+1)-valent group,
R^{Si} is -X^{C}-SiR¹_{n'}R²_{3-n'},
X^{C} is a divalent C₁₋₁₀-organic group, preferably C₁₋₆-alkylene; or -(CH₂)_{z1}-O-(CH₂)_{z2}-, -(CH₂)_{z3}-phenylene-(CH₂)_{z4}- or - (CH₂)_{z13}-OCONH-(CH₂)_{z14}-, wherein z1-z4, z13 and z14 each independently are an integer of 0-6,
R¹ is OH or a hydrolyzable group,
R² is H or a monovalent organic group,
n' is an integer of 1-3, preferably 3, and
na is an integer of 1-10.

7. The composition of any of claim 6, wherein X^{Ba} is (i) a trivalent group or (ii) N or -C(-O-)-, and n = m = 1.

8. The composition of any of claims 3-7, wherein formula (A3) is the following:
R^{b}₂N-R^{d}-CO- (R^{F2}-CO-NR^{c}-R^{a}(R^{Ac})ₘ₃-NRCc-CO)ₓ-R^{F2}-CO-R^{d}-NR^{b}₂ (A3-b)
wherein, each independently,
R^{b} is R^{Si}, R^{Ac}, or R^{c}, with at least one R^{b} being R^{Si},
R^{Si} is -X^{C}-SiR¹_{n'}R²_{3-n'},
X^{C} is a divalent C₁₋₁₀-organic group,
R¹ is OH or a hydrolyzable group,
R² is H or a monovalent organic group,
n' is an integer of 1-3,
and preferably one of R^{b} bonded to the N atom positioned at each end in the formula (A3) is R^{Si} and the other is R^{c} or R^{Ac},
R^{d} is a single bond or a divalent organic group, and preferably each independently is a single bond or - (CH₂)_{z17}-NR¹⁰-(CH₂)_{z18}-, wherein R¹⁰ is H or C₁₋₆-alkyl, and z17 and z18 each independently are an integer of 0-6; and
R^{F2}, R^{a}, R^{c}, R^{Ac}, m3, and x are as defined in claim 3.

9. The composition of any of claims 3-8, wherein R^{a} each independently is a group of the formula:
-R⁹-(R^{a'}-R⁹)ₖ-
wherein
R⁹ each independently is C₁₋₆-alkylene,
R^{a'} each independently is a trivalent group; preferably N, -C(-O-)-, a trivalent group optionally containing an amino bond, an amide bond, a urethane bond, a urea bond, an ether bond, or an ester bond between carbon-carbon atoms, and
k is an integer of 1-4, preferably 1 or 2.

10. The composition of any of claims 3-9, wherein component (A) comprises (i) a compound of formula (A1) or (A2) or (ii) a compound of formula (A3).

11. The composition of any of claims 1-10, wherein component (B) is
(1) a compound of formula (B1) or (B2):
R^{F3}_{α}-X^{Z}-R^{Si}_{β} (B1)
R^{Si}_{γ-}X^{Z}-R^{F4}-X^{Z}-R^{Si}_{γ} (B2)
wherein, each independently at each occurrence,
R^{F3} is Rf³-R^{FB}-O_{q3}-,
R^{F4} is -Rf⁴ₚ₃-R^{FB}-O_{q3}-,
Rf³ is C₁₋₁₆-alkyl optionally substituted with F,
Rf⁴ is C₁₋₆-alkylene optionally substituted with F,
R^{FB} is a divalent fluoropolyether group,
and preferably a group of the formula:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
wherein R^{Fa} each independently is H, F or Cl, and a-f each independently are an integer of 0-200, (a+b+c+d+e+f) is ≥ 1, and the order of the repeating units in parentheses provided with a-f is not limited, provided that when all R^{Fa} groups are H or F, at least one of a-c, e and f is ≥ 1,
p3 is 0 or 1,
q3 is 0 or 1,
R^{Si} is a monovalent group containing Si to which H, OH, a hydrolyzable group, or a monovalent organic group is bonded; and at least one R^{Si} contain Si to which OH or a hydrolyzable group is bonded,
X^{Z} is a single bond or a di- to decavalent organic group,
α is an integer of 1-9,
β is an integer of 1-9, and
γ is an integer of 1-9; or
(2) a compound of formula (B3):
R³⁹ⱼ-R³⁸-NR³⁷CO-(R^{F4}-CONR³⁷-R³⁶-NR³⁷CO)ᵣ-R^{F4}-CONR³⁷-R³⁸-R³⁹ⱼ (B3)
wherein, each independently at each occurrence,
R^{F4} is as defined above,
R³⁶ is a divalent organic group,
R³⁷ is H or a monovalent C₁₋₈-organic group,
R³⁸ is a (j+1)-valent organic group,
R³⁹ is -SiR²⁵ₙ₁R²⁶₃₋ₙ₁,
R²⁵ is OH or a hydrolyzable group,
R²⁶ is H or a monovalent organic group,
n1 is an integer of 0-3 for each (SiR²⁵ₙ₁R²⁶₃₋ₙ₁) unit,
J is an integer of 1-9, and
r is an integer of ≥ 1.

12. The composition of claim 11, wherein component (B) is a compound of formula (B1) or (B2) wherein R^{Si} is a group of any of the formulae (S1)-(S5): 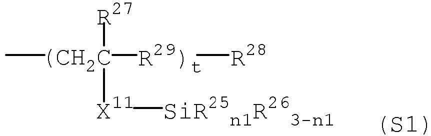
-SiR²⁵ₙ₁R²⁶₃₋ₙ₁ (S2)
wherein, each independently at each occurrence,
R²⁵ is OH or a hydrolyzable group,
R²⁶ is H or a monovalent organic group,
n1 is an integer of 0-3 for each (SiR²⁵ₙ₁R²⁶₃₋ₙ₁) unit,
X¹¹ is a single bond or a divalent organic group,
R²⁷ is H or a monovalent organic group,
t is an integer of ≥ 2,
R²⁸ is H, halogen, or -X¹¹-SiR²⁵ₙ₁R²⁶₃₋ₙ₁, and
R²⁹ is a single bond, -O-, C₁₋₆-alkylene or C₁₋₆-alkyleneoxy;
-SiR^{a1}ₖ₁R^{b1}₁₁R^{c1}ₘ₁ (S3)
wherein, each independently at each occurrence,
R^{a1} is -Z¹-SiR²¹ₚ₁R²²_{q1}R²³ᵣ₁,
Z¹ is -O- or a divalent organic group,
R²¹ is each independently -Z^{1'}-SiR^{21'}_{p1'}R^{22'}_{q1'}R^{23'}_{r1'},
Z^{1'} is -O- or a divalent organic group,
R^{21'} is -Z^{1"}-SiR^{22"}_{q1"}R^{23"}_{r1"},
Z^{1"} is -O- or a divalent organic group,
R^{22"} is OH or a hydrolyzable group,
R^{23"} is H or a monovalent organic group,
q1" is an integer of 0-3,
r1" is an integer of 0-3,
R^{22'} is OH or a hydrolyzable group,
R^{23'} is H or a monovalent organic group,
p1' is an integer of 0-3,
q1' is an integer of 0-3,
r1' is an integer of 0-3,
R²² is OH or a hydrolyzable group,
R²³ is H or a monovalent organic group,
p1 is an integer of 0-3,
q1 is an integer of 0-3,
r1 is an integer of 0-3,
R^{b1} is OH or a hydrolyzable group,
R^{c1} is H or a monovalent organic group,
k1 is an integer of 0-3,
11 is an integer of 0-3, and
m1 is an integer of 0-3;
-CR^{d1}ₖ₂R^{e1}ₗ₂R^{f1}ₘ₂ (S4)
wherein, each independently at each occurrence,
R^{d1} is -Z²-CR³¹ₚ₂R³²_{q2}R³³ᵣ₂,
Z² is a single bond, -O-, or a divalent organic group,
R³¹ is -Z^{2'}-CR^{32'}_{q2'}R^{33'}_{r2'},
Z^{2'} is a single bond, -O-, or a divalent organic group,
R^{32'} is -Z³-SiR³⁴ₙ₂R³⁵₃₋ₙ₂,
Z³ is a single bond, -O-, or a divalent organic group,
R³⁴ is OH or a hydrolyzable group,
R³⁵ is H or a monovalent organic group,
n2 is an integer of 0-3,
R^{33'} is H, OH, or a monovalent organic group,
q2' is an integer of 0-3,
r2' is an integer of 0-3,
R³² is -Z³-SiR³⁴ₙ₂R³⁵₃₋ₙ₂,
R³³ is H, OH, or a monovalent organic group,
p2 is an integer of 0-3,
q2 is an integer of 0-3,
r2 is an integer of 0-3,
R^{e1} is -Z³-SiR³⁴ₙ₂R³⁵₃₋ₙ₂,
R^{f1} is H, OH, or a monovalent organic group,
k2 is an integer of 0-3,
12 is an integer of 0-3,
m2 is an integer of 0-3,
-NR^{g1}R^{h1} (S5)
wherein, each independently at each occurrence,
R^{g1}, R^{h1} are each independently -Z⁴-SiR²⁵ₙ₁R²⁶₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is a single bond, -O-, or a divalent organic group,
provided that in the formulae (S1)-(S5) at least one Si atom to which OH or a hydrolyzable group is bonded is present.

13. The composition of any of claims 1-12, wherein the cross-linking agent (C) is a compound of formula (C1):
(R^{g1}-O)_{δ}-Si-R^{g2}_{4-δ} (C1)
wherein, each independently,
R^{g1} is H or a monovalent organic group,
R^{g2} is a monovalent organic group, and
δ is an integer of 2-4;
and preferably is tetraethoxysilane, tetramethoxysilane, methyltriethoxysilane, methyltrimethoxysilane, dimethyldimethoxysilane, dimethyltrimethoxysilane, aminopropyltriethoxysilane, aminopropyltrimethoxysilane, tridecafluoro-n-octyltriethoxysilane, or tridecafluoro-n-octyltrimethoxysilane.

14. The composition of any of claims 1-13, wherein the catalyst (D) is an acid, a base, a transition metal, or a metal complex selected from tin-based catalysts, titanium-based catalysts, zirconia-based catalysts, bismuth-based catalysts, and organic amine-based catalysts;
and preferably is acetic acid, trifluoroacetic acid, ammonia, triethylamine, diethylamine, Ti, Ni, Sn, di-n-butyltin(IV) dilaurate, titanium diisopropoxy bis(ethylacetoacetate), titanium tetra-n-butoxide, titanium tetra-2-ethylhexoxide, titanium tetraacetylacetonate, zirconium tetraacetylacetonate, zirconium tetra-n-butoxide, zirconium dibutoxy bis(ethylacetoacetate), or bismuth tris(2-ethylhexanoate).

15. The composition of any of claims 1-14, wherein the radical polymerization initiator (E) is a diketone, an acyloin, an acyloin ether, a thioxanthone, a benzophenone, an acetophenone, a quinone, an aminobenzoic acid, a halogen compound, an acylphosphine oxide, or a peroxide;
and preferably is benzoin, benzoin methyl ether, benzoin ethyl ether, benzoin isopropyl ether, thioxanthone, 2,4-diethylthioxanthone, thioxanthone-4-sulfonic acid, benzophenone, 4,4'-bis(dimethylamino)benzophenone, 4,4'-bis(diethylamino)benzophenone, acetophenone, 2-(4-toluenesulfonyloxy)-2-phenylacetophenone, p-dimethylaminoacetophenone, 2,2'-dimethoxy-2-phenylacetophenone, p-methoxyacetophenone, 2-methyl[4-(methylthio)phenyl]-2-morpholino-1-propanone, 2-benzyl-2-dimethylamino-1-(4-morpholinophenyl)-butan-1-one, anthraquinone, 1,4-naphthoquinone, ethyl 2-dimethylaminobenzoate, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, phenacyl chloride, trihalomethylphenylsulfone, acylphosphine oxide, or di-t-butyl peroxide, methyl benzoylformate, 1-hydroxycyclohexyl-phenyl-ketone, 1-[4-(2-hydroxyethoxy)-phenyl]-2-hydroxy-2-methyl-1-propan-1-one, 2-hydroxy-1-{4-[4-(2-hydroxy-2-methyl-propionyl)- benzyl]phenyl}-2-methyl-propan-1-one, 2-methyl-1-(4-methylthiophenyl)-2-morpholinopropan-1-one, 2-benzyl-2-dimethylamino-1-(4-morpholinophenyl)-1-butanone, 2-(dimethylamino)-2-[(4-methylphenyl)methyl]-1-[4-(4-morpholinyl)phenyl]-1-butanone, bis(2,4,6-trimethylbenzoyl)-phenylphosphine oxide, bis(η5-2,4-cyclopentadien-1-yl)-bis(2,6-difluoro-3-(1H-pyrrol-1-yl)-phenyl)titanium, 1,2-octanedione, 1-[4-(phenylthio)-, 2-(O-benzoyloxime)], ethanone, 1-[9-ethyl-6-(2-methylbenzoyl)-9H-carbazol-3-yl]-, 1-(0-acetyloxime), 2-hydroxy-2-methyl-1-phenyl-propan-1-one, 2,4,6-trimethylbenzoyl-diphenyl-phosphine oxide, t-butyl hydroperoxide, cumene hydroperoxide, diisopropylbenzene hydroperoxide, paramenthane hydroperoxide, or t-methylbutyl hydroperoxide.

16. The composition of any of claims 1-15, further comprising a solvent.

17. A cured product obtained from the composition of any of claims 1-16.

18. An article comprising a substrate and, on a surface of the substrate, a layer formed from the composition of any of claims 1-16.

## Patentansprüche

1. Zusammensetzung, die eine härtbare Zusammensetzung, umfassend die folgenden Komponenten (A)-(E), ist:
(A) eine fluorpolyethergruppenhaltige Acrylverbindung, die eine (Meth)acrylgruppe, eine hydrolysierbare Silangruppe und eine Fluorpolyethergruppe enthält,
(B) eine fluorpolyethergruppenhaltige Silanverbindung, die eine Fluorpolyethergruppe und eine hydrolysierbare Silylgruppe enthält,
(C) ein Vernetzungsmittel,
(D) einen Katalysator und
(E) einen Initiator einer radikalischen Polymerisation.

2. Zusammensetzung nach Anspruch 1, die 10-80 Masse-%, vorzugsweise 30-70 Masse-%, der Komponente (A), bezogen auf die gesamten Komponenten (A) und (B), enthält.

3. Zusammensetzung nach Anspruch 1 oder 2, wobei Komponente (A) eine Verbindung einer der Formeln (A1)-(A3) umfasst:
R^{F1}-X^{A}-X^{B}R^{Ac}ₘ (A1)
R^{AC}ₘX^{B}-X^{A}-R^{F2}-X^{A}-X^{B}R^{Ac}ₘ (A2)
R^{Ac}ₘX^{B}-X^{A}-[R^{F2}-R^{g}-R^{a}(R^{Ac})ₘ₃-R^{g})ₓ-R^{F2}-X^{A}-X^{B}R^{Ac}ₘ (A3)
worin jeweils unabhängig bei jedem Vorkommen
R^{F1} Rf¹-R^{F}-O_{q}- ist,
R^{F2} Rf²ₚ-R^{F}-O_{q}- ist,
Rf¹ C₁₋₁₆-Alkyl, optional substituiert mit F, ist,
Rf² C₁₋₆-Alkylen, optional substituiert mit F, ist,
R^{F} eine zweiwertige Fluorpolyethergruppe,
vorzugsweise eine Gruppe der Formel:
-(OC₆F₁₂)ₐ-(OC₅F₁₀)_{b}-(OC₄F₈)_{c}-(OC₃R^{Fa}₆)_{d}- (OC₂F₄)ₑ-(OCF₂)_{f}-,
worin
R^{Fa} jeweils unabhängig H, F oder Cl ist und
a-f jeweils unabhängig eine ganze Zahl von 0-200 sind, wobei (a+b+c+d+e+f) ≥ 1 ist und die Reihenfolge der
Wiederholungseinheiten in den mit a-f versehenen Klammern nicht beschränkt ist,
vorausgesetzt, dass, wenn alle R^{Fa}-Gruppen H oder Cl sind, mindestens eines von a-c, e und f ≥ 1 ist, und
besonders bevorzugt eine Gruppe einer der Formeln (f1)-(f6), ist:
-(OC₃F₆)_{d}-(OC₂F₄)ₑ- (f1)
worin d eine ganze Zahl von 1-200 ist und e 0 oder 1 ist,
-(OC₄F₈)_{c}-(OC₃F₆)_{d}-(OC₂F₄)ₑ-(OCF₂)_{f}- (f2)
worin c und d jeweils eine ganze Zahl von 0-30 sind, e und f jeweils unabhängig eine ganze Zahl von 1-200 sind, (c+d+e+f) eine ganze Zahl von 10-200 ist und die Reihenfolge der Wiederholungseinheiten in den mit den Tiefstellungen c-f versehenen Klammern nicht beschränkt ist,
-(R⁶-R⁷)_{g}- (f3)
-(R⁶-R⁷)_{g}-R^{r}-(R^{7'}-R^{6'})_{q'} (f4)
worin
R⁶ OCF₂ oder OC₂F₄ ist,
R⁷ eine Gruppe, ausgewählt aus OC₂F₄, OC₃F₆, OC₄F₈, OC₅F₁₀, OC₆F₁₂ und Kombinationen aus zwei oder drei Gruppen, ausgewählt aus diesen Gruppen, ist,
g eine ganze Zahl von 2-100 ist,
R^{6'} OCF₂ oder OC₂F₄ ist,
R^{7'} eine Gruppe, ausgewählt aus OC₂F₄, OC₃F₆, OC₄F₈, OC₅F₁₀, OC₆F₁₂ und Kombinationen aus zwei oder drei Gruppen, ausgewählt aus diesen Gruppen, ist,
g' eine ganze Zahl von 2-100 ist und
R^{r} eine der folgenden Gruppen ist, worin * eine Bindungsposition darstellt: 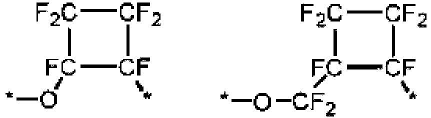 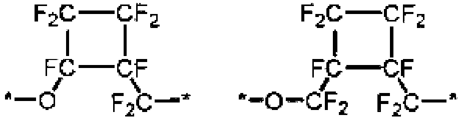 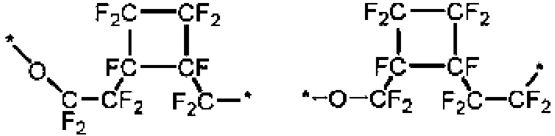 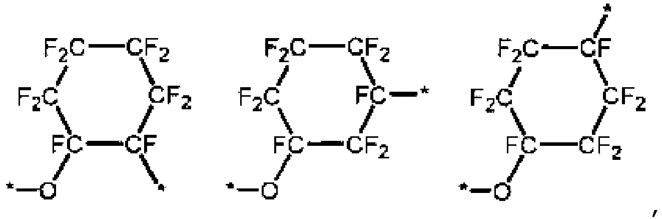
-(OC₆F₁₂)ₐ-(OC₅F₁₀)_{b}-(OC₄F₈)_{c}-(OC₃F₆)_{d}- (OC₂F₄)ₑ-(OCF₂)_{f}- (f5)
worin e eine ganze Zahl von 1-200 ist, a-d und f jeweils unabhängig eine ganze Zahl von 0-200 sind, (a+b+c+d+e+f) ≥ 1 ist und die Reihenfolge der Wiederholungseinheiten in den mit a-f versehenen Klammern nicht beschränkt ist, und
-(OC₆F₁₂)ₐ-(OC₅F₁₀)_{b}-(OC₄F₈)_{c}-(OC₃F₆)_{d}- (OC₂F₄)ₑ-(OCF₂)_{f}- (f6)
worin f eine ganze Zahl von 1-200 ist, a-e jeweils unabhängig eine ganze Zahl von 0-200 sind, (a+b+c+d+e+f) ≥ 1 ist und die Reihenfolge der Wiederholungseinheiten in den mit a-f versehenen Klammern nicht beschränkt ist,
p 0 oder 1 ist,
q 0 oder 1 ist,
X^{A} eine Einfachbindung oder eine zweiwertige organische Gruppe ist,
X^{B} eine (m+1)-wertige Gruppe ist,
vorausgesetzt, dass in jeder Formel mindestens ein X^{B} eine (m+1)-wertige Gruppe ist, die eine hydrolysierbare Silylgruppe enthält,
R^{Ac} -X^{D}-X^{E}-(-X^{F}-OCO-CR⁵=CH₂)_{m'} ist,
X^{D} eine Einfachbindung oder eine zweiwertige Gruppe ist,
X^{E} eine Einfachbindung oder eine (m'-1)-wertige Gruppe ist,
X^{F} eine Einfachbindung oder eine zweiwertige Gruppe ist,
R⁵ H, Halogen oder eine einwertige organische C₁₋₈-Gruppe ist,
m' eine ganze Zahl von 1-10 ist,
m eine ganze Zahl von 0-10 ist,
R^{a} eine (m3+2)-wertige organische Gruppe ist,
m3 eine ganze Zahl von 0-4 ist,
vorausgesetzt, dass mindestens eines von m und m3 ≥ 1 ist,
R^{g} -NR^{c}CO-R^{e}-, -NR^{c}COO-R^{e}- oder -NR^{c}CONR^{c}-R^{e}- ist, wobei diese Gruppen auf ihrer linken Seite an R^{a} gebunden sind,
R^{c} H, C₁₋₆-Alkyl oder C₆₋₁₆-Aryl, vorzugsweise H oder C₁₋₆-Alkyl, ist,
R^{e} eine Einfachbindung oder eine zweiwertige organische Gruppe ist und
x eine ganze Zahl von ≥ 1, vorzugsweise 1-5, ist.

4. Zusammensetzung nach Anspruch 3, wobei
(1)
X^{E} (i) eine Einfachbindung oder (ii) -X^{G}-X^{H} ist, worin
X^{G} eine Einfachbindung C₁₋₆-Alkylen, -(CH₂)_{z9}-O-(CH₂)_{z10}-, worin z9 und 710 jeweils unabhängig eine ganze Zahl von 0-6 sind, oder -(CH₂)_{z11}-Phenylen-(CH₂)_{z12}-, worin z11 und z12 jeweils unabhängig eine ganze Zahl 0-6 sind, ist und
X^{H} eines der Folgenden ist: >N-, >C< oder >C(R⁸)-, worin R⁸ H oder C₁₋₆-Alkyl ist, und/oder
(2) X^{D} -O-, -CO-, -COO-, -OCO-, -CONH-, NHCO-, -OCONH-, -NCOO-, -NH-CO-NH-, -CH₂OHCH(OH)CH₂-, -CH(CH₂OH)CH₂-, -(OSi R¹⁴₂)_{d5}- ist, 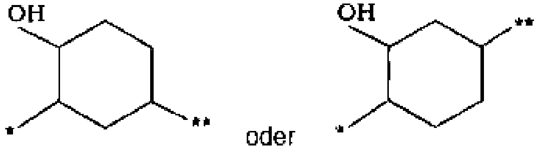 worin * und ** Bindungspositionen darstellen und * an X^{B} gebunden ist und ** an X^{E} gebunden ist, R¹⁴ C₁₋₆-Alkyl oder C₆₋₁₆-Aryl ist und d5 eine ganze Zahl von 1-10 ist, und/oder
(3) X^{F} eine Einfachbindung, C₁₋₆-Alkylen, -(CH₂)_{z5}-O-(CH₂)_{z6}-, worin z5 und z6 jeweils unabhängig eine ganze Zahl von 0-6 sind, oder -(CH₂)_{z7}-Phenylen-(CH₂)_{z8}-, worin z7 und z8 jeweils unabhängig eine ganze Zahl von 0-6 sind, ist und/oder
(4) R⁵ H oder Methyl ist.

5. Zusammensetzung nach Anspruch 3 oder 4, worin X^{A} jeweils unabhängig eine Einfachbindung oder eine Gruppe der Formel:
-(C_{α}R¹¹_{2α})ₛ₁-R¹²ₜ₁-
ist,
worin
R¹¹ jeweils unabhängig H oder F ist,
α jeweils unabhängig eine ganze Zahl von 1-10 ist,
R¹² jeweils unabhängig -O-, -CO-, -NR¹⁰-, -CONR¹⁰-, -NR¹⁰-CO-, -COO-, -OCO- oder -OCONH- ist,
R¹⁰ H oder C₁₋₆-Alkyl ist, und
s1 und t1 jeweils unabhängig eine ganze Zahl von 0-3 sind und $\left(s1+t1\right) \geq 1$ ist
und die Reihenfolge der Wiederholungseinheiten in den mit s1 oder t1 versehenen Klammern nicht beschränkt ist,
und vorzugsweise X^{A}
-CONR¹⁰-C_{α1}H_{2α1}-, -(C_{α2}H_{2α2})-OCONR¹⁰-, -(C_{α3}H_{2α3})- oder -C_{α4}H_{2α4})-O-(C_{α5}H_{2α5}) ist, worin
R¹⁰ H oder C₁₋₆-Alkyl ist,
α1-α3 jeweils unabhängig eine ganze Zahl von 1-10 sind und
α4, α5 jeweils unabhängig eine ganze Zahl von 0-6 sind.

6. Zusammensetzung gemäß einem der Ansprüche 3-5, worin X^{B} jeweils unabhängig
(1) eine Gruppe, die eine Gruppe der Formel:
SiR¹_{nb}R^{sb}_{4-nb}
enthält,
worin R¹ OH oder eine hydrolysierbare Gruppe ist, R^{sb} eine Einfachbindung ist und nb 1 oder 2 ist, oder
(2) eine durch X^{Ba}(R^{Si})ₙₐ dargestellte Gruppe ist, worin jeweils unabhängig
X^{Ba} eine (m+na+1)-wertige Gruppe ist,
R^{Si} -X^{c}-SiR¹_{n'}R²_{3-n'} ist,
X^{c} eine zweiwertige organische C₁₋₁₀-Gruppe, vorzugsweise C₁₋₆-Alkylen, oder -(CH₂)_{z1}-O-(CH₂)_{z2}-, -(CH₂)_{z3}-Phenylen-(CH₂)_{z4}- oder -(CH₂)_{z13}-OCONH-(CH₂)_{z14}- ist, worin z1-z4, z13 und z14 jeweils unabhängig eine ganze Zahl von 0-6 sind,
R¹ OH oder eine hydrolysierbare Gruppe ist,
R² H oder eine einwertige organische Gruppe ist,
n' eine ganze Zahl von 1-3, vorzugsweise 3, ist und
na eine ganze Zahl von 1-10 ist.

7. Zusammensetzung nach einem von Anspruch 6, worin X^{Ba} (i) eine dreiwertige Gruppe oder (ii) N oder -C(-O-)- ist und n = m = 1 ist.

8. Zusammensetzung nach einem der Ansprüche 3-7, worin Formel (A3) die folgende ist:
R^{b}₂N-R^{d}-CO-(R^{F2}-CO-NR^{c}-R^{a}(R^{Ac})ₘ₃-NRc-CO)ₓ-R^{F2}-CO-R^{d}-NR^{b}₂ (A3-b)
worin jeweils unabhängig
R^{b} R^{Si}, R^{Ac} oder R^{c} ist, wobei mindestens ein R^{b} R^{Si} ist,
R^{Si} -X^{c}-SiR¹_{n'}R²_{3-n'} ist,
X^{c} eine zweiwertige organische C₁₋₁₀-Gruppe ist,
R¹ OH oder eine hydrolysierbare Gruppe ist,
R² H oder eine einwertige organische Gruppe ist,
n' eine ganze Zahl von 1-3 ist,
und vorzugsweise eines von R^{b}, das an das an jedem Ende in der Formel (A3) positionierte N-Atom gebunden ist, R^{Si} ist und das andere R^{c} oder R^{Ac} ist,
R^{d} eine Einfachbindung oder eine zweiwertige organische Gruppe ist und vorzugsweise jeweils unabhängig eine Einfachbindung oder -(CH₂)_{z17}-NR¹⁰-(CH₂)_{z18}-, worin R¹⁰ H oder C₁₋₆-Alkyl ist, ist und z17 und z18 jeweils unabhängig eine ganze Zahl von 0-6 sind, und
R^{F2}, R^{a}, R^{c}, R^{Ac}, m3 und x so wie in Anspruch 3 definiert sind.

9. Zusammensetzung nach einem der Ansprüche 3-8, worin R^{a} jeweils unabhängig eine Gruppe der Formel:
-R⁹-(R^{a'}-R⁹)ₖ-
ist,
worin
R9 jeweils unabhängig C₁₋₆-Akylen ist,
R^{a}' jeweils unabhängig eine dreiwertige Gruppe, vorzugsweise N, -C(-O-)-, eine dreiwertige Gruppe, die optional eine Aminobindung, eine Amidbindung, eine Urethanbindung, eine Harnstoffbindung, eine Etherbindung oder eine Esterbindung zwischen Kohlenstoff-Kohlenstoffatomen enthält, ist und
k eine ganze Zahl von 1-4, vorzugsweise 1 oder 2, ist.

10. Zusammensetzung nach einem der Ansprüche 3-9, worin Komponente (A) (i) eine Verbindung der Formel (A1) oder (A2) oder (ii) eine Verbindung der Formel (A3) umfasst.

11. Zusammensetzung nach einem der Ansprüche 1-10, worin Komponente (B)
(1) eine Verbindung der Formel (B1) oder (B2):
R^{F3}_{α}-X^{Z}-R^{Si}_{β} (B1)
R^{Si}_{γ}-x^{Z}-R^{F4}-X^{Z}-R^{Si}_{γ} (B2)
worin jeweils unabhängig bei jedem Vorkommen
R^{F3} Rf³-R^{FB}-O_{q3}- ist,
R^{F4} -Rf⁴ₚ₃-R^{FB}-O_{q3}- ist,
Rf³ C₁₋₁₆-Alkyl, optional substituiert mit F, ist,
Rf⁴ C₁₋₆-Alkylen, optional substituiert mit F, ist,
R^{FB} eine zweiwertige Fluorpolyethergruppe und vorzugsweise eine Gruppe der Formel: -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}- ist,
worin jedes R^{Fa} unabhängig H, F oder Cl ist und a-f jeweils unabhängig eine ganze Zahl von 0-200 sind, (a+b+c+d+e+f) ≥ 1 ist und die Reihenfolge der Wiederholungseinheiten in den mit a-f versehenen Klammern nicht beschränkt ist, vorausgesetzt, dass, wenn alle R^{Fa}-Gruppen H oder F sind, mindestens eines von a-c, e und f ≥ 1 ist,
p3 0 oder 1 ist,
q3 0 oder 1 ist,
R^{Si} eine einwertige Gruppe ist, die Si enthält, an das H, OH, eine hydrolysierbare Gruppe oder eine einwertige organische Gruppe gebunden ist, und mindestens ein R^{Si} enthält, an das OH oder eine hydrolysierbare Gruppe gebunden ist,
X^{Z} eine Einfachbindung oder eine zwei- bis zehnwertige organische Gruppe ist,
α eine ganze Zahl von 1-9 ist,
β eine ganze Zahl von 1-9 ist und
γ eine ganze Zahl von 1-9 ist, oder
(2) eine Verbindung der Formel (B3) ist:
R³⁹ⱼ-R³⁸-NR³⁷CO-(R^{F4}-CONR³⁷-R³⁶-NR³⁷CO)ᵣ-R^{F4}- CONR³⁷-R³⁸-R³⁹ⱼ (B3)
worin jeweils unabhängig bei jedem Vorkommen
R^{F4} so wie oben definiert ist,
R³⁶ eine zweiwertige organische Gruppe ist
R³⁷ H oder eine einwertige organische C₁₋₈-Gruppe ist,
R³⁸ eine (j+1)-wertige organische Gruppe ist,
R³⁹ -SiR²⁵ₙ₁R²⁶₃₋ₙ₁ ist,
R²⁵ OH oder eine hydrolysierbare Gruppe ist,
R²⁶ H oder eine einwertige organische Gruppe ist,
n1 eine ganze Zahl von 0-3 für jede (SiR²⁵ₙ₁R²⁶₃₋ₙ₁)-Einheit ist,
j eine ganze Zahl von 1-9 ist und
r eine ganze Zahl von ≥ 1 ist.

12. Zusammensetzung nach Anspruch 11, worin Komponente (B) eine Verbindung der Formel (B1) oder (B2) ist, worin R^{Si} eine Gruppe einer der Formeln (S1)-(S5) ist: 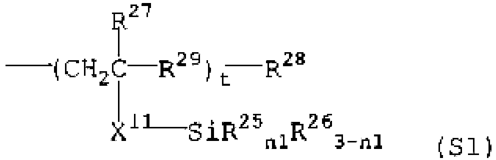
-SiR²⁵ₙₗR²⁶₃₋ₙₗ (S2)
worin jeweils unabhängig bei jedem Vorkommen
R²⁵ OH oder eine hydrolysierbare Gruppe ist,
R²⁶ H oder eine einwertige organische Gruppe ist,
n1 eine ganze Zahl von 0-3 für jede (SiR²⁵ₙ₁R²⁶₃₋ₙ₁)-Einheit ist,
X¹¹ eine Einfachbindung oder eine zweiwertige organische Gruppe ist,
R²⁷ H oder eine einwertige organische Gruppe ist,
t eine ganze Zahl von ≥ 2 ist,
R²⁸ H, Halogen oder -X¹¹-SiR²⁵ₙ₁R²⁶₃₋ₙ₁ ist und
R²⁹ eine Einfachbindung, -O-, C₁₋₆-Alkylen oder C₁₋₆-Alkylenoxy ist,
-SiR^{a1}ₖ₁R^{b1}ₗ₁R^{c1}ₘ₁ (S3)
worin jeweils unabhängig bei jedem Vorkommen
R^{a1} -Z¹-SiR²¹ₚ₁R²²_{q1}R²³ᵣ₁ ist,
Z¹ -O- oder eine zweiwertige organische Gruppe ist,
R²¹ jeweils unabhängig
-Z^{1'} -SiR^{21'}_{p1'}R^{22'}_{q1'}R^{23'}_{r1'} ist,
Z^{1'} -O- oder eine zweiwertige organische Gruppe ist,
R^{21'} -Z^{1"}-SiR^{21"}_{p1"}R^{22"}_{q1"}R^{23"}_{r1"} ist,
Z^{1"} -O- oder eine zweiwertige organische Gruppe ist,
R^{22"} OH oder eine hydrolysierbare Gruppe ist,
R^{23"} H oder eine einwertige organische Gruppe ist,
q1" eine ganze Zahl von 0-3 ist,
r1" eine ganze Zahl von 0-3 ist,
R^{22'} OH oder eine hydrolysierbare Gruppe ist,
R^{23'} H oder eine einwertige organische Gruppe ist,
p1' eine ganze Zahl von 0-3 ist,
q1' eine ganze Zahl von 0-3 ist,
r1' eine ganze Zahl von 0-3 ist,
R²² OH oder eine hydrolysierbare Gruppe ist
R²³ H oder eine einwertige organische Gruppe ist,
p1 eine ganze Zahl von 0-3 ist,
q1 eine ganze Zahl von 0-3 ist,
r1 eine ganze Zahl von 0-3 ist,
R^{b1} OH oder eine hydrolysierbare Gruppe ist,
R^{c1} H oder eine einwertige organische Gruppe ist,
k1 eine ganze Zahl von 0-3 ist,
11 eine ganze Zahl von 0-3 ist,
m1 eine ganze Zahl von 0-3 ist,
-CR^{d1}ₖ₂R^{e1}ₗ₂R^{f1}ₘ₂ (S4)
worin jeweils unabhängig bei jedem Vorkommen
R^{d1} -Z²-CR³¹ₚ₂R³²_{q2}R³³ᵣ₂ ist,
Z² eine Einfachbindung, -O- oder eine zweiwertige organische Gruppe ist,
R³¹ -Z^{2'}₋CR^{32'}_{q2'}R^{33'}ᵣ₂ ist,
Z²' eine Einfachbindung, -O- oder eine zweiwertige organische Gruppe ist,
R³²' -Z³-SiR³⁴ₙ₂R³⁵₃₋ₙ₂ ist,
Z³ eine Einfachbindung, -O- oder eine zweiwertige organische Gruppe ist,
R³⁴ OH oder eine hydrolysierbare Gruppe ist,
R³⁵ H oder eine einwertige organische Gruppe ist,
n2 eine ganze Zahl von 0-3 ist,
R^{33'} H, OH oder eine einwertige organische Gruppe ist,
q2' eine ganze Zahl von 0-3 ist,
r2' eine ganze Zahl von 0-3 ist,
R³² -Z³-SiR³⁴ₙ₂R³⁵₃₋ₙ₂ ist,
R³³ H, OH oder eine einwertige organische Gruppe ist,
p2 eine ganze Zahl von 0-3 ist,
q2 eine ganze Zahl von 0-3 ist,
r2 eine ganze Zahl von 0-3 ist
R^{e1} -Z³-SiR³⁴ₙ₂R³⁵₃₋ₙ₂ ist,
R^{f1} H, OH oder eine einwertige organische Gruppe ist,
k2 eine ganze Zahl von 0-3 ist,
12 eine ganze Zahl von 0-3 ist,
m2 eine ganze Zahl von 0-3 ist,
-NR^{g1}_{R}^{h1} (S5)
worin jeweils unabhängig bei jedem Vorkommen
R^{g1}, R^{h1} jeweils unabhängig -Z⁴-SiR²⁵ₙ₁R²⁶₃₋ₙ₂, -Z⁴-SiR^{a1}ₖ₁R^{b1}ₗ₁R^{c1}ₘ₁ oder -Z⁴-CR^{d1}ₖ₂R^{e1}₁₂R^{f1}ₘ₂ sind und
Z4 eine Einfachbindung, -O- oder eine zweiwertige organische Gruppe ist,
vorausgesetzt, dass in den Formeln (S1)-(S5) mindestens ein Si-Atom vorhanden ist, an das OH oder eine hydrolysierbare Gruppe gebunden ist.

13. Zusammensetzung nach einem der Ansprüche 1-12, worin das Vernetzungsmittel (C) eine Verbindung der Formel (C1) ist:
(R^{g1}-O)_{δ}-Si-R^{g2}_{4-δ} (C1)
worin jeweils unabhängig
R^{g1} H oder eine einwertige organische Gruppe ist,
R^{g2} eine einwertige organische Gruppe ist und
δ eine ganze Zahl von 2-4 ist,
und vorzugsweise Tetraethoxysilan, Tetramethoxysilan, Methyltriethoxysilan, Methyltrimethoxysilan, Dimethyldimethoxysilan, Dimethyltrimethoxysilan, Aminopropyltriethoxysilan, Aminopropyltrimethoxysilan, Tridecafluor-n-octyltriethoxysilan oder Tridecafluor-n-octyltrimethoxysilan ist.

14. Zusammensetzung nach einem der Ansprüche 1-13, worin der Katalysator (D) eine Säure, eine Base, ein Übergangsmetall oder ein Metallkomplex, ausgewählt aus Katalysatoren auf Zinnbasis, Katalysatoren auf Titanbasis, Katalysatoren auf Zirkoniumoxidbasis, Katalysatoren auf Bismutbasis und Katalysatoren auf Basis eines organischen Amins, ist,
und vorzugsweise Essigsäure, Trifluoressigsäure, Ammoniak, Triethylamin, Diethylamin, Ti, Ni, Sn, Di-n-butylzinn (IV) dilaurat, Titaniumdiisopropoxybis(ethylacetoacetat), Titaniumtetra-n-butoxid, Titaniumtetra-2-ethylhexoxid, Titaniumtetraacetylacetonat, Zirkoniumtetraacetylacetonat, Zirkoniumtetra-n-butoxid, Zirkoniumdibutoxybis(ethylacetoacetat) oder Bismuttris(2-ethylhexanoat) ist.

15. Zusammensetzung nach einem der Ansprüche 1-14, worin der Initiator einer radikalischen Polymerisation (E) ein Diketon, ein Acyloin, ein Acyloinether, ein Thioxanthon, ein Benzophenon, ein Acetophenon, ein Chinon, eine Aminobenzoesäure, eine Halogenverbindung, ein Acylphosphinoxid oder ein Peroxid ist,
und vorzugsweise Benzoin, Benzoinmethylether, Benzoinethylether, Benzoinisopropylether, Thioxanthon, 2,4-Diethylthioxanthon, Thioxanthon-4-sulfonsäure, Benzophenon, 4,4'-Bis(dimethylamino)benzophenon, 4,4'-Bis(diethylamino)benzophenon, Acetophenon, 2-(4-Toluolsulfonyloxy)-2-phenylacetophenon, p-Dimethylaminoacetophenon, 2,2'-Dimethoxy-2-phenylacetophenon, p-Methoxyacetophenon, 2-Methyl[4-(methylthio)phenyl]-2-morpholino-1-propanon, 2-Benzyl-2-dimethylamino-1-(4-morpholinophenyl)-butan-1-on, Anthrachinon, 1,4-Naphthochinon, Ethyl-2-dimethylaminobenzoat, Ethyl-4-dimethylaminobenzoat, (n-Butoxy)ethyl-4-dimethylaminobenzoat, Isoamyl-4-dimethylaminobenzoat, 2-Ethylhexyl-4-dimethylaminobenzoat, Phenacylchlorid, Trihalomethylphenylsulfon, Acylphosphinoxid oder Dit-butylperoxid, Methylbenzoylformiat, 1-Hydroxycyclohexylphenylketon, 1-[4-(2-Hydroxyethoxy)-phenyl]-2-hydroxy-2-methyl-1-propan-1-on, 2-Hydroxy-1-{4-[4-(2-hydroxy-2-methyl-propionyl)-benzyl]phenyl}-2-methyl-propan-1-on, 2-Methyl-1-(4-methylthiophenyl)-2-morpholinopropan-1-on, 2-Benzyl-2-dimethylamino-1-(4-morpholinophenyl)-1-butanon, 2-(Dimethylamino)-2-[(4-methylphenyl)methyl]-1-[4-(4-morpholinyl)phenyl]-1-butanon, Bis(2,4,6-trimethylbenzoyl)-phenylphosphinoxid, Bis(η5-2,4-cyclopentadien-1-yl)-bis(2,6-difluor-3-(1H-pyrrol-1-yl)-phenyl)titan, 1,2-Octandion, 1-[4-(Phenylthio)-, 2-(O-benzoyloxim)], Ethanon, 1-[9-Ethyl-6-(2-methylbenzoyl)-9H-carbazol-3-yl]-, 1-(0-Acetyloxim), 2-Hydroxy-2-methyl-1-phenyl-propan-1-on, 2,4,6-Trimethylbenzoyldiphenylphosphinoxid, t-Butylhydroperoxid, Cumolhydroperoxid, Diisopropylbenzolhydroperoxid, Paramenthanhydroperoxid oder t-Methylbutylhydroperoxid ist.

16. Zusammensetzung nach einem der Ansprüche 1-15, ferner umfassend
ein Lösungsmittel.

17. Gehärtetes Produkt, erhalten aus der Zusammensetzung nach einem der Ansprüche 1-16.

18. Gegenstand, umfassend ein Substrat und auf einer Oberfläche des Substrats eine aus der Zusammensetzung nach einem der Ansprüche 1-16 gebildete Schicht.

## Revendications

1. Composition, qui est une composition durcissable comprenant les composants (A) - (E) suivants :
(A) un composé acrylique contenant un groupe fluoropolyéther contenant un groupe (méth)acrylique, un groupe silane hydrolysable et un groupe fluoropolyéther ;
(B) un composé silane contenant un groupe fluoropolyéther, contenant un groupe fluoropolyéther et un groupe silyle hydrolysable ;
(C) un agent de réticulation ;
(D) un catalyseur ; et
(E) un initiateur de polymérisation radicalaire.

2. Composition selon la revendication 1, qui contient 10-80 % en masse, de préférence 30-70 % en masse, du composant (A), par rapport à l'ensemble des composants (A) et (B).

3. Composition selon la revendication 1 ou la revendication 2, dans laquelle le composant (A) comprend un composé de l'une quelconque des formules (A1) - (A3) :
R^{F1}-X^{A}-X^{B}R^{Ac}ₘ (A1)
R^{Ac}ₘX^{B}-X^{A}-R^{F2}-X^{A}-X^{B}R^{Ac}ₘ (A2)
R^{Ac}ₘX^{B}-X^{A}-[R^{F2}-R^{g}-R^{a} (R^{Ac})ₘ₃-R^{g}) ₓ-R^{F2}-X^{A}-X^{B}R^{Ac}ₘ (A3)
dans laquelle, chacun indépendamment à chaque occurrence,
R^{F1} est Rf¹-R^{F}-O_{q}-,
R^{F2} est -Rf²ₚ-R^{F}-O_{q}-,
Rf¹ est alkyle en C₁₋₁₆ éventuellement substitué par F,
Rf² est alkylène en C₁₋₆ éventuellement substitué par F,
R^{F} est un groupe fluoropolyéther divalent ;
de préférence un groupe de la formule :
- (OC₆F₁₂)ₐ- (OC₅F₁₀)_{b}- (OC₄F₈)_{c}- (OC₃R^{Fa}₆)_{d}- (OC₂F₄)ₑ- (OCF₂)_{f}-
dans laquelle
chaque R^{Fa} est indépendamment H, F ou Cl, et
a-f sont chacun indépendamment un nombre entier de 0-200, avec (a+b+c+d+e+f) ≥ 1, et l'ordre des motifs de répétition entre parenthèses suivis de a-f n'est pas limité,
sous réserve que lorsque tous les groupes R^{Fa} sont H ou Cl, au moins l'un parmi a-c, e et f soit ≥ 1 ; et
plus préférentiellement un groupe de l'une quelconque des formules (f1) - (f6) :
- (OC₃F₆)_{d}-(OC₂F₄)ₑ- (f1)
dans laquelle d est un nombre entier de 1-200 et e est 0 ou 1,
- (OC₄F₈)_{c}- (OC₃F₆)_{d}- (OC₂F₄)ₑ- (OCF₂)_{f}- (f2)
dans laquelle c et d sont chacun indépendamment un nombre entier de 0-30 ; e et f sont chacun indépendamment un nombre entier de 1-200 ; (c+d+e+f) est un nombre entier de 10-200 ; et l'ordre des motifs de répétition entre parenthèses portant des indices c-f n'est pas limité,
-(R⁶-R⁷)_{g}- (f3)
- (R⁶-R⁷)_{g}-R^{r}- (R⁷' -R⁶')_{g'}- (f4)
dans laquelle
R⁶ is OCF₂ ou OC₂F₄ ;
R⁷ est un groupe sélectionné parmi OC₂F₄, OC₃F₆, OC₄F₈, OC₅F₁₀, OC₆F₁₂, et des combinaisons de deux ou trois groupes sélectionnés parmi ces groupes ;
9 est un nombre entier de 2-100,
R⁶' est OCF₂ ou OC₂F₄ ;
R⁷' est un groupe sélectionné parmi OC₂F₄, OC₃F₆, OC₄F₈, OC₅F₁₀, OC₆F₁₂, et des combinaisons de deux ou trois groupes sélectionnés parmi ces groupes ;
g' est un nombre entier de 2-100 ; et
R^{r} est l'un quelconque des groupes suivants, dans laquelle * représente une position de liaison : 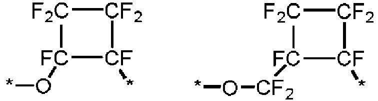 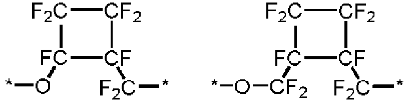 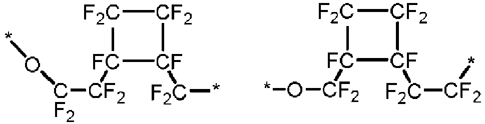 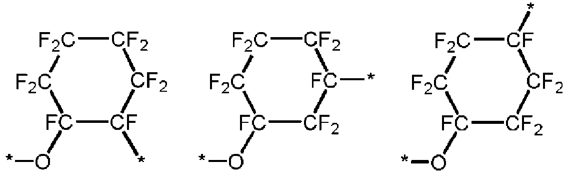
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5),
dans laquelle e est un nombre entier de 1-200 ; a-d et f sont chacun indépendamment un nombre entier de 0-200 ;
(a+b+c+d+e+f) est ≥ 1 ; et l'ordre des motifs de répétition entre parenthèses suivis de a-f n'est pas limité, et
- (OC₆F₁₂)ₐ- (OC₅F₁₀)_{b}- (OC₄F₈)_{c}- (OC₃F₆)_{d}-(OC₂F₄)ₑ- (OCF₂)_{f}- (f6),
dans laquelle f est un nombre entier de 1-200 ; a-e sont chacun indépendamment un nombre entier de 0-200 ;
(a+b+c+d+e+f) est ≥ 1 ; et l'ordre des motifs de répétition entre parenthèses suivis de a-f n'est pas limité,
p est 0 ou 1,
q est 0 ou 1,
X^{A} est une liaison simple ou un groupe organique divalent,
X^{B} est un groupe (m+1)-valent,
sous réserve que, dans chaque formule, au moins un X^{B} soit un groupe (m+1)-valent contenant un groupe silyle hydrolysable,
R^{Ac} est -X^{D}-X^{E} -(X^{F}-OCO-CR⁵=CH₂)_{m'},
X^{D} est une liaison simple ou un groupe divalent,
X^{E} est une liaison simple ou un groupe (m'+1)-valent,
X^{F} est une liaison simple ou un groupe divalent,
R⁵ est H, halogène, ou un groupe organique en C ₁₋₈ monovalent,
m est un nombre entier de 1-10,
m est un nombre entier de 0-10,
R^{a} est un groupe organique (m3+2)-valent,
m3 est un nombre entier de 0-4,
sous réserve qu'au moins un parmi m et m3 soit > 1,
R^{g} est -NR^{c}CO-R^{e}-, -NR^{c}COO-R^{e}-, ou -NR^{c}CONR^{c}-R^{e}-, ces groupes étant liés à R^{a} sur leur côté gauche,
R^{c} est H, alkyle en C₁₋₆ ou aryle en C₆₋₁₆, de préférence H ou alkyle en C₁₋₆,
R^{e} est une liaison simple ou un groupe organique divalent, et
X est un nombre entier ≥ 1, de préférence 1-5.

4. Composition selon la revendication 3, dans laquelle
(1)
X^{E} est (i) une liaison simple, ou (ii) est -X^{G}-X^{H}, dans laquelle
X^{G} est une liaison simple ; alkylène en C₁₋₆ ; -(CH₂)_{z9}-O-(CH₂)_{z10}- dans laquelle z9 et z10 sont chacun indépendamment un nombre entier de 0-6 ; ou - (CH₂) _{z11}-phénylène-(CH₂)_{z12}-, dans laquelle z11 et z12 sont chacun indépendamment un nombre entier de 0-6, et
X^{H} est l'un quelconque des suivants : >N-, >C< ou >C(R⁸)- dans laquelle R⁸ est H ou alkyle en C₁₋₆ ; et/ou
(2) X^{D} is -O-, -CO-, -COO-, -OCO-, -CONH-, -NHCO-, -OCONH-, -NHCOO-, - NH-CO-NH-, -CH₂CH(OH)CH₂-, -CH(CH₂OH)CH₂-, -(OSiR¹⁴₂)_{d5}-, 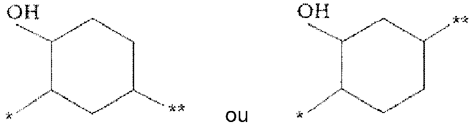 dans laquelle * et ** représentent des positions de liaison, et * est lié à X^{B} et ** est lié à X^{E}, R¹⁴ est alkyle en C₁₋₆ ou aryle en C₆₋₁₆, et d5 est un nombre entier de 1-10 ; et/ou
(3) X^{F} est une liaison simple ; alkylène en C₁₋₆; -(CH₂) _{z5}-O-(CH₂)_{z6}- dans laquelle z5 et z6 sont chacun indépendamment un nombre entier de 0-6 ; ou -(CH₂) _{z7}-phénylène-(CH₂)_{z8}-, dans laquelle z7 et z8 sont chacun indépendamment un nombre entier de 0-6 ; et/ou
(4)
R⁵ est H ou méthyle.

5. Composition selon la revendication 3 ou la revendication 4, dans laquelle chaque X^{A} est indépendamment une liaison simple ou un groupe de la formule :
-(C_{α}R¹¹_{2α}) ₛ₁-R¹²ₜ₁,-
dans laquelle
chaque R¹¹ est indépendamment H ou F,
chaque α est indépendamment un nombre entier de 1-10,
chaque R¹² est indépendamment -O-, -CO-, -NR¹⁰-, -CONR¹⁰-, -NR¹⁰CO-, -COO-, -OCO-, ou -OCONH-,
R¹⁰ est H ou alkyle en C₁₋₆, et
s1 et t1 sont chacun indépendamment un nombre entier de 0-3, et (s1+t1) est ≥ 1, et l'ordre des motifs de répétition entre parenthèses suivis de s1 ou t1 n'est pas limité ;
et de préférence, X^{A} est
-CONR¹⁰-C_{α1}H_{2α1}-, - (C_{α2}H_{2α2})-OCONR¹⁰-, -(C_{α3}H_{2α3})-,
ou
-(C_{α4}H_{2α4}) -O- (C_{α5}H_{2α5}), dans laquelle
R¹⁰ est H ou alkyle en C₁₋₆,
α1-α3 sont chacun indépendamment un nombre entier de 1-10, et
α4, α5 sont chacun indépendamment un nombre entier de 0-6.

6. Composition selon l'une quelconque des revendications 3 à 5, dans laquelle chaque X^{B} est indépendamment
(1) un groupe contenant un groupe de la formule :
SiR¹_{nb}R^{sb}_{4-nb}
dans laquelle R¹ est OH ou un groupe hydrolysable, R^{sb} est une liaison simple, et nb est 1 ou 2 ; ou
(2) un groupe représenté par X^{Ba}(R^{Si})ₙₐ, dans laquelle, chacun indépendamment
X^{Ba} est un groupe (m+na+1)-valent,
R^{Si} est -X^{C}-SiR¹_{n'}R²_{3-n'},
X^{C} est un groupe organique en C₁₋₁₀ divalent, de préférence alkylène en C₁₋₆; ou -(CH₂)_{z1}-O-(CH₂)_{z2}-, -(CH₂) _{z3}-phénylène-(CH₂) _{z4}- ou -(CH₂) _{z13}-OCONH- (CH₂) _{z14}-, dans laquelle z1-z4, z13 et z14 sont chacun indépendamment un nombre entier de 0-6, est OH ou un groupe hydrolysable,
R² est H ou un groupe organique monovalent,
n' est un nombre entier de 1-3, de préférence 3, et na est un nombre entier de 1-10.

7. Composition selon la revendication 6, dans laquelle X^{Ba} est (i) un groupe trivalent ou (ii) N ou -C(-O-)-, et n = m = 1.

8. Composition selon l'une quelconque des revendications 3 à 7, dans laquelle la formule (A3) est la suivante :
R^{b}₂N-R^{d}-CO- (R^{F2}-CO-NR^{c}-R^{a} (R^{Ac}) ₘ₃-NRc-CO) ₓ-R^{F2}-CO-R^{d}-NR^{b}₂ (A3-b)
dans laquelle, chacun indépendamment,
R^{b} est R^{Si}, R^{Ac}, ou R^{c}, au moins un R^{b} étant R^{Si},
R^{Si} est -X^{C}-SiR¹_{n'}R²_{3-n'},
X^{C} est un groupe organique en C₁₋₁₀ divalent, est OH ou groupe hydrolisable,
R² est H ou un groupe organique monovalent,
n' est un nombre entier de 1-3, et de préférence, l'un des R^{b} lié à l'atome N positionné à chaque extrémité dans la formule (A3) est R^{Si} et l'autre est R^{c} ou R^{Ac},
R^{d} est une liaison simple ou un groupe organique divalent, et de préference chacun indépendamment est une liaison simple ou - (CH₂) _{z17}-NR¹⁰- (CH₂) _{z18}-, dans laquelle R¹⁰ est H ou alkyle en C₁₋₆, et z17 et z18 sont chacun indépendamment un nombre entier de 0-6 ; et
R^{F2}, R^{a}, R^{c}, R^{Ac}, m3 et x sont tels que précédemment définis dans la revendication 3.

9. Composition selon l'une quelconque des revendications 3 à 8, dans laquelle chaque R^{a} est indépendamment un groupe de la formule :
-R⁹- (R^{a'}-R⁹) ₖ-
dans laquelle
chaque R⁹ est indépendamment alkylène en C₁₋₆,
chaque R^{a'} est indépendamment un groupe trivalent ; de préférence N, -C(-O-)-, un groupe trivalent contenant éventuellement une liaison amine, une liaison amide, une liaison uréthane, une liaison urée, une liaison éther, ou une liaison ester entre des atomes carbone-carbone, et
k est un nombre entier de 1-4, de préférence 1 ou 2.

10. Composition selon l'une quelconque des revendications 3 à 9, dans laquelle le composant (A) comprend (i) un composé de formule (A1) ou (A2) ou (ii) un composé de formule (A3).

11. Composition selon l'une quelconque des revendications 1 à 10, dans laquelle le composant (B) est
(1) un composé de formule (B1) ou (B2) :
R^{F3}_{α}-X^{z}-R^{Si}_{β} (B1)
R^{Si}_{Y}-X^{z}-R^{F4}-X^{z}-R^{Si}_{Y} (B2)
dans laquelle, chacun indépendamment à chaque occurrence,
R^{F3} est Rf³-R^{FB}-O_{q3}-,
R^{F4} est -Rf⁴ₚ₃-R^{FB}-O_{q3}-,
Rf³ est alkyle en C₁₋₁₆ éventuellement substitué par F,
Rf⁴ est alkylène en C₁₋₆ éventuellement substitué par F,
R^{FB} est un groupe fluoropolyéther divalent,
et de préférence un groupe de la formule :
- (OC₆F₁₂)ₐ- (OC₅F₁₀)_{b}- (OC₄F₈)_{c}- (OC₃R^{Fa}₆)_{d}- (OC₂F₄)ₑ- (OCF₂)_{f}-
dans laquelle chaque R^{Fa} est indépendamment H, F ou CI, et a-f sont chacun indépendamment un nombre entier de 0-200, (a+b+c+d+e+f) est ≥ 1, et l'ordre des motifs de répétition entre parenthèses suivis de a-f n'est pas limité, sous réserve que lorsque tous les groupes R^{Fa} sont H ou F, au moins un parmi a-c, e et f soit ≥ 1,
p3 est 0 ou 1,
q3 est 0 ou 1,
R^{Si} est un groupe monovalent contenant Si auquel est lié H, OH, un groupe hydrolysable, ou un groupe organique monovalent ; et au moins un R^{Si} contient Si auquel est lié OH ou un groupe hydrolysable,
X^{z} est une liaison simple ou un groupe organique divalent à décavalent,
α est un nombre entier de 1-9,
β est un nombre entier de 1-9, et
Y est un nombre entier de 1-9 ; ou
(2) un composé de formule (B3) :
R³⁹ⱼ-R³⁸-NR³⁷CO- (R^{F4}-CONR³⁷-R³⁶-NR³⁷CO)ᵣ-R^{F4}-CONR³⁷-R³⁸-R³⁹ⱼ (B3)
dans laquelle, chacun indépendamment à chaque occurrence,
R^{F4} est tel que précédemment défini,
R³⁶ est un groupe organique divalent,
R³⁷ est H ou un groupe organique en C₁₋₈ monovalent,
R³⁸ est un groupe organique (j+1)-valent,
R³⁹ est -SiR²⁵ₙ₁R²⁶₃₋ₙ₁,
R²⁵ est OH ou un groupe hydrolysable,
R²⁶ est H ou un groupe organique monovalent,
n1 est un nombre entier de 0-3 pour chaque motif (SiR²⁵ₙ₁R²⁶₃₋
ₙ₁),
j est un nombre entier de 1-9, et
r est un nombre entier ≥ 1.

12. Composition selon la revendication 11, dans laquelle le composant (B) est un composé de formule (B1) ou (B2) dans laquelle R^{Si} est un groupe de l'une quelconque des formules (S1) - (S5) : 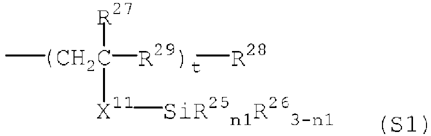
-SiR²⁵ₙ₁R²⁶₃₋ₙ₁ (S2)
dans laquelle, chacun indépendamment à chaque occurrence,
R²⁵ est OH ou un groupe hydrolysable,
R²⁶ est H ou un groupe organique monovalent,
n1 est un nombre entier de 0-3 pour chaque motif (SiR²⁵ₙ₁R²⁶₃-ₙ₁),
X¹¹ est une liaison simple ou un groupe organique divalent,
R²⁷ est H ou un groupe organique monovalent,
t est un nombre entier ≥ 2,
R²⁸ est H, halogène, ou -X¹¹-SiR²⁵ₙ₁R²⁶₃-ₙ₁, et
R²⁹ est une liaison simple, -O-, alkylène en C ₁₋₆ ou alkylèneoxy en C₁₋₆ ;
-SiR^{a1}ₖ₁R^{b1}₁₁R^{c1}ₘ₁ (S3)
dans laquelle, chacun indépendamment à chaque occurrence,
R^{a1} est Z¹ **Z**¹-SiR²¹ₚ₁R²²_{q1}R²³ᵣ₁**,** est -O- ou un groupe organique divalent,
chaque R²¹ est indépendamment -Z¹'-SiR^{21'}_{p1'}R^{22'}_{q1}H^{23'}ᵣ₁',
Z¹' est -O- ou un groupe organique divalent,
R²¹' est -Z¹"-SiR²²"_{q"}R²³"_{r1"}
Z¹" est -O- ou un groupe organique divalent,
R²²" est OH ou un groupe hydrolysable,
R²³" est H ou un groupe organique monovalent,
q1" est un nombre entier de 0-3,
r1" est un nombre entier de 0-3,
R²²' est OH ou un groupe hydrolysable,
R²³_{'} est H ou un groupe organique monovalent,
p1' est un nombre entier de 0-3,
q1' est un nombre entier de 0-3,
r1' est un nombre entier de 0-3,
R²² est OH ou un groupe hydrolysable,
R²³ est H ou un groupe organique monovalent,
p1 est un nombre entier de 0-3,
q1 est un nombre entier de 0-3,
r1 est un nombre entier de 0-3,
R^{b1} est OH ou un groupe hydrolysable,
R^{c1} est H ou un groupe organique monovalent,
k1 est un nombre entier de 0-3,
l1 est un nombre entier de 0-3, et
m1 est un nombre entier de 0-3 ;
- CR^{d1}ₖ₂R^{e1}₁₂R^{f1}ₘ₂ (S4)
dans laquelle, chacun indépendamment à chaque occurrence,
R^{d1} est - Z²-CR³¹ₚ₂R³²_{q2}R³³ᵣ₂,
Z² est une liaison simple, -O-, ou un groupe organique divalent,
R³¹ est -Z²'-CR³²'_{q2'}R³³'_{r2'},
Z²' est une liaison simple, -O-, ou un groupe organique divalent,
R³²' est -Z³-SiR³⁴ₙ₂R³⁵₃₋ₙ₂,
Z³ est une liaison simple, -O-, ou un groupe organique divalent,
R³⁴ est OH ou un groupe hydrolysable,
R³⁵ est H ou un groupe organique monovalent,
n2 est un nombre entier de 0-3,
R³³_{'} est H, OH, ou un groupe organique monovalent,
q2' est un nombre entier de 0-3,
r2' est un nombre entier de 0-3,
R³² est -Z³-SiR³⁴ₙ₂R³⁵₃₋ₙ₂,
R³³ est H, OH, ou un groupe organique monovalent,
p2 est un nombre entier de 0-3,
q2 est un nombre entier de 0-3,
r2 est nombre entier de 0-3,
R^{e1} est -Z³-SiR³⁴ₙ₂R³⁵₃₋ₙ₂,
R^{f1} est H, OH, ou un groupe organique monovalent,
k2 est un nombre entier de 0-3,
12 est un nombre entier de 0-3,
m2 est un nombre entier de 0-3,
-NR^{g1}R^{h1} (S5)
dans laquelle, chacun indépendamment à chaque occurrence,
R^{g1}, R^{h1} sont chacun indépdenammant -Z⁴-SiR²⁵ₙ₁R²⁶₃₋ₙ₁, -Z⁴-SiR^{a1}ₖ₁R^{b1}₁₁R^{c1}ₘ₁, ou -Z⁴-CR^{d1}ₖ₂R^{e1}₁₂R^{f1}ₘ₂, et
Z⁴ est une liaison simple, -O-, ou un groupe organique divalent,
sous réserve que dans les formules (S1) - (S5), au moins un atome Si auquel est lié OH ou un groupe hydrolysable soit présent.

13. Composition selon l'une quelconque des revendications 1 à 12, dans laquelle l'agent de réticulation (C) est un composé de formule (C1) :
(R^{g1}-0)_{δ}-Si-R^{g2}_{4-δ} (C1)
dans laquelle, chacun indépendamment,
R^{g1} est H ou un groupe organique monovalent,
R^{g2} est un groupe organique monovalent, et
δ est un nombre entier de 2-4 ;
et de préférence est le tétraéthoxysilane, le tétraméthoxysilane, le méthyltriéthoxysilane, le méthyltriméthoxysilane, le diméthyldiméthoxysilane, le diméthyltriméthoxysilane, l'aminopropyltriéthoxysilane, l'aminopropyltriméthoxysilane, le tridécafluoro-n-octyltriéthoxysilane, ou le tridécafluoro-n-octyltriméthoxysilane.

14. Composition selon l'une quelconque des revendications 1 à 13, dans laquelle le catalyseur (D) est un acide, une base, un métal de transition, ou un complexe métallique sélectionné parmi des catalyseurs à base d'étain, des catalyseurs à base de titane, des catalyseurs à base de zircone, des catalyseurs à base de bismuth, et des catalyseurs à base d'amine organique ;
et de préférence est l'acide acétique, l'acide trifluoroacétique, l'ammoniac, la triéthylamine, la diéthylamine, Ti, Ni, Sn, le dilaurate de di-n-butylétain(IV), le bis(éthylacétoacétate) diisopropoxyde de titane, le tétra-n-butoxyde de titane, le tétra-2-éthylhexoxyde de titane, le tétraacétylacétonate de titane, le tétraacétylacétonate de zirconium, le tétra-n-butoxyde de zirconium, le bis(éthylacétoacétate) dibutoxyde de zirconium, ou le tris(2-éthylhexanoate) de bismuth.

15. Composition selon l'une quelconque des revendications 1 à 14, dans laquelle l'initiateur de polymérisation radicalaire (E) est une dicétone, une acyloïne, un éther d'acyloïne, une thioxanthone, une benzophénone, une acétophénone, une quinone, un acide aminobenzoïque, un composé halogène, un oxyde d'acylphosphine, ou un peroxyde ;
et de préférence est la benzoïne, l'éther méthylique de benzoïne, l'éther éthylique de benzoïne, l'éther isopropylique de benzoïne, la thioxanthone, la 2,4-diéthylthioxanthone, l'acide thioxanthone-4-sulfonique, la benzophénone, la 4,4'-bis(diméthylamino)benzophénone, la 4,4'- bis(diéthylamino)benzophénone, l'acétophénone, la 2-(4-toluènesulfonyloxy)-2-phénylacétophénone, la p-diméthylaminoacétophénone, la 2,2'-diméthoxy-2- phénylacétophénone, la p-méthoxyacétophénone, la 2-méthyl[4-(méthylthio)phényl]-2-morpholino-1-propanone, la 2-benzyl-2-diméthylamino-1-(4-morpholinophényl)-butan-1-one, l'anthraquinone, la 1,4-naphtoquinone, le 2- diméthylaminobenzoate d'éthyle, le 4-diméthylaminobenzoate d'éthyle, le 4-diméthylaminobenzoate de (n-butoxy)éthyle, le 4-diméthylaminobenzoate d'isoamyle, le 4- diméthylaminobenzoate de 2-éthylhexyle, le chlorure de phénacyle, la trihalométhylphénylsulfone, l'oxyde d'acylphosphine, ou le peroxyde de di-t-butyle, le benzoylformiate de méthyle, la 1-hydroxy- cyclohexyl-phényl-cétone, la 1-[4-(2-hydroxyéthoxy)-phényl]-2-hydroxy-2-méthyl-1-propan-1-one, la 2-hydroxy-1-{4-[4-(2-hydroxy-2-méthyl-propionyl)-benzyl]phényl}-2-méthyl-propan-1-one, la 2-méthyl-1-(4-méthylthiophényl)-2-morpholinopropan-1-one, la 2-benzyl-2-diméthylamino-1-(4-morpholinophényl)-1-butanone, la 2-(diméthylamino)-2-[(4-méthylphényl)méthyl]-1-[4-(4-morpholinyl)phényl]-1-butanone, l'oxyde de bis(2,4,6-triméthylbenzoyl)-phénylphosphine, le bis(η5-2,4-cyclopentadién-1-yl)-bis(2, 6-difluoro-3-(1H-pyrrol-1-yl)-phényl)titane, la 1,2-octanedione, la 1-[4-(phénylthio)-, 2-(O-benzoyloxime)], éthanone, la 1-[9-éthyl-6-(2-méthylbenzoyl)-9H-carbazol-3-yl]-, 1-(O-acétyloxime), la 2-hydroxy-2-méthyl-1-phényl-propan-1-one, l'oxyde de 2,4,6-triméthylbenzoyl-diphényl-phosphine, l'hydroperoxyde de t-butyle, l'hydroperoxyde de cumène, l'hydroperoxyde de diisopropylbenzène, l'hydroperoxyde de paramenthane, ou l'hydroperoxyde de t-méthylbutyle.

16. Composition selon l'une quelconque des revendications 1 à 15, comprenant en outre un solvant.

17. Produit durci obtenu à partir de la composition selon l'une quelconque des revendications 1 à 16.

18. Article comprenant un substrat et, sur une surface du substrat, une couche formée à partir de la composition selon l'une quelconque des revendications 1 à 16.
